# EUROPEAN PATENT APPLICATION

(11) **EP 4 561 230 A1**
(43) Date of publication of application: **28.05.2025**
(21) Application number: 23851435.0
(22) Date of filing: 29.06.2023
(51) Int. Cl.: H04W 72/04

(54) **COMMUNICATION METHOD AND APPARATUS**

(30) Priority: 12.08.2022 CN 202210968993; 24.03.2023 CN 202310305158
(71) Applicant: Huawei Technologies Co., Ltd., Shenzhen, Guangdong 518129 (CN)
(72) Inventor: LIU, Mengting, Shenzhen, Guangdong 518129 (CN); GAO, Xin, Shenzhen, Guangdong 518129 (CN); HUANG, Su, Shenzhen, Guangdong 518129 (CN); ZHANG, Li, Shenzhen, Guangdong 518129 (CN); XIA, Jinhuan, Shenzhen, Guangdong 518129 (CN)
(74) Representative: Isarpatent
(86) International application number: PCT/CN2023/103574
(87) International publication number: WO 2024/032208

(57) **Abstract**

This application provides a communication method and apparatus. The method includes: A terminal device receives first configuration information, where the first configuration information indicates a first frequency domain resource, and the first frequency domain resource includes M second frequency domain resources; and the terminal device sends or receives N signals on the M second frequency domain resources, where the N signals are located in N time units, M is an integer greater than or equal to 2, and N is a positive integer. According to the communication method and apparatus provided in this application, when the communication method and apparatus are used in a positioning scenario, a positioning latency can be reduced, and positioning accuracy can be improved.

## Description

This application claims priorities to Chinese Patent Application No. 202210968993.6, filed with the China National Intellectual Property Administration on August 12, 2022 and entitled "COMMUNICATION METHOD AND APPARATUS", and to Chinese Patent Application No. 202310305158.9, filed with the China National Intellectual Property Administration on March 24, 2023 and entitled "COMMUNICATION METHOD AND APPARATUS", both of which are incorporated herein by reference in their entireties.

### TECHNICAL FIELD

This application relates to the communication field, and more specifically, to a communication method and apparatus.

### BACKGROUND

With development of 5G internet of things services (such as wearable devices, industrial sensors, and video surveillance), researches on reduced capability (reduced capability, RedCap) devices gradually attract more attention. The 5G RedCap devices have advantages such as low terminal complexity. In terms of a bandwidth, power consumption, an antenna design, and costs, the 5G RedCap devices can effectively balance a large bandwidth, a high rate, a wide connection, and a low latency in 5G, to meet differentiated industry networking requirements and support a larger internet of things market.

However, because functions are simplified, a bandwidth capability of the RedCap devices decreases from 100 MHz of a common 5G terminal device to 20 MHz. This change limits positioning accuracy of the RedCap devices. Because the positioning accuracy largely depends on a bandwidth of a positioning signal, a frequency hopping-based positioning method can effectively improve the positioning accuracy of the RedCap devices. However, in a current frequency hopping-based positioning method, a positioning result needs to be obtained based on measurement results of a plurality of frequency hopping signals. This also increases a positioning latency. Therefore, how to reduce the positioning latency and improve system performance is an important problem to be urgently resolved.

### SUMMARY

This application provides a communication method and apparatus. The communication method and apparatus provided in this application can reduce a positioning latency and improve positioning accuracy.

According to a first aspect, an embodiment of this application provides a communication method. The method may be performed by a terminal device, or may be performed by a chip configured in a terminal device. This is not limited in this application.

Specifically, the method includes: The terminal device receives first configuration information, where the first configuration information indicates a first frequency domain resource, and the first frequency domain resource includes M second frequency domain resources; and the terminal device sends or receives N signals on the M second frequency domain resources, where the N signals are located in N time units, M is an integer greater than or equal to 2, and N is a positive integer.

It should be understood that, in this embodiment of this application, N and M may be the same or may be different. When N is equal to M, the M second frequency domain resources are used to send M signals, and the M signals may one-to-one correspond to the M second frequency domain resources. In other words, each of the M second frequency domain resources is used to send one signal. When N is not equal to M, no signal may be sent on some of the M second frequency domain resources, or a plurality of signals may be sent on some of the M second frequency domain resources.

In addition, in this embodiment of this application, a "frequency domain resource" is a segment of continuous frequency domain resources or a frequency point in frequency domain. There may be a plurality of resource granularities. For example, a frequency domain resource may be one of a subcarrier, a resource block (resource block, RB), a bandwidth part (bandwidth part, BWP), a component carrier (component carrier, CC), a band (band), a frequency band, a frequency layer (frequency layer), a frequency point (frequency point), or a frequency range (frequency range, FR).

Based on the foregoing solution, the communication method provided in this embodiment of this application can implement fast frequency hopping sending or frequency hopping receiving, effectively reduce power consumption and complexity of the terminal device, and improve positioning accuracy while reducing a positioning latency.

With reference to the first aspect, in some implementations of the first aspect, the N signals are N first-type reference signals. The method further includes: The terminal device receives second configuration information, where the second configuration information indicates a third frequency domain resource, and the third frequency domain resource is used to send or receive at least one of a data signal, control information, and a second-type reference signal. A bandwidth of the third frequency domain resource is less than or equal to a bandwidth of the first frequency domain resource.

It should be noted that, in this embodiment of this application, the first-type reference signal may be one of a positioning reference signal (positioning reference signal, PRS), a sounding reference signal (sounding reference signal, SRS), a positioning-sounding reference signal (positioning-sounding reference signal, pos-SRS), a tracking reference signal (tracking reference signal, TRS), a channel state information reference signal (channel state information-reference signal, CSI-RS), a demodulation reference signal (demodulation reference signal, DM-RS), a phase noise tracking reference signal (phase noise tracking reference signal, PT-RS), a sidelink reference signal, and a random access preamble (preamble).

The second-type reference signal may be one of a PRS, an SRS, a pos-SRS, a TRS, a CSI-RS, a DM-RS, a PT-RS, a sidelink reference signal, and a random access preamble (preamble).

In a possible implementation, the first-type reference signal is a reference signal used for positioning, for example, one of a PRS, an SRS, a pos-SRS, a sidelink reference signal, and a random access preamble (preamble), and the second-type reference signal is another reference signal (not a conventional positioning reference signal), for example, one of a TRS, a CSI-RS, a DM-RS, and a PT-RS.

It should be noted that the first configuration information and the second configuration information may be independent of each other. That is, in a possible implementation, the first frequency domain resource and the third frequency domain resource may be independently configured, to improve flexibility of network resource configuration.

It should be noted that the terminal device may receive the first configuration information and/or the second configuration information from a network device, or may receive the first configuration information and/or the second configuration information from a network unit. The network device may be a base station, a transmission reception point (transmission reception point, TRP), or the like. The network unit may be a core network device such as a location management function (location management function, LMF) network element.

Based on the foregoing solution, the bandwidth of the third frequency domain resource is less than or equal to the bandwidth of the first frequency domain resource. Therefore, when the bandwidth of the first frequency domain resource is greater than the bandwidth of the third frequency domain resource, the first frequency domain resource with a larger bandwidth is defined to be used to implement fast frequency hopping sending and receiving of a signal, thereby avoiding frequent resource switching, improving communication efficiency, and reducing communication complexity.

With reference to the first aspect, in some implementations of the first aspect, the N signals include an I^{th} signal and an (I+1)^{th} signal, and the I^{th} signal and the (I+1)^{th} signal are located in adjacent time units; a first time interval is a time interval between the I^{th} signal and the (I+1)^{th} signal; a second time interval is a sum of time for switching from the first frequency domain resource to the third frequency domain resource and time for switching from the third frequency domain resource to the first frequency domain resource; and the first time interval is less than or equal to the second time interval.

It may also be understood that the second time interval is a sum of radio frequency (radio frequency, RF) switching time (switching time) required for switching from the first frequency domain resource to the third frequency domain resource and radio frequency switching time required for switching from the third frequency domain resource back to the first frequency domain resource. The first time interval is less than or equal to the second time interval.

Optionally, a priority of sending or receiving the N signals, or other signals, data, or control information on the third frequency domain resource is not higher than a priority of sending or receiving the N signals on the first frequency domain resource.

With reference to the first aspect, in some implementations of the first aspect, the N signals include an I^{th} signal and an (I+1)^{th} signal, and the I^{th} signal and the (I+1)^{th} signal are located in adjacent time units; a first time interval is a time interval between the I^{th} signal and the (I+1)^{th} signal; and a second time interval is a preset or predefined time interval. The preset or predefined time interval may be obtained by the terminal device from a network device or a network unit, may be preset, or may be agreed on by the terminal device and a network. This is not limited in this application. Alternatively, the second time interval is time for switching from the first frequency domain resource to the third frequency domain resource, the second time interval is a sum of time for switching from the first frequency domain resource to the third frequency domain resource and a third time interval, the second time interval is a sum of a third time interval and time for switching from the third frequency domain resource to the first frequency domain resource, or the second time interval is a sum of time for switching from the first frequency domain resource to the third frequency domain resource, time for switching from the third frequency domain resource to the first frequency domain resource, and a third time interval. The third time interval is a preset or predefined time interval or threshold. The first time interval is less than or equal to the second time interval.

With reference to the first aspect, in some implementations of the first aspect, the terminal device sends or receives an I^{th} signal on an L^{th} second frequency domain resource, and sends or receives an (I+1)^{th} signal on an (L+1)^{th} second frequency domain resource, where the I^{th} signal and the (I+1)^{th} signal belong to the N signals, and the I^{th} signal and the (I+1)^{th} signal are located in adjacent time units; and a first time interval is a time interval between the I^{th} signal and the (I+1)^{th} signal.

A second time interval is a sum of time for switching from the L^{th} second frequency domain resource to the third frequency domain resource and time for switching from the third frequency domain resource to the (L+1)^{th} second frequency domain resource; and the first time interval is less than or equal to the second time interval.

With reference to the first aspect, in some implementations of the first aspect, the terminal device sends or receives an I^{th} signal on an L^{th} second frequency domain resource, and sends or receives an (I+1)^{th} signal on an (L+1)^{th} second frequency domain resource, where the I^{th} signal and the (I+1)^{th} signal belong to the N signals, and the I^{th} signal and the (I+1)^{th} signal are located in adjacent time units; a first time interval is a time interval between the I^{th} signal and the (I+1)^{th} signal; and a second time interval is a preset or predefined time interval. The preset or predefined time interval may be obtained by the terminal device from a network device or a network unit, may be preset, or may be agreed on by the terminal device and a network. This is not limited in this application. Alternatively, the second time interval is time for switching from the L^{th} second frequency domain resource to the third frequency domain resource, the second time interval is a sum of time for switching from the (L+1)^{th} frequency domain resource to the third frequency domain resource and a third time interval, the second time interval is a sum of a third time interval and time for switching from the third frequency domain resource to the L^{th} second frequency domain resource, or the second time interval is a sum of time for switching from the (L+1)^{th} second frequency domain resource to the third frequency domain resource, time for switching from the third frequency domain resource to the L^{th} second frequency domain resource, and a third time interval. The third time interval is a preset or predefined time interval or threshold. The first time interval is less than or equal to the second time interval.

It should be noted that the L^{th} second frequency domain resource and the (L+1)^{th} second frequency domain resource belong to the M second frequency domain resources. The L^{th} second frequency domain resource and the (L+1)^{th} second frequency domain resource may be adjacent or not adjacent in frequency domain, may completely overlap in frequency domain, or may partially overlap in frequency domain. This is not limited in this application. Alternatively, the L^{th} second frequency domain resource and the (L+1)^{th} second frequency domain resource may be a same second frequency domain resource.

Based on this solution, frequent switching between the first frequency domain resource/the second frequency domain resource and the third frequency domain resource can be avoided, and the terminal device can implement fast frequency hopping sending or receiving, to reduce a positioning latency, reduce terminal complexity and power consumption, and improve positioning performance.

With reference to the first aspect, in some implementations of the first aspect, that the terminal device sends or receives the N signals on the M second frequency domain resources includes: When a first condition is met, the terminal device sends or receives the N signals on the M second frequency domain resources, where the first condition is that a first time interval is less than or equal to a second time interval; a time interval between an I^{th} signal and an (I+1)^{th} signal is the first time interval; the I^{th} signal and the (I+1)^{th} signal belong to the N signals, and the I^{th} signal and the (I+1)^{th} signal are located in adjacent time units; and a sum of time for switching from the first frequency domain resource to the third frequency domain resource and time for switching from the third frequency domain resource to the first frequency domain resource is the second time interval.

Optionally, the first condition further includes: A priority of sending or receiving the N signals, or other signals, data, or control information on the third frequency domain resource is not higher than a priority of sending or receiving the N signals on the first frequency domain resource.

With reference to the first aspect, in some implementations of the first aspect, that the terminal device sends or receives the N signals on the M second frequency domain resources includes: When a first condition is met, the terminal device sends or receives the N signals on the M second frequency domain resources, where the first condition is that a first time interval is less than or equal to a second time interval; the first time interval is a time interval between an I^{th} signal and an (I+1)^{th} signal, where the terminal device sends or receives the I^{th} signal on an L^{th} second frequency domain resource, and sends or receives the (I+1)^{th} signal on an (L+1)^{th} second frequency domain resource, the I^{th} signal and the (I+1)^{th} signal belong to the N signals, and the I^{th} signal and the (I+1)^{th} signal are located in adjacent time units; and the second time interval is a sum of time for which the terminal device switches from the L^{th} second frequency domain resource to the third frequency domain resource and time for which the terminal device switches from the third frequency domain resource to the (L+1)^{th} second frequency domain resource.

With reference to the first aspect, in some implementations of the first aspect, the method further includes: When the first condition is not met, the terminal device sends or receives at least one of the data signal, the control information, and the second-type reference signal on the third frequency domain resource.

Optionally, when the first condition is not met, the terminal device sends or receives at least one of the data signal, the control information, the first-type reference signal, and the second-type reference signal on the third frequency domain resource.

Based on the foregoing solution, the first condition is defined, so that frequent switching between the first frequency domain resource/the second frequency domain resource and the third frequency domain resource can be avoided, and the terminal device can implement fast frequency hopping sending or receiving, to reduce a positioning latency, reduce terminal complexity and power consumption, and improve positioning performance.

With reference to the first aspect, in some implementations of the first aspect, a new capability item (or function) may be defined, and the capability item indicates:
if the first time interval is less than or equal to the second time interval, frequency domain resources are not switched. In this case, the terminal device completes sending or receiving of the N signals on the first frequency domain resource in an I^{th} time unit, and sends or receives the N signals on the first frequency domain resource in an (I+1)^{th} time unit. Alternatively, it may be understood as that the terminal device completes sending or receiving of the I^{th} signal on the L^{th} second frequency domain resource, and sends or receives the (I+1)^{th} signal on the (L+1)^{th} second frequency domain resource.

If the first time interval is greater than the second time interval, frequency domain resources are switched. This may also be understood as that the terminal device completes sending or receiving of the N signals on the first frequency domain resource in an I^{th} time unit, and sends or receives the N signals, or other signals, data, or control information on the third frequency domain resource in an (I+1)^{th} time unit.

Optionally, the capability item indicates:
if the first time interval is less than or equal to the second time interval, and no signal, data, or control information whose priority is higher than that of the N signals is scheduled on the third frequency domain resource in a time period of the first time interval, frequency domain resources are not switched. This may also be understood as that the terminal device completes sending or receiving of the N signals on the first frequency domain resource in an I^{th} time unit, and sends or receives the N signals on the first frequency domain resource in an (I+1)^{th} time unit. Alternatively, it may be understood as that the terminal device completes sending or receiving of the I^{th} signal on the L^{th} second frequency domain resource, and sends or receives the (I+1)^{th} signal on the (L+1)^{th} second frequency domain resource.

If the first time interval is greater than the second time interval, or a signal, data, or control information whose priority is higher than that of the N signals is scheduled on the third frequency domain resource (a network) in the time period of the first time interval, frequency domain resources are switched. This may also be understood as that the terminal device completes sending or receiving of the N signals on the first frequency domain resource in an I^{th} time unit, and sends or receives the N signals or other signals, data, or control information with a higher priority on the third frequency domain resource in an (I+1)^{th} time unit.

With reference to the first aspect, in some implementations of the first aspect, the terminal device sends indication information, where the indication information indicates that the terminal device supports the first condition or the capability item (function).

Based on the foregoing solution, a network may perform proper resource configuration based on the first condition or the capability item that is reported and supported by the terminal device, to implement fast frequency hopping sending or receiving. For example, a small first time interval is configured, so that the terminal device may complete sending or receiving of the N signals on the first frequency domain resource, and does not perform frequency domain resource switching during the process, to reduce a positioning latency.

With reference to the first aspect, in some implementations of the first aspect, the terminal device sends first indication information, where the first indication information indicates that when the terminal device meets the first condition, the terminal device sends or receives the N signals on the M second frequency domain resources.

With reference to the first aspect, in some implementations of the first aspect, the terminal device sends second indication information, where the second indication information indicates that when the terminal device does not meet the first condition, the terminal device sends or receives at least one of the data signal, the control information, and the second-type reference signal on the third frequency domain resource.

With reference to the first aspect, in some implementations of the first aspect, the terminal device sends third indication information, where the third indication information indicates that when the terminal device meets the first condition, the terminal device sends or receives the N signals on the M second frequency domain resources, and when the indication information indicates that the terminal device does not meet the first condition, the terminal device sends or receives at least one of the data signal, the control information, and the second-type reference signal on the third frequency domain resource.

Optionally, indication information (for example, the first indication information, the second indication information, or the third indication information) sent by the terminal device may be capability information of the terminal device, one of capability information of the terminal device, or other information.

Based on this solution, a network may perform proper resource configuration based on the indication information reported by the terminal device, to perform fast frequency hopping sending or receiving. For example, a small first time interval is configured to reduce a positioning latency. Alternatively, a large first time interval is configured, so that the terminal device transmits a signal on the third frequency domain resource, to avoid a waste of resources caused because the network device configures an inappropriate first resource.

With reference to the first aspect, in some implementations of the first aspect, the method further includes: When the terminal device determines that the first condition is met, the terminal device sends or receives the N signals on the M second frequency domain resources.

With reference to the first aspect, in some implementations of the first aspect, the method further includes: When the terminal device determines that the first condition is not met, the terminal device sends or receives at least one of the data signal, the control information, and the second-type reference signal on the third frequency domain resource.

Based on the foregoing solution, when the terminal device determines that the first condition is not met, impact on sending and receiving of the data signal, the control information, or the second-type reference signal can be minimized, thereby improving network resource utilization.

With reference to the first aspect, in some implementations of the first aspect, the method further includes: The terminal device receives third configuration information; and the third configuration information includes frequency domain configuration information and time domain configuration information of at least one of the N signals, and/or frequency hopping configuration information.

In an implementation, the third configuration information includes configuration information of the N signals and the frequency hopping configuration information. The configuration information of the N signals includes time domain configuration information of the N signals and/or frequency domain configuration information of the N signals. The frequency hopping configuration information includes one or more of information such as a frequency hopping periodicity, supporting intra-slot frequency hopping, a frequency domain start location of a frequency hop, frequency hopping duration, and a quantity of frequency hops. Optionally, when the third configuration information includes the configuration information of the N signals and the frequency hopping configuration information, the frequency hopping configuration information includes one or more of the frequency hopping periodicity, supporting intra-slot frequency hopping, the frequency domain start location of the frequency hop, the frequency hopping duration, the quantity of frequency hops, and the like.

In another implementation, the third configuration information may include configuration information of at least one signal and the frequency hopping configuration information. The at least one signal is less than N signals and greater than or equal to one signal. When there is one signal, the third configuration information includes configuration information of the single signal. When there is more than one signal, the third configuration information includes configuration information of the more than one signal. The configuration information of the at least one signal includes frequency domain configuration information of the at least one signal and/or time domain configuration information of the at least one signal. The frequency hopping configuration information includes a frequency hopping pattern, a frequency hopping periodicity, supporting intra-slot frequency hopping, a frequency domain start location of a frequency hop, frequency domain interval information of the frequency hop, time domain interval information of the frequency hop, and the like.

In another implementation, the third configuration information includes only configuration information of the N signals, and the configuration information of the N signals includes time domain configuration information of the N signals and/or frequency domain configuration information of the N signals. Optionally, the N signals are periodically sent or received.

In another implementation, the third configuration information includes only the frequency hopping configuration information. Optionally, the terminal device may obtain the configuration information of the at least one of the N signals based on other configuration information or other information.

In addition, the third configuration information may further include other configuration information, for example, one or more of the following:
scrambling code information, density information, reserved time information, retuning time information, and non-simultaneous sending information.

The scrambling code information includes at least one of the following: scrambling code ranges of m signals and a scrambling code value set.

The density information is a quantity of times of sending the m signals within a specific time range.

The reserved time information is a time length that needs to be reserved before the m signals are sent, a time length that needs to be reserved after the m signals are sent, or a time length that needs to be reserved between two adjacent time units.

The retuning time information is time occupied by frequency retuning (radio frequency retuning, RF retuning).

The non-simultaneous sending information means that when sending the m signals, the terminal device does not support sending of information other than the m signals.

It should be noted that the frequency domain configuration information of the N signals and the time domain configuration information of the N signals include N pieces of frequency domain configuration information and N pieces of time domain configuration information. Each of the N pieces of frequency domain configuration information includes frequency domain information of a corresponding signal, for example, frequency domain location information. Each of the N pieces of time domain configuration information includes time domain information of a corresponding signal, for example, time domain location information. In addition, each of the N pieces of frequency domain configuration information and each of the N pieces of time domain configuration information may further include other information, and the information may be the same or different.

With reference to the first aspect, in some implementations of the first aspect, the frequency hopping configuration information includes at least one of the following: a frequency hopping periodicity, a frequency hopping pattern, supporting intra-slot frequency hopping, a frequency domain start location of a frequency hop, a time domain start location of the frequency hop, frequency domain interval information of the frequency hop, time domain interval information of the frequency hop, a quantity of periodic frequency hops, frequency hopping duration, and a quantity of frequency hops.

The frequency hopping periodicity is duration of a frequency hopping pattern (pattern). The frequency hopping pattern indicates a sequence and locations of receiving or sending signals in frequency domain and/or time domain in a single frequency hopping periodicity. Optionally, the frequency hopping pattern may be periodically repeated. Supporting intra-slot frequency hopping indicates that frequency hopping is supported in a single slot. The frequency domain start location of the frequency hop indicates a frequency domain start location of a signal corresponding to the frequency hopping configuration information, that is, a start frequency of a bandwidth occupied by the signal corresponding to the frequency hopping configuration information. The time domain start location of the frequency hop indicates time information for starting frequency hopping sending of the signal corresponding to the frequency hopping configuration information. The frequency domain interval information of the frequency hop indicates an interval between two adjacent times of frequency hopping sending or receiving in frequency domain. The time domain interval information of the frequency hop indicates a time interval between the two adjacent times of frequency hopping sending or receiving. The quantity of periodic frequency hops indicates a quantity of frequency hops in one frequency hopping periodicity. The frequency hopping duration indicates duration of the frequency hop, for example, may be sending duration, receiving duration, or a quantity of frequency hopping periodicities. The quantity of frequency hops indicates a total quantity of frequency hops of the signal corresponding to the frequency hopping configuration information or a quantity of repetitions of the frequency hopping pattern.

With reference to the first aspect, in some implementations of the first aspect, the frequency hopping pattern indicates frequency domain information and/or time domain information in a single frequency hopping periodicity; the frequency domain information includes at least one of the following: a first frequency domain start location, bandwidth information or a quantity of resource blocks of the frequency hop, and first frequency domain interval information; and the time domain information includes at least one of the following: a first time domain start location, time domain information or a quantity of symbols of the frequency hop, a frequency hopping repetition factor, first time domain interval information, and information indicating that time domain discontinuous frequency hopping is supported.

The first frequency domain start location is a frequency domain start location in a single frequency hopping periodicity. Similarly, the bandwidth information or the quantity of resource blocks of the frequency hop and the first frequency domain interval information are respectively bandwidth information or a quantity of resource blocks of the frequency hop in the single frequency hopping periodicity and frequency domain interval information in the single frequency hopping periodicity. Correspondingly, the first time domain start location, the time domain information or the quantity of symbols of the frequency hop, the frequency hopping repetition factor, the first time domain interval information, and the information indicating that time domain discontinuous frequency hopping is supported are respectively a time domain start location, time domain information or a quantity of symbols of the frequency hop, a frequency hopping repetition factor, time domain interval information, and information indicating that time domain discontinuous frequency hopping is supported in the single frequency hopping periodicity.

In the solution of this application, the single frequency hopping periodicity may be one or more radio frames (frame), one or more subframes (sub-frame), one or more slots (slot), one or more symbols (symbol), or the like. This is not limited in this application.

With reference to the first aspect, in some implementations of the first aspect, at least two of the M second frequency domain resources overlap in frequency domain.

With reference to the first aspect, in some implementations of the first aspect, two second frequency domain resources that are in the M second frequency domain resources and that are located in adjacent time units overlap in frequency domain.

Based on the foregoing solution, signal estimation may be performed based on the overlapping part in frequency domain, to implement coherent reception at a receive end and improve positioning accuracy.

With reference to the first aspect, in some implementations of the first aspect, the method further includes: The terminal device sends request information, where the request information is used to request the first configuration information.

The request information may indicate the first configuration information recommended or expected by the terminal device, for example, the frequency domain configuration information, the time domain configuration information, or the frequency hopping configuration information.

With reference to the first aspect, in some implementations of the first aspect, the first-type signal is a positioning reference signal.

According to a second aspect, an embodiment of this application provides a communication method. The method may be performed by a terminal device, or may be performed by a chip configured in a terminal device. This is not limited in this application.

Specifically, the method includes: The terminal device receives first configuration information, where the first configuration information indicates M first frequency domain resources; and the terminal device sends or receives N signals on the M first frequency domain resources, where the N signals are located in N time units, M is an integer greater than or equal to 2, and N is a positive integer.

It should be understood that N and M may be the same or different. When N is equal to M, the M first frequency domain resources are used to send M signals, and the M signals may one-to-one correspond to the M first frequency domain resources. In other words, each of the M first frequency domain resources is used to send one signal. When N is not equal to M, no signal may be sent on some of the M first frequency domain resources, or a plurality of signals may be sent on some of the M first frequency domain resources.

In addition, in this embodiment of this application, a "frequency domain resource" is a segment of continuous frequency domain resources or a frequency point in frequency domain. There may be a plurality of resource granularities. For example, the frequency domain resource may be one of a subcarrier, an RB, a BWP, a CC, a band, a frequency band, a frequency layer, a frequency point, or a frequency range.

Based on the foregoing solution, in a possible implementation, the M first frequency domain resources may be indicated to the terminal device at a time through the first configuration information, to avoid an excessively large latency caused by a plurality of times of indication. This can improve network efficiency and reduce complexity.

With reference to the second aspect, in some implementations of the second aspect, the N signals are N first-type reference signals.

With reference to the second aspect, in some implementations of the second aspect, the terminal device sends or receives an I^{th} signal on an L^{th} first frequency domain resource, and sends or receives an (I+1)^{th} signal on an (L+1)^{th} first frequency domain resource, where the I^{th} signal and the (I+1)^{th} signal belong to the N signals, and the I^{th} signal and the (I+1)^{th} signal are located in adjacent time units; a first time interval is a time interval between the I^{th} signal and the (I+1)^{th} signal; a second time interval is time for switching from the L^{th} first frequency domain resource to the (L+1)^{th} first frequency domain resource; and the first time interval is less than or equal to the second time interval.

With reference to the second aspect, in some implementations of the second aspect, the N signals include an I^{th} signal and an (I+1)^{th} signal, and the I^{th} signal and the (I+1)^{th} signal are located in adjacent time units; a first time interval is a time interval between the I^{th} signal and the (I+1)^{th} signal; a second time interval is a sum of time for switching from an L^{th} first frequency domain resource to a second frequency domain resource and time for switching from the second frequency domain resource to an (L+1)^{th} first frequency domain resource, where the L^{th} first frequency domain resource is used to send or receive the I^{th} signal, the (L+1)^{th} first frequency domain resource is used to send or receive the (I+1)^{th} signal, and the second frequency domain resource is used to send or receive at least one of a data signal, control information, and a second-type reference signal; and the first time interval is less than or equal to the second time interval.

Optionally, the second time interval is a sum of radio frequency switching time required for switching from the L^{th} first frequency domain resource to the second frequency domain resource and radio frequency switching time required for switching from the second frequency domain resource back to the (L+1)^{th} first frequency domain resource.

Optionally, the second time interval is a preset or predefined time interval. The preset or predefined time interval may be obtained by the terminal device from a network device or a network unit, may be preset, or may be agreed on by the terminal device and a network. This is not limited in this application. Alternatively, the second time interval is a sum of time for switching from the L^{th} first frequency domain resource to the second frequency domain resource and a third time interval, the second time interval is a sum of a third time interval and time for switching from the second frequency domain resource to the (L+1)^{th} first frequency domain resource, or the second time interval is a sum of time for switching from the L^{th} first frequency domain resource to the second frequency domain resource, time for switching from the second frequency domain resource to the (L+1)^{th} first frequency domain resource, and a third time interval. The third time interval is a preset or predefined time interval or threshold.

Optionally, a priority of sending or receiving the N signals, or other signals, data, or control information on the second frequency domain resource is not higher than a priority of sending or receiving the N signals on the first frequency domain resource.

It should be noted that the L^{th} first frequency domain resource and the (L+1)^{th} first frequency domain resource belong to the M first frequency domain resources. The L^{th} first frequency domain resource and the (L+1)^{th} first frequency domain resource may be adjacent or not adjacent in frequency domain, may completely overlap in frequency domain, or may partially overlap in frequency domain. This is not limited in this application.

With reference to the second aspect, in some implementations of the second aspect, the method further includes: The terminal device receives second configuration information, where the second configuration information indicates the second frequency domain resource.

It should be noted that the first-type reference signal may be one of a PRS, an SRS, a pos-SRS, a TRS, a CSI-RS, a DM-RS, a PT-RS, a sidelink reference signal, and a random access preamble.

The second-type reference signal may be one of a PRS, an SRS, a pos-SRS, a TRS, a CSI-RS, a DM-RS, a PT-RS, a sidelink reference signal, and a random access preamble.

In a possible implementation, the first-type reference signal is a reference signal used for positioning, for example, one of a PRS, an SRS, a pos-SRS, a sidelink reference signal, and a random access preamble, and the second-type reference signal is another reference signal (not a conventional positioning reference signal), for example, one of a TRS, a CSI-RS, a DM-RS, and a PT-RS.

It should be noted that the first configuration information and the second configuration information may be independent of each other. That is, in a possible implementation, the first frequency domain resource and the second frequency domain resource may be independently configured, to improve flexibility of network resource configuration.

It should be noted that the terminal device may receive the first configuration information and/or the second configuration information from a network device, or may receive the first configuration information and/or the second configuration information from a network unit. The network device may be a base station, a TRP, or the like. The network unit may be a core network device such as an LMF.

With reference to the second aspect, in some implementations of the second aspect, that the terminal device sends or receives the N signals on the M first frequency domain resources includes: When a first condition is met, the terminal device sends or receives the N signals on the M first frequency domain resources, where the first condition is that a first time interval is less than or equal to a second time interval; a time interval between an I^{th} signal and an (I+1)^{th} signal is the first time interval, where the N signals include the I^{th} signal and the (I+1)^{th} signal, and the I^{th} signal and the (I+1)^{th} signal are located in adjacent time units; and a sum of time for switching from an L^{th} first frequency domain resource to the second frequency domain resource and time for switching from the second frequency domain resource to an (L+1)^{th} first frequency domain resource is the second time interval, where the L^{th} second frequency domain resource is used to send or receive the I^{th} signal, the (L+1)^{th} second frequency domain resource is used to send or receive the (I+1)^{th} signal, and the second frequency domain resource is used to send or receive at least one of a data signal, control information, and a second-type reference signal.

Optionally, the first condition further includes: A priority of sending or receiving the N signals, or other signals, data, or control information on the second frequency domain resource is not higher than a priority of sending or receiving the N signals on the first frequency domain resource.

If the first time interval is less than the second time interval, and no signal, data, or control information whose priority is higher than that of the N signals is scheduled (sent or received) on the second frequency domain resource in a time period of the first time interval, the terminal device sends or receives the I^{th} signal and the (I+1)^{th} signal. Otherwise, the terminal device switches to the second frequency domain resource after sending each signal. If the terminal device does not display the function, the terminal device performs scheduling on the second frequency domain resource.

With reference to the second aspect, in some implementations of the second aspect, that the terminal device sends or receives the N signals on the M first frequency domain resources includes: When a first condition is met, the terminal device sends or receives the N signals on the M first frequency domain resources, where the first condition is that a first time interval is less than or equal to a second time interval; the first time interval is a time interval between an I^{th} signal and an (I+1)^{th} signal, where the terminal device sends or receives the I^{th} signal on an L^{th} first frequency domain resource, and sends or receives the (I+1)^{th} signal on an (L+1)^{th} first frequency domain resource, the I^{th} signal and the (I+1)^{th} signal belong to the N signals, and the I^{th} signal and the (I+1)^{th} signal are located in adjacent time units; and the second time interval is a sum of time for which the terminal device switches from the L^{th} first frequency domain resource to the second frequency domain resource and time for which the terminal device switches from the second frequency domain resource to the (L+1)^{th} first frequency domain resource.

With reference to the second aspect, in some implementations of the second aspect, the method further includes: When the first condition is not met, the terminal device sends or receives at least one of the data signal, the control information, and the second-type reference signal on the second frequency domain resource.

Optionally, when the first condition is not met, the terminal device sends or receives at least one of the data signal, the control information, the first-type reference signal, and the second-type reference signal on the second frequency domain resource.

Based on the foregoing solution, the first condition is defined, so that frequent switching between the first frequency domain resource and the second frequency domain resource can be avoided, and the terminal device can implement fast frequency hopping sending or receiving, to reduce a positioning latency, reduce terminal complexity and power consumption, and improve positioning performance.

With reference to the second aspect, in some implementations of the second aspect, a new capability (or function) may be introduced to the terminal device, and the capability item indicates:
if the first time interval is less than or equal to the second time interval, frequency domain resources are not switched. In this case, the terminal device completes sending or receiving of the N signals on the M first frequency domain resources in an I^{th} time unit, and sends or receives the N signals on the M first frequency domain resources in an (I+1)^{th} time unit. Alternatively, it may be understood as that the terminal device completes sending or receiving of the I^{th} signal on the L^{th} first frequency domain resource, and sends or receives the (I+1)^{th} signal on the (L+1)^{th} first frequency domain resource.

If the first time interval is greater than the second time interval, frequency domain resources are switched. This may also be understood as that the terminal device completes sending or receiving of the N signals on the M first frequency domain resources in an I^{th} time unit, and sends or receives the N signals, or other signals, data, or control information on the second frequency domain resource in an (I+1)^{th} time unit.

Optionally, the capability item indicates:
if the first time interval is less than or equal to the second time interval, and no signal, data, or control information whose priority is higher than that of the N signals is scheduled on the second frequency domain resource in a time period of the first time interval, frequency domain resources are not switched. This may also be understood as that the terminal device completes sending or receiving of the N signals on the M first frequency domain resources in an I^{th} time unit, and sends or receives the N signals on the M first frequency domain resources in an (I+1)^{th} time unit. Alternatively, it may be understood as that the terminal device completes sending or receiving of the I^{th} signal on the L^{th} first frequency domain resource, and sends or receives the (I+1)^{th} signal on the (L+1)^{th} first frequency domain resource.

If the first time interval is greater than the second time interval, or a signal, data, or control information whose priority is higher than that of the N signals is scheduled on the second frequency domain resource (a network) in a time period of the first time interval, frequency domain resources are switched. This may also be understood as that the terminal device completes sending or receiving of the N signals on the M first frequency domain resources in an I^{th} time unit, and sends or receives the N signals or other signals, data, or control information with a higher priority on the second frequency domain resource in an (I+1)^{th} time unit.

With reference to the second aspect, in some implementations of the second aspect, the terminal device sends indication information, where the indication information indicates that the terminal device supports the first condition or the capability item (function). For a specific implementation, refer to the first aspect. Details are not described again.

With reference to the second aspect, in some implementations of the second aspect, the first configuration information includes a first frequency and a bandwidth of at least one of the M first frequency domain resources; and/or frequency shift information. The first frequency is a start frequency, a center frequency, or an end frequency of the first frequency resource.

With reference to the second aspect, in some implementations of the second aspect, the frequency shift information includes at least one of the following: a periodicity of a frequency shift, a pattern of the frequency shift, supporting intra-slot frequency shift, a frequency domain start location of the frequency shift, a time domain start location of the frequency shift, frequency domain interval information of the frequency shift, time domain interval information of the frequency shift, a quantity of periodic frequency shifts, duration of the frequency shift, and a quantity of frequency shifts.

The periodicity of the frequency shift is duration of a frequency shift pattern (pattern) (which may also be referred to as a frequency shift pattern). The frequency shift pattern indicates a sequence and locations of receiving or sending signals in frequency domain and/or time domain in a single frequency shift periodicity. The frequency shift pattern may be periodically repeated. The pattern of the frequency shift supporting intra-slot frequency shift indicates that frequency shift is supported in a single slot. The frequency domain start location of the frequency shift indicates a frequency domain start location of a signal corresponding to the frequency shift information, that is, a start frequency of a bandwidth occupied by the signal corresponding to the frequency shift information. The time domain start location of the frequency shift indicates time information for starting frequency shift sending of the signal corresponding to the frequency shift information. The frequency domain interval information of the frequency shift indicates an interval between two adjacent times of frequency shift sending or receiving in frequency domain. The time domain interval information of the frequency shift indicates a time interval between the two adjacent times of frequency shift sending or receiving. The quantity of periodic frequency shifts indicates a quantity of frequency shifts in a frequency shift periodicity. The duration of the frequency shift indicates duration of the frequency shift, for example, may be sending duration, receiving duration, or a quantity of frequency shift periodicities. The quantity of frequency shifts indicates a total quantity of frequency shifts of the signal corresponding to the frequency shift information.

It should be noted that the frequency shift means that other configuration information of the first frequency domain resource does not change except a frequency domain location, and fast switching of frequency domain resources can be implemented. For example, when the first frequency domain resource is a BWP, the frequency shift may be BWP retuning (retuning) or BWP switching (switching).

With reference to the second aspect, in some implementations of the second aspect, the pattern of the frequency shift indicates frequency domain information and/or time domain information in a single frequency shift periodicity; the frequency domain information includes at least one of the following: a first frequency domain start location, bandwidth information or a quantity of resource blocks of the frequency shift, and first frequency domain interval information; and the time domain information includes at least one of the following: a first time domain start location, time domain information or a quantity of symbols of the frequency shift, a frequency shift repetition factor, and first time domain interval information.

The first frequency domain start location is a frequency domain start location in a single frequency shift periodicity. Similarly, the bandwidth information or the quantity of resource blocks of the frequency shift and the first frequency domain interval information are respectively bandwidth information or a quantity of resource blocks of the frequency shift in the single frequency shift periodicity and frequency domain interval information in the single frequency shift periodicity. Correspondingly, the first time domain start location, the time domain information or the quantity of symbols of the frequency shift, the frequency shift repetition factor, and the first time domain interval information are respectively a time domain start location, time domain information or a quantity of symbols of the frequency shift, a frequency shift repetition factor, and time domain interval information in the single frequency shift periodicity.

In the solution of this application, the single frequency shift periodicity may be one or more radio frames, one or more subframes, one or more slots, one or more symbols, or the like. This is not limited in this application.

With reference to the second aspect, in some implementations of the second aspect, the first configuration information includes association information; and the association information indicates that a K^{th} first frequency domain resource is associated with P first frequency domain resources, where the P first frequency domain resources are P of the M first frequency domain resources, and the K^{th} first frequency domain resource is one of the M first frequency domain resources.

Optionally, the association information may further indicate an association relationship between at least one first frequency resource and other first frequency domain resources. For example, the association information may indicate an association relationship between each of K first frequency domain resources and a plurality of other first frequency domain resources, where K={n1, n2, ..., nk}. For example, the association information may indicate that an n1^{th} first frequency domain resource is associated with P1 first frequency domain resources, an n2^{th} first frequency domain resource is associated with P2 first frequency domain resources, ..., and an nk^{th} first frequency domain resource is associated with Pk first frequency domain resources, where the P1, P2, ..., and Pk first frequency domain resources are P1, P2, ..., and Pk of the M first frequency domain resources.

With reference to the second aspect, in some implementations of the second aspect, the method further includes: The terminal device receives indication information, where the indication information indicates one or more of the following:
activation of the K^{th} first frequency domain resource;
activation of some or all of the M first frequency domain resources; and
an activation sequence of the some or all of the M first frequency domain resources.

Optionally, when the indication information indicates to activate the K^{th} first frequency domain resource, the indication information includes an identifier of the K^{th} first frequency domain resource.

Optionally, when the indication information indicates to activate the some or all of the M first frequency domain resources, the indication information includes identifiers of the some or all of the M first frequency domain resources.

In an implementation, when the indication information includes the identifiers of the some or all of the M first frequency domain resources, the terminal device may determine the activation sequence of the some or all of the M first frequency domain resources based on a sequence of the identifiers.

With reference to the second aspect, in some implementations of the second aspect, at least two of the M first frequency domain resources overlap in frequency domain.

With reference to the second aspect, in some implementations of the second aspect, two first frequency domain resources that are in the M first frequency domain resources and that are located in adjacent time units overlap in frequency domain.

Based on the foregoing solution, signal estimation may be performed based on the overlapping part in frequency domain, to implement coherent reception at a receive end and improve positioning accuracy.

With reference to the second aspect, in some implementations of the second aspect, the method further includes: The terminal device sends request information, where the request information is used to request the first configuration information.

The request information may indicate the first configuration information recommended or expected by the terminal device, for example, the first frequency, the bandwidth, and the frequency shift information.

Optionally, the request information may indicate one or more first frequency domain resources recommended/expected to be activated by the terminal device and/or an activation sequence of a plurality of first frequency domain resources.

With reference to the second aspect, in some implementations of the second aspect, the first-type signal is a positioning reference signal.

According to a third aspect, an embodiment of this application provides a communication method. The method may be performed by a network device, or may be performed by a chip configured in a terminal device. This is not limited in this application.

Specifically, the method includes: The network device sends first configuration information, where the first configuration information indicates a first frequency domain resource, and the first frequency domain resource includes M second frequency domain resources; and the network device sends or receives N signals on the M second frequency domain resources, where the N signals are located in N time units, M is an integer greater than or equal to 2, and N is a positive integer.

It should be understood that, in this embodiment of this application, N and M may be the same or may be different. When N is equal to M, the M second frequency domain resources are used to send M signals, and the M signals may one-to-one correspond to the M second frequency domain resources. In other words, each of the M second frequency domain resources is used to send one signal. When N is not equal to M, no signal may be sent on some of the M second frequency domain resources, or a plurality of signals may be sent on some of the M second frequency domain resources.

In addition, in this embodiment of this application, a "frequency domain resource" is a segment of continuous frequency domain resources or a frequency point in frequency domain. There may be a plurality of resource granularities. For example, a frequency domain resource may be one of a subcarrier, an RB, a BWP, a CC, a band, a frequency band, a frequency layer, a frequency point, or an FR.

With reference to the third aspect, in some implementations of the third aspect, the N signals are N first-type reference signals, and the method further includes: The network device sends second configuration information, where the second configuration information indicates a third frequency domain resource, and the third frequency domain resource is used to send or receive at least one of a data signal, control information, and a second-type reference signal. A bandwidth of the third frequency domain resource is less than or equal to a bandwidth of the first frequency domain resource.

It should be noted that, in this embodiment of this application, the first-type reference signal may be one of a PRS, an SRS, a pos-SRS, a TRS, a CSI-RS, a DM-RS, a PT-RS, a sidelink reference signal, and a random access preamble.

The second-type reference signal may be one of a PRS, an SRS, a pos-SRS, a TRS, a CSI-RS, a DM-RS, a PT-RS, a sidelink reference signal, and a random access preamble (preamble).

In a possible implementation, the first-type reference signal is a reference signal used for positioning, for example, one of a PRS, an SRS, a pos-SRS, a sidelink reference signal, and a random access preamble (preamble), and the second-type reference signal is another reference signal (not a conventional positioning reference signal), for example, one of a TRS, a CSI-RS, a DM-RS, and a PT-RS.

It should be noted that the first configuration information and the second configuration information may be independent of each other. That is, in a possible implementation, the first frequency domain resource and the third frequency domain resource may be independently configured, to improve flexibility of network resource configuration.

It should be noted that the first configuration information and/or the second configuration information may be configured by the network device, or may be configured by a network unit. The network device may be a base station, a TRP, or the like. The network unit may be a core network device such as an LMF.

With reference to the third aspect, in some implementations of the third aspect, the N signals include an I^{th} signal and an (I+1)^{th} signal, and the I^{th} signal and the (I+1)^{th} signal are located in adjacent time units; a first time interval is a time interval between the I^{th} signal and the (I+1)^{th} signal; a second time interval is a sum of time for switching from the first frequency domain resource to the third frequency domain resource and time for switching from the third frequency domain resource to the first frequency domain resource; and the first time interval is less than or equal to the second time interval.

It may also be understood that the second time interval is a sum of radio frequency switching time required for switching from the first frequency domain resource to the third frequency domain resource and radio frequency switching time required for switching from the third frequency domain resource back to the first frequency domain resource.

Optionally, a priority of sending or receiving the N signals, or other signals, data, or control information on the third frequency domain resource is not higher than a priority of sending or receiving the N signals on the first frequency domain resource.

With reference to the third aspect, in some implementations of the third aspect, the N signals include an I^{th} signal and an (I+1)^{th} signal, and the I^{th} signal and the (I+1)^{th} signal are located in adjacent time units; a first time interval is a time interval between the I^{th} signal and the (I+1)^{th} signal; and a second time interval is a preset or predefined time interval. The preset or predefined time interval may be obtained by a terminal device from the network device or a network unit, may be preset, or may be agreed on by a terminal device and a network. This is not limited in this application. Alternatively, the second time interval is time for switching from the first frequency domain resource to the third frequency domain resource, the second time interval is a sum of time for switching from the first frequency domain resource to the third frequency domain resource and a third time interval, the second time interval is a sum of a third time interval and time for switching from the third frequency domain resource to the first frequency domain resource, or the second time interval is a sum of time for switching from the first frequency domain resource to the third frequency domain resource, time for switching from the third frequency domain resource to the first frequency domain resource, and a third time interval. The third time interval is a preset or predefined time interval or threshold. The first time interval is less than or equal to the second time interval.

With reference to the third aspect, in some implementations of the third aspect, the network device sends or receives an I^{th} signal on an L^{th} second frequency domain resource, and sends or receives an (I+1)^{th} signal on an (L+1)^{th} second frequency domain resource, where the I^{th} signal and the (I+1)^{th} signal belong to the N signals, and the I^{th} signal and the (I+1)^{th} signal are located in adjacent time units; a first time interval is a time interval between the I^{th} signal and the (I+1)^{th} signal; and a second time interval is a preset or predefined time interval. The preset or predefined time interval may be configured by the network device or a network unit, so that a terminal device obtains the time interval from the network device or the network unit; the preset or predefined time interval may be preset; or the preset or predefined time interval may be agreed on by a terminal device and a network. This is not limited in this application. Alternatively, the second time interval is time for switching from the L^{th} second frequency domain resource to the third frequency domain resource, the second time interval is a sum of time for switching from the (L+1)^{th} frequency domain resource to the third frequency domain resource and a third time interval, the second time interval is a sum of a third time interval and time for switching from the third frequency domain resource to the L^{th} second frequency domain resource, or the second time interval is a sum of time for switching from the (L+1)^{th} second frequency domain resource to the third frequency domain resource, time for switching from the third frequency domain resource to the L^{th} second frequency domain resource, and a third time interval. The third time interval is a preset or predefined time interval or threshold. The first time interval is less than or equal to the second time interval.

It should be noted that the L^{th} second frequency domain resource and the (L+1)^{th} second frequency domain resource belong to the M second frequency domain resources. The L^{th} second frequency domain resource and the (L+1)^{th} second frequency domain resource may be adjacent or not adjacent in frequency domain, may completely overlap in frequency domain, or may partially overlap in frequency domain. This is not limited in this application. Alternatively, the L^{th} second frequency domain resource and the (L+1)^{th} second frequency domain resource may be a same second frequency domain resource.

With reference to the third aspect, in some implementations of the third aspect, that the network device sends or receives the N signals on the M second frequency domain resources includes: When a first condition is met, the network device sends or receives the N signals on the M second frequency domain resources, where the first condition is that a first time interval is less than or equal to a second time interval; a time interval between an I^{th} signal and an (I+1)^{th} signal is the first time interval, the I^{th} signal and the (I+1)^{th} signal belong to the N signals, and the I^{th} signal and the (I+1)^{th} signal are located in adjacent time units; and a sum of time for switching from the first frequency domain resource to the third frequency domain resource and time for switching from the third frequency domain resource to the first frequency domain resource is the second time interval.

Optionally, the first condition further includes: A priority of sending or receiving the N signals, or other signals, data, or control information on the third frequency domain resource is not higher than a priority of sending or receiving the N signals on the first frequency domain resource.

With reference to the third aspect, in some implementations of the third aspect, that the network device sends or receives the N signals on the M second frequency domain resources includes: When a first condition is met, the network device sends or receives the N signals on the M second frequency domain resources, where the first condition is that a first time interval is less than or equal to a second time interval; the first time interval is a time interval between an I^{th} signal and an (I+1)^{th} signal, where the terminal device sends or receives the I^{th} signal on an L^{th} second frequency domain resource, and sends or receives the (I+1)^{th} signal on an (L+1)^{th} second frequency domain resource, the I^{th} signal and the (I+1)^{th} signal belong to the N signals, and the I^{th} signal and the (I+1)^{th} signal are located in adjacent time units; and the second time interval is a sum of time for which the terminal device switches from the L^{th} second frequency domain resource to the third frequency domain resource and time for which the terminal device switches from the third frequency domain resource to the (L+1)^{th} second frequency domain resource.

With reference to the third aspect, in some implementations of the third aspect, the method further includes: When the first condition is not met, the network device sends or receives at least one of the data signal, the control information, and the second-type reference signal on the third frequency domain resource.

Optionally, when the first condition is not met, the network device sends or receives at least one of the data signal, the control information, the first-type reference signal, and the second-type reference signal on the third frequency domain resource.

With reference to the third aspect, in some implementations of the third aspect, a new capability item (or function) may be defined, and the capability item indicates:
if the first time interval is less than or equal to the second time interval, frequency domain resources are not switched. In this case, the terminal device completes sending or receiving of the N signals on the first frequency domain resource in an I^{th} time unit, and sends or receives the N signals on the first frequency domain resource in an (I+1)^{th} time unit. Alternatively, it may be understood as that the terminal device completes sending or receiving of the I^{th} signal on the L^{th} second frequency domain resource, and sends or receives the (I+1)^{th} signal on the (L+1)^{th} second frequency domain resource.

If the first time interval is greater than the second time interval, frequency domain resources are switched. This may also be understood as that the terminal device completes sending or receiving of the N signals on the first frequency domain resource in an I^{th} time unit, and sends or receives the N signals, or other signals, data, or control information on the third frequency domain resource in an (I+1)^{th} time unit.

Optionally, the capability item indicates:
if the first time interval is less than or equal to the second time interval, and no signal, data, or control information whose priority is higher than that of the N signals is scheduled on the third frequency domain resource in a time period of the first time interval, frequency domain resources are not switched. This may also be understood as that the terminal device completes sending or receiving of the N signals on the first frequency domain resource in an I^{th} time unit, and sends or receives the N signals on the first frequency domain resource in an (I+1)^{th} time unit. Alternatively, it may be understood as that the terminal device completes sending or receiving of the I^{th} signal on the L^{th} second frequency domain resource, and sends or receives the (I+1)^{th} signal on the (L+1)^{th} second frequency domain resource.

If the first time interval is greater than the second time interval, or a signal, data, or control information whose priority is higher than that of the N signals is scheduled on the third frequency domain resource (a network) in the time period of the first time interval, frequency domain resources are switched. This may also be understood as that the terminal device completes sending or receiving of the N signals on the first frequency domain resource in an I^{th} time unit, and sends or receives the N signals or other signals, data, or control information with a higher priority on the third frequency domain resource in an (I+1)^{th} time unit. With reference to the third aspect, in some implementations of the third aspect, the method further includes: The network device receives indication information, where the indication information indicates that the terminal device supports the first condition or the capability item (function).

With reference to the third aspect, in some implementations of the third aspect, the network device receives first indication information, where the first indication information indicates that when the terminal device meets the first condition, the terminal device sends or receives the N signals on the M second frequency domain resources.

With reference to the first aspect, in some implementations of the first aspect, the network device receives second indication information, where the second indication information indicates that when the terminal device does not meet the first condition, the terminal device sends or receives at least one of the data signal, the control information, and the second-type reference signal on the third frequency domain resource.

With reference to the first aspect, in some implementations of the first aspect, the network device receives third indication information, where the third indication information indicates that when the terminal device meets the first condition, the terminal device sends or receives the N signals on the M second frequency domain resources, and when the indication information indicates that the terminal device does not meet the first condition, the terminal device sends or receives at least one of the data signal, the control information, and the second-type reference signal on the third frequency domain resource.

Optionally, indication information (for example, the first indication information, the second indication information, or the third indication information) received by the network device may be capability information of the terminal device, one of capability information of the terminal device, or other information.

With reference to the third aspect, in some implementations of the third aspect, the method further includes: The network device sends third configuration information; and the third configuration information includes frequency domain configuration information and time domain configuration information of at least one of the N signals, and/or frequency hopping configuration information.

In an implementation, the third configuration information includes configuration information of the N signals and the frequency hopping configuration information. The configuration information of the N signals includes time domain configuration information of the N signals and/or frequency domain configuration information of the N signals. The frequency hopping configuration information includes one or more of information such as a frequency hopping periodicity, supporting intra-slot frequency hopping, a frequency domain start location of a frequency hop, frequency hopping duration, and a quantity of frequency hops. Optionally, when the third configuration information includes the configuration information of the N signals and the frequency hopping configuration information, the frequency hopping configuration information includes one or more of the frequency hopping periodicity, supporting intra-slot frequency hopping, the frequency domain start location of the frequency hop, the frequency hopping duration, the quantity of frequency hops, and the like.

In another implementation, the third configuration information may include configuration information of at least one signal and the frequency hopping configuration information. The at least one signal is less than N signals and greater than or equal to one signal. When there is one signal, the third configuration information includes configuration information of the single signal. When there is more than one signal, the third configuration information includes configuration information of the more than one signal. The configuration information of the at least one signal includes frequency domain configuration information of the at least one signal and/or time domain configuration information of the at least one signal. The frequency hopping configuration information includes a frequency hopping pattern, a frequency hopping periodicity, supporting intra-slot frequency hopping, a frequency domain start location of a frequency hop, frequency domain interval information of the frequency hop, time domain interval information of the frequency hop, and the like.

In another implementation, the third configuration information includes only configuration information of the N signals, and the configuration information of the N signals includes time domain configuration information of the N signals and/or frequency domain configuration information of the N signals. Optionally, the N signals are periodically sent or received.

In another implementation, the third configuration information includes only the frequency hopping configuration information. Optionally, the terminal device may obtain the configuration information of the at least one of the N signals based on other configuration information or other information.

In addition, the third configuration information may further include other configuration information, for example, one or more of the following:
scrambling code information, density information, reserved time information, retuning time information, and non-simultaneous sending information.

The scrambling code information includes at least one of the following: scrambling code ranges of m signals and a scrambling code value set.

The density information is a quantity of times of sending the m signals within a specific time range.

The reserved time information is a time length that needs to be reserved before the m signals are sent, a time length that needs to be reserved after the m signals are sent, or a time length that needs to be reserved between two adjacent time units.

The retuning time information is time occupied by frequency retuning (radio frequency retuning, RF retuning).

The non-simultaneous sending information means that when sending the m signals, the terminal device does not support sending of information other than the m signals.

It should be noted that the frequency domain configuration information of the N signals and the time domain configuration information of the N signals include N pieces of frequency domain configuration information and N pieces of time domain configuration information. Each of the N pieces of frequency domain configuration information includes frequency domain information of a corresponding signal, for example, frequency domain location information. Each of the N pieces of time domain configuration information includes time domain information of a corresponding signal, for example, time domain location information. In addition, each of the N pieces of frequency domain configuration information and each of the N pieces of time domain configuration information may further include other information, and the information may be the same or different.

With reference to the third aspect, in some implementations of the third aspect, the frequency hopping configuration information includes at least one of the following: a frequency hopping periodicity, a frequency hopping pattern, supporting intra-slot frequency hopping, frequency domain start location of a frequency hop, time domain start location of the frequency hop, frequency domain interval information of the frequency hop, time domain interval information of the frequency hop, a quantity of periodic frequency hops, frequency hopping duration, and a quantity of frequency hops.

The frequency hopping periodicity is duration of a frequency hopping pattern. The frequency hopping pattern indicates a sequence and locations of receiving or sending signals in frequency domain and/or time domain in a single frequency hopping periodicity. Optionally, the frequency hopping pattern may be periodically repeated. Supporting intra-slot frequency hopping indicates that frequency hopping is supported in a single slot. The frequency domain start location of the frequency hop indicates a frequency domain start location of a signal corresponding to the frequency hopping configuration information, that is, a start frequency of a bandwidth occupied by the signal corresponding to the frequency hopping configuration information. The time domain start location of the frequency hop indicates time information for starting frequency hopping sending of the signal corresponding to the frequency hopping configuration information. The frequency domain interval information of the frequency hop indicates an interval between two adjacent times of frequency hopping sending or receiving in frequency domain. The time domain interval information of the frequency hop indicates a time interval between the two adjacent times of frequency hopping sending or receiving. The quantity of periodic frequency hops indicates a quantity of frequency hops in one frequency hopping periodicity. The frequency hopping duration indicates duration of the frequency hop, for example, may be sending duration, receiving duration, or a quantity of frequency hopping periodicities. The quantity of frequency hops indicates a total quantity of frequency hops of the signal corresponding to the frequency hopping configuration information or a quantity of repetitions of the frequency hopping pattern.

With reference to the third aspect, in some implementations of the third aspect, the frequency hopping pattern indicates frequency domain information and/or time domain information in a single frequency hopping periodicity; the frequency domain information includes at least one of the following: a first frequency domain start location, bandwidth information or a quantity of resource blocks of the frequency hop, and first frequency domain interval information; and the time domain information includes at least one of the following: a first time domain start location, time domain information or a quantity of symbols of the frequency hop, a frequency hopping repetition factor, first time domain interval information, and information indicating that time domain discontinuous frequency hopping is supported.

With reference to the third aspect, in some implementations of the third aspect, at least two of the M second frequency domain resources overlap in frequency domain.

With reference to the third aspect, in some implementations of the third aspect, two second frequency domain resources that are in the M second frequency domain resources and that are located in adjacent time units overlap in frequency domain.

With reference to the third aspect, in some implementations of the third aspect, the method further includes: The network device receives request information, where the request information is used to request the first configuration information.

The request information may indicate the first configuration information recommended or expected by the terminal device, for example, the frequency domain configuration information, the time domain configuration information, or the frequency hopping configuration information. With reference to the third aspect, in some implementations of the third aspect, the first-type signal is a positioning reference signal.

According to a fourth aspect, an embodiment of this application provides a communication method. The method may be performed by a network device, or may be performed by a chip configured in a terminal device. This is not limited in this application.

Specifically, the method includes: The network device receives first configuration information, where the first configuration information indicates M first frequency domain resources; and the network device sends or receives N signals on the M first frequency domain resources, where the N signals are located in N time units, M is an integer greater than or equal to 2, and N is a positive integer.

It should be understood that N and M may be the same or different. When N is equal to M, the M first frequency domain resources are used to send M signals, and the M signals may one-to-one correspond to the M first frequency domain resources. In other words, each of the M first frequency domain resources is used to send one signal. When N is not equal to M, no signal may be sent on some of the M first frequency domain resources, or a plurality of signals may be sent on some of the M first frequency domain resources.

In addition, in this embodiment of this application, a "frequency domain resource" is a segment of continuous frequency domain resources or a frequency point in frequency domain. There may be a plurality of resource granularities. For example, the frequency domain resource may be one of a subcarrier, an RB, a BWP, a CC, a band, a frequency band, a frequency layer, a frequency point, or a frequency range.

With reference to the fourth aspect, in some implementations of the fourth aspect, the N signals are N first-type reference signals.

With reference to the fourth aspect, in some implementations of the fourth aspect, the network device sends or receives an I^{th} signal on an L^{th} first frequency domain resource, and sends or receives an (I+1)^{th} signal on an (L+1)^{th} first frequency domain resource, where the I^{th} signal and the (I+1)^{th} signal belong to the N signals, and the I^{th} signal and the (I+1)^{th} signal are located in adjacent time units; a first time interval is a time interval between the I^{th} signal and the (I+1)^{th} signal; a second time interval is time for switching from the L^{th} first frequency domain resource to the (L+1)^{th} first frequency domain resource; and the first time interval is less than or equal to the second time interval.

With reference to the fourth aspect, in some implementations of the fourth aspect, the N signals include an I^{th} signal and an (I+1)^{th} signal, and the I^{th} signal and the (I+1)^{th} signal are located in adjacent time units; a first time interval is a time interval between the I^{th} signal and the (I+1)^{th} signal; and a second time interval is a sum of time for switching from the L^{th} first frequency domain resource to a second frequency domain resource and time for switching from the second frequency domain resource to the (L+1)^{th} first frequency domain resource, where the L^{th} first frequency domain resource is used to send or receive the I^{th} signal, the (L+1)^{th} first frequency domain resource is used to send or receive the (I+1)^{th} signal, and the second frequency domain resource is used to send or receive at least one of a data signal, control information, and a second-type reference signal; and the first time interval is less than or equal to the second time interval.

Optionally, the second time interval is a sum of radio frequency switching time required for switching from the L^{th} first frequency domain resource to the second frequency domain resource and radio frequency switching time required for switching from the second frequency domain resource back to the (L+1)^{th} first frequency domain resource.

Optionally, the second time interval is a preset or predefined time interval. The preset or predefined time interval may be preset in the network device or a network unit, so that a terminal device obtains the time interval from the network device or the network unit; the preset or predefined time interval may be preset; or the preset or predefined time interval may be agreed on by a terminal device and a network. This is not limited in this application. Alternatively, the second time interval is a sum of time for switching from the L^{th} first frequency domain resource to the second frequency domain resource and a third time interval, the second time interval is a sum of a third time interval and time for switching from the second frequency domain resource to the (L+1)^{th} first frequency domain resource, or the second time interval is a sum of time for switching from the L^{th} first frequency domain resource to the second frequency domain resource, time for switching from the second frequency domain resource to the (L+1)^{th} first frequency domain resource, and a third time interval. The third time interval is a preset or predefined time interval or threshold.

Optionally, a priority of sending or receiving the N signals, or other signals, data, or control information on the second frequency domain resource is not higher than a priority of sending or receiving the N signals on the first frequency domain resource.

It should be noted that the L^{th} first frequency domain resource and the (L+1)^{th} first frequency domain resource belong to the M first frequency domain resources. The L^{th} first frequency domain resource and the (L+1)^{th} first frequency domain resource may be adjacent or not adjacent in frequency domain, may completely overlap in frequency domain, or may partially overlap in frequency domain. This is not limited in this application.

With reference to the fourth aspect, in some implementations of the fourth aspect, the method further includes: The network device sends second configuration information, where the second configuration information indicates the second frequency domain resource.

It should be noted that the first-type reference signal may be one of a PRS, an SRS, a pos-SRS, a TRS, a CSI-RS, a DM-RS, a PT-RS, a sidelink reference signal, and a random access preamble.

The second-type reference signal may be one of a PRS, an SRS, a pos-SRS, a TRS, a CSI-RS, a DM-RS, a PT-RS, a sidelink reference signal, and a random access preamble.

In a possible implementation, the first-type reference signal is a reference signal used for positioning, for example, one of a PRS, an SRS, a pos-SRS, a sidelink reference signal, and a random access preamble, and the second-type reference signal is another reference signal (not a conventional positioning reference signal), for example, one of a TRS, a CSI-RS, a DM-RS, and a PT-RS.

It should be noted that the first configuration information and the second configuration information may be independent of each other. That is, in a possible implementation, the first frequency domain resource and the second frequency domain resource may be independently configured, to improve flexibility of network resource configuration.

It should be noted that the first configuration information and/or the second configuration information may be configured by the network device, or may be configured by a network unit, so that a terminal device may obtain the first configuration information and/or the second configuration information from the network device or the network unit. The network device may be a base station, a TRP, or the like. The network unit may be a core network device such as an LMF.

With reference to the fourth aspect, in some implementations of the fourth aspect, that the network device sends or receives the N signals on the M first frequency domain resources includes: When a first condition is met, the network device sends or receives the N signals on the M first frequency domain resources, where the first condition is that a first time interval is less than or equal to a second time interval; a time interval between an I^{th} signal and an (I+1)^{th} signal is the first time interval, where the N signals include the I^{th} signal and the (I+1)^{th} signal, and the I^{th} signal and the (I+1)^{th} signal are located in adjacent time units; and a sum of time for switching from an L^{th} first frequency domain resource to a second frequency domain resource and time for switching from the second frequency domain resource to an (L+1)^{th} first frequency domain resource is the second time interval, where the L^{th} second frequency domain resource is used to send or receive the I^{th} signal, the (L+1)^{th} second frequency domain resource is used to send or receive the (I+1)^{th} signal, and the second frequency domain resource is used to send or receive at least one of a data signal, control information, and a second-type reference signal.

Optionally, the first condition further includes: A priority of sending or receiving the N signals, or other signals, data, or control information on the second frequency domain resource is not higher than a priority of sending or receiving the N signals on the first frequency domain resource.

If the first time interval is less than the second time interval, and no signal, data, or control information whose priority is higher than that of the N signals is scheduled (sent or received) on the second frequency domain resource in a time period of the first time interval, the terminal device sends or receives the I^{th} signal and the (I+1)^{th} signal. Otherwise, the terminal device switches to the second frequency domain resource after sending each signal. If the terminal device does not display the function, the terminal device performs scheduling on the second frequency domain resource.

With reference to the fourth aspect, in some implementations of the fourth aspect, that the network device sends or receives the N signals on the M first frequency domain resources includes: When a first condition is met, the network device sends or receives the N signals on the M first frequency domain resources, where the first condition is that a first time interval is less than or equal to a second time interval; the first time interval is a time interval between an I^{th} signal and an (I+1)^{th} signal, where the network device sends or receives the I^{th} signal on an L^{th} first frequency domain resource, and sends or receives the (I+1)^{th} signal on an (L+1)^{th} first frequency domain resource, the I^{th} signal and the (I+1)^{th} signal belong to the N signals, and the I^{th} signal and the (I+1)^{th} signal are located in adjacent time units; and the second time interval is a sum of time for which the terminal device switches from the L^{th} first frequency domain resource to the second frequency domain resource and time for which the terminal device switches from the second frequency domain resource to the (L+1)^{th} first frequency domain resource.

With reference to the fourth aspect, in some implementations of the fourth aspect, the method further includes: When the first condition is not met, the terminal device sends or receives at least one of the data signal, the control information, and the second-type reference signal on the second frequency domain resource.

Optionally, when the first condition is not met, the terminal device sends or receives at least one of the data signal, the control information, the first-type reference signal, and the second-type reference signal on the second frequency domain resource. With reference to the fourth aspect, in some implementations of the fourth aspect, a new capability (or function) may be introduced to the terminal device, and the capability item indicates:
if the first time interval is less than or equal to the second time interval, frequency domain resources are not switched. In this case, the terminal device completes sending or receiving of the N signals on the M first frequency domain resources in an I^{th} time unit, and sends or receives the N signals on the M first frequency domain resources in an (I+1)^{th} time unit. Alternatively, it may be understood as that the terminal device completes sending or receiving of the I^{th} signal on the L^{th} first frequency domain resource, and sends or receives the (I+1)^{th} signal on the (L+1)^{th} first frequency domain resource.

If the first time interval is greater than the second time interval, frequency domain resources are switched. This may also be understood as that the terminal device completes sending or receiving of the N signals on the M first frequency domain resources in an I^{th} time unit, and sends or receives the N signals, or other signals, data, or control information on the second frequency domain resource in an (I+1)^{th} time unit.

Optionally, the capability item indicates:
if the first time interval is less than or equal to the second time interval, and no signal, data, or control information whose priority is higher than that of the N signals is scheduled on the second frequency domain resource in a time period of the first time interval, frequency domain resources are not switched. This may also be understood as that the terminal device completes sending or receiving of the N signals on the M first frequency domain resources in an I^{th} time unit, and sends or receives the N signals on the M first frequency domain resources in an (I+1)^{th} time unit. Alternatively, it may be understood as that the terminal device completes sending or receiving of the I^{th} signal on the L^{th} first frequency domain resource, and sends or receives the (I+1)^{th} signal on the (L+1)^{th} first frequency domain resource.

If the first time interval is greater than the second time interval, or a signal, data, or control information whose priority is higher than that of the N signals is scheduled on the second frequency domain resource (a network) in a time period of the first time interval, frequency domain resources are switched. This may also be understood as that the terminal device completes sending or receiving of the N signals on the M first frequency domain resources in an I^{th} time unit, and sends or receives the N signals or other signals, data, or control information with a higher priority on the second frequency domain resource in an (I+1)^{th} time unit.

With reference to the fourth aspect, in some implementations of the fourth aspect, the terminal device sends indication information, where the indication information indicates that the terminal device supports the first condition or the capability item (function). For a specific implementation, refer to the third aspect. Details are not described again.

With reference to the fourth aspect, in some implementations of the fourth aspect, the first configuration information includes a first frequency and a bandwidth of at least one of the M first frequency domain resources; and/or frequency shift information. The first frequency is a start frequency, a center frequency, or an end frequency of the first frequency resource.

With reference to the fourth aspect, in some implementations of the fourth aspect, the frequency shift information includes at least one of the following: a periodicity of a frequency shift, a pattern of the frequency shift, supporting intra-slot frequency shift, a frequency domain start location of the frequency shift, a time domain start location of the frequency shift, frequency domain interval information of the frequency shift, time domain interval information of the frequency shift, a quantity of periodic frequency shifts, duration of the frequency shift, and a quantity of frequency shifts.

The periodicity of the frequency shift is duration of a frequency shift pattern (pattern) (which may also be referred to as a frequency shift pattern). The frequency shift pattern indicates a sequence and locations of receiving or sending signals in frequency domain and/or time domain in a single frequency shift periodicity. The frequency shift pattern may be periodically repeated. The pattern of the frequency shift supporting intra-slot frequency shift indicates that frequency shift is supported in a single slot. The frequency domain start location of the frequency shift indicates a frequency domain start location of a signal corresponding to the frequency shift information, that is, a start frequency of a bandwidth occupied by the signal corresponding to the frequency shift information. The time domain start location of the frequency shift indicates time information for starting frequency shift sending of the signal corresponding to the frequency shift information. The frequency domain interval information of the frequency shift indicates an interval between two adjacent times of frequency shift sending or receiving in frequency domain. The time domain interval information of the frequency shift indicates a time interval between the two adjacent times of frequency shift sending or receiving. The quantity of periodic frequency shifts indicates a quantity of frequency shifts in a frequency shift periodicity. The duration of the frequency shift indicates duration of the frequency shift, for example, may be sending duration, receiving duration, or a quantity of frequency shift periodicities. The quantity of frequency shifts indicates a total quantity of frequency shifts of the signal corresponding to the frequency shift information.

It should be noted that the frequency shift means that other configuration information of the first frequency domain resource does not change except a frequency domain location, and fast switching of frequency domain resources can be implemented. For example, when the first frequency domain resource is a BWP, the frequency shift may be BWP retuning or BWP switching.

With reference to the fourth aspect, in some implementations of the fourth aspect, the pattern of the frequency shift indicates frequency domain information and/or time domain information in a single frequency shift periodicity; the frequency domain information includes at least one of the following: a first frequency domain start location, bandwidth information or a quantity of resource blocks of the frequency shift, and first frequency domain interval information; and the time domain information includes at least one of the following: a first time domain start location, time domain information or a quantity of symbols of the frequency shift, a frequency shift repetition factor, and first time domain interval information.

With reference to the fourth aspect, in some implementations of the fourth aspect, the first configuration information includes association information; and the association information indicates that a K^{th} first frequency domain resource is associated with P first frequency domain resources, where the P first frequency domain resources are P of the M first frequency domain resources, and the K^{th} first frequency domain resource is one of the M first frequency domain resources.

Optionally, the association information may further indicate an association relationship between at least one first frequency resource and other first frequency domain resources. For example, the association information may indicate an association relationship between each of K first frequency domain resources and a plurality of other first frequency domain resources, where K={n1, n2, ..., nk}. For example, the association information may indicate that an n1^{th} first frequency domain resource is associated with P1 first frequency domain resources, an n2^{th} first frequency domain resource is associated with P2 first frequency domain resources, ..., and an nk^{th} first frequency domain resource is associated with Pk first frequency domain resources, where the P1, P2, ..., and Pk first frequency domain resources are P1, P2, ..., and Pk of the M first frequency domain resources.

With reference to the fourth aspect, in some implementations of the fourth aspect, the method further includes: The network device sends indication information, where the indication information indicates one or more of the following:
activation of the K^{th} first frequency domain resource;
activation of some or all of the M first frequency domain resources; and
an activation sequence of the some or all of the M first frequency domain resources.

Optionally, when the indication information indicates to activate the K^{th} first frequency domain resource, the indication information includes an identifier of the K^{th} first frequency domain resource.

Optionally, when the indication information indicates to activate the some or all of the M first frequency domain resources, the indication information includes identifiers of the some or all of the M first frequency domain resources.

In an implementation, when the indication information includes the identifiers of the some or all of the M first frequency domain resources, the terminal device may determine the activation sequence of the some or all of the M first frequency domain resources based on a sequence of the identifiers.

With reference to the fourth aspect, in some implementations of the fourth aspect, at least two of the M first frequency domain resources overlap in frequency domain.

With reference to the fourth aspect, in some implementations of the fourth aspect, two first frequency domain resources that are in the M first frequency domain resources and that are located in adjacent time units overlap in frequency domain.

With reference to the fourth aspect, in some implementations of the fourth aspect, the method further includes: The network device receives request information, where the request information is used to request the first configuration information.

The request information may indicate the first configuration information recommended or expected by the terminal device, for example, the first frequency, the bandwidth, and the frequency shift information.

Optionally, the request information may indicate one or more first frequency domain resources recommended/expected to be activated by the terminal device and/or an activation sequence of a plurality of first frequency domain resources.

With reference to the fourth aspect, in some implementations of the fourth aspect, the first-type signal is a positioning reference signal.

According to a fifth aspect, a communication apparatus is provided. The apparatus is configured to perform the method provided in the first aspect or the second aspect. Specifically, the communication apparatus may include a unit and/or a module configured to perform the method provided in any one of the first aspect or the foregoing implementations of the first aspect, for example, a processing unit and an obtaining unit. Alternatively, the communication apparatus may include a unit and/or a module configured to perform the method provided in any one of the second aspect or the foregoing implementations of the second aspect, for example, a processing unit and an obtaining unit.

In an implementation, the communication apparatus is a terminal device. The obtaining unit may be a transceiver or an input/output interface, and the processing unit may be at least one processor. Optionally, the transceiver may be a transceiver circuit. Optionally, the input/output interface may be an input/output circuit.

In another implementation, the communication apparatus is a chip, a chip system, or a circuit in a terminal device. The obtaining unit may be an input/output interface, an interface circuit, an output circuit, an input circuit, a pin, a related circuit, or the like in the chip, the chip system, or the circuit; and the processing unit may be at least one processor, a processing circuit, a logic circuit, or the like.

According to a sixth aspect, a communication apparatus is provided. The apparatus is configured to perform the method provided in the third aspect or the fourth aspect. Specifically, the communication apparatus may include a unit and/or a module configured to perform the method provided in any one of the third aspect or the foregoing implementations of the third aspect, for example, a processing unit and an obtaining unit. Alternatively, the communication apparatus may include a unit and/or a module configured to perform the method provided in any one of the fourth aspect or the foregoing implementations of the fourth aspect, for example, a processing unit and an obtaining unit.

In an implementation, the communication apparatus is a terminal device. The obtaining unit may be a transceiver or an input/output interface, and the processing unit may be at least one processor. Optionally, the transceiver may be a transceiver circuit. Optionally, the input/output interface may be an input/output circuit.

In another implementation, the communication apparatus is a chip, a chip system, or a circuit in a terminal device. The obtaining unit may be an input/output interface, an interface circuit, an output circuit, an input circuit, a pin, a related circuit, or the like in the chip, the chip system, or the circuit; and the processing unit may be at least one processor, a processing circuit, a logic circuit, or the like.

According to a seventh aspect, this application provides a processor, including an input circuit, an output circuit, and a processing circuit. The processing circuit is configured to: receive a signal through the input circuit, and transmit a signal through the output circuit, to enable the processor to perform the method according to any one of the first aspect to the fourth aspect and the possible implementations of the first aspect to the fourth aspect.

In a specific implementation process, the processor may be a chip, the input circuit may be an input pin, the output circuit may be an output pin, and the processing circuit may be a transistor, a gate circuit, a trigger, any logic circuit, or the like. An input signal received by the input circuit may be received and input by, for example, but not limited to, a receiver, a signal output by the output circuit may be output to, for example, but not limited to, a transmitter and transmitted by the transmitter, and the input circuit and the output circuit may be a same circuit, where the circuit is used as the input circuit and the output circuit at different moments. Specific implementations of the processor and various circuits are not limited in this embodiment of this application.

Operations such as sending and obtaining/receiving related to the processor may be understood as operations such as outputting, receiving, and inputting performed by the processor, or operations such as sending and receiving performed by a radio frequency circuit and an antenna, unless otherwise specified, or provided that the operations do not conflict with actual functions or internal logic of the operations in related descriptions. This is not limited in this application.

According to an eighth aspect, a processing apparatus is provided, including a processor and a memory. The processor is configured to: read instructions stored in the memory, receive a signal through a receiver, and transmit a signal through a transmitter, to perform the method according to any one of the first aspect to the fourth aspect and the possible implementations of the first aspect to the fourth aspect.

Optionally, there are one or more processors, and there are one or more memories.

Optionally, the memory may be integrated with the processor, or the memory and the processor are separately disposed.

In a specific implementation process, the memory may be a non-transitory (non-transitory) memory, such as a read-only memory (read-only memory, ROM), and the memory and the processor may be integrated into one chip, or may be separately disposed in different chips. A type of the memory and a manner of disposing the memory and the processor are not limited in this embodiment of this application.

It should be understood that, a related data exchange process such as sending of indication information may be a process of outputting the indication information from the processor, and receiving of capability information may be a process of receiving the input capability information by the processor. Specifically, data output by the processor may be output to a transmitter, and input data received by the processor may come from a receiver. The transmitter and the receiver may be collectively referred to as a transceiver.

The processing apparatus in the eighth aspect may be a chip. The processor may be implemented by using hardware or software. When the processor is implemented by using hardware, the processor may be a logic circuit, an integrated circuit, or the like. When the processor is implemented by using software, the processor may be a general-purpose processor, and may be implemented by reading software code stored in the memory. The memory may be integrated into the processor, or may be located outside the processor and exist independently.

According to a ninth aspect, a computer-readable storage medium is provided. The computer-readable storage medium stores program code executed by a device, and the program code is used to perform the method provided in any implementation of the first aspect or the second aspect.

According to a tenth aspect, a computer-readable storage medium is provided. The computer-readable storage medium stores program code executed by a device, and the program code is used to perform the method provided in any implementation of the third aspect or the fourth aspect.

According to an eleventh aspect, a computer program product including instructions is provided. When the computer program product runs on a computer, the computer is enabled to perform the method provided in any implementation of the first aspect or the second aspect.

According to a twelfth aspect, a computer program product including instructions is provided. When the computer program product runs on a computer, the computer is enabled to perform the method provided in any implementation of the third aspect or the fourth aspect.

According to a thirteenth aspect, a communication system is provided, including the communication apparatus according to the fifth aspect and the communication apparatus according to the sixth aspect.

For specific beneficial effects brought by the third aspect to the thirteenth aspect, refer to descriptions of the beneficial effects in the first aspect or the second aspect. Details are not described herein again.

### BRIEF DESCRIPTION OF DRAWINGS

FIG. 1 shows a diagram of a network architecture to which an embodiment of this application is applicable;
FIG. 2 shows a diagram of a conventional BWP switching technology;
FIG. 3 shows a schematic flowchart of a communication method 300 according to an embodiment of this application;
FIG. 4 shows a schematic flowchart of a communication method 400 according to an embodiment of this application;
FIG. 5 shows a diagram of a frequency hopping pattern according to an embodiment of this application;
FIG. 6 shows a diagram of a BWP switching technology corresponding to the communication method 300 according to an embodiment of this application;
FIG. 7 shows a schematic flowchart of a communication method 700 according to an embodiment of this application;
FIG. 8 shows a diagram of a BWP switching technology corresponding to the communication method 700 according to an embodiment of this application;
FIG. 9 shows a schematic flowchart of a communication method 900 according to an embodiment of this application;
FIG. 10 shows a diagram of a BWP switching technology corresponding to the communication method 900 according to an embodiment of this application;
FIG. 11 shows a diagram of a frequency shift pattern according to an embodiment of this application;
FIG. 12 shows a schematic block diagram of a communication apparatus according to an embodiment of this application; and
FIG. 13 shows a diagram of a structure of a communication apparatus according to an embodiment of this application.

### DESCRIPTION OF EMBODIMENTS

The following describes technical solutions of this application with reference to accompanying drawings.

The technical solutions in embodiments of this application may be applied to various communication systems, for example, a global system for mobile communications (global system for mobile communications, GSM), a code division multiple access (code division multiple access, CDMA) system, a wideband code division multiple access (wideband code division multiple access, WCDMA) system, a general packet radio service (general packet radio service, GPRS), a long term evolution (long term evolution, LTE) system, an LTE frequency division duplex (frequency division duplex, FDD) system, an LTE time division duplex (time division duplex, TDD) system, a universal mobile telecommunication system (universal mobile telecommunication system, UMTS), a worldwide interoperability for microwave access (worldwide interoperability for microwave access, WiMAX) communication system, a 5th generation (5th generation, 5G) system, a new radio (new radio, NR) system, a wireless fidelity (wireless-fidelity, Wi-Fi) system, a communication system related to the 3rd generation partnership project (3rd generation partnership project, 3GPP), another communication system or a plurality of communication convergence systems that may appear in the future, and the like.

New radio (new radio, NR) supports three radio resource control (radio resource control, RRC) states, including an idle (also referred to as RRC_IDLE) state, an inactive (also referred to as RRC_INACTIVE) state, and a connected (also referred to as RRC_CONNECTED) state.

A terminal device such as user equipment (user equipment, UE) has different features when the terminal device is in different states:
When the UE is in the RRC_IDLE state, a feature of the UE is that a core network does not reserve an RRC context (that is, an RRC context) of the UE. The RRC context is a key parameter for establishing communication between the UE and the network, and specifically includes a security context, UE capability information, and the like. This also means that the UE has not established a connection to the core network (core network, CN), that is, is in a CN_IDLE state. In this case, the UE does not have to-be-transmitted data, enters a sleep (sleep) state, and disables a transceiver unit to reduce power consumption.

When the UE is in the RRC_CONNECTED state, the UE has established the RRC context, all parameters required for establishing communication between the UE and the network are known to both the UE and the network, the network allocates a C-RNTI to the accessed UE, and the UE and the core network are in a CN_CONNECTED state. In this case, if the UE is transmitting data, the UE is in a continuous reception state, and when data transmission is completed and the UE enters a waiting state, the UE switches to a connected discontinuous reception (discontinuous reception, DRX) state to reduce power consumption. If there is data to be transmitted subsequently, the UE returns to the continuous reception state again.

When the UE is in the RRC_INACTIVE state, the RRC context is reserved between the UE and the network. From a perspective of the core network, the UE is also in the CN_CONNECTED state. In this case, a procedure of switching to a connected state to receive data is fast, and no additional core network signaling overheads are generated.

The technical solutions of this application are applicable to terminal devices in all the foregoing three RRC states.

The terminal device in embodiments of this application is a device having a wireless transceiver function, for example, may include a handheld device having a wireless connection function, or a processing device connected to a wireless modem. The terminal device may communicate with a core network via a radio access network RAN, and exchange voice and/or data with the RAN. The terminal device may be user equipment (user equipment, UE), a wireless terminal device, a mobile terminal device, a device-to-device (device-to-device, D2D) terminal device, a V2X terminal device, a machine-to-machine/machine-type communication (machine-to-machine/machine-type communication, M2M/MTC) terminal device, an internet of things (internet of things, IoT) terminal device, a subscriber unit (subscriber unit), a subscriber station (subscriber station), a mobile station (mobile station), a remote station (remote station), an access point (access point, AP), a remote terminal (remote terminal), an access terminal (access terminal), a user terminal (user terminal), a user agent (user agent), a user device (user device), or the like. In addition, the terminal device may further include a mobile phone (or referred to as a "cellular" phone), a computer having a mobile terminal device, a portable, pocket-sized, handheld, or computer built-in mobile apparatus, or the like, for example, a device such as a personal communication service (personal communication service, PCS) telephone. In addition, the terminal device may alternatively be a limited device, for example, a device with low power consumption, a device with a limited storage capability, or a device with a limited computing capability. For example, the terminal device includes an information sensing device such as a barcode, a radio frequency identification (radio frequency identification, RFID), a sensor, a global positioning system (global positioning system, GPS), or a laser scanner. The terminal device may be fixed or mobile.

It should be noted that, in this application, an apparatus configured to implement a function of a terminal device may be a terminal device, or may be an apparatus that can support a terminal device in implementing a function of the terminal device, for example, a chip system, and the apparatus may be installed in the terminal device. In this application, the chip system may include a chip, or may include a chip and another discrete component.

A network device in embodiments of this application is an access device through which a terminal device accesses a mobile communication system in a wireless manner, and includes an access network (access network, AN) device, for example, a base station. The network device may alternatively be a device that communicates with a terminal device over an air interface. The network device may include an evolved NodeB (evolutional NodeB) in a long term evolution (long term evolution, LTE) system or a long term evolution-advanced (long term evolution-advanced, LTE-A) system, and the evolved NodeB may be referred to as an eNB or an e-NodeB for short. The eNB is an apparatus that is deployed in a radio access network and that meets a fourth generation (the fourth generation, 4G) mobile communication technology standard and that provides a wireless communication function for a terminal device. Alternatively, the network device may be a new radio controller (new radio controller, NR controller), a gNodeB (gNodeB, gNB) in a 5G system, a central unit (central unit), a new radio base station, a remote radio unit, a micro base station (also referred to as a small cell), a relay (relay), a distributed unit (distributed unit), macro base stations in various forms, a transmission reception point (transmission reception point, TRP), a reception point (reception point, RP), a transmission measurement function (transmission measurement function, TMF), a transmission point (transmission point, TP), or any other radio access device. Embodiments of this application are not limited thereto. The network device may alternatively include a radio network controller (radio network controller, RNC), a NodeB (NodeB, NB), a base station controller (base station controller, BSC), a base transceiver station (base transceiver station, BTS), a home base station (for example, a home evolved NodeB or a home NodeB, HNB), a baseband unit (baseband unit, BBU), a wireless fidelity (wireless fidelity, Wi-Fi) access point (access point, AP), or the like. A specific technology and a specific device form used by the network device are not limited in embodiments of this application. The network device may correspond to an eNB in a 4G system, and correspond to a gNB in a 5G system.

A base station in embodiments of this application may include a central unit (central unit, CU) and a distributed unit (distributed unit, DU), and a plurality of DUs may be centrally controlled by one CU. The CU and the DU may be obtained through division based on protocol layer functions of a wireless network. For example, functions of a PDCP layer and a protocol layer above the PDCP layer are set on the CU, and functions of protocol layers below the PDCP layer, such as an RLC layer and a MAC layer, are set on the DU. It should be noted that such protocol layer division is merely an example, and division may alternatively be performed at another protocol layer. A radio frequency apparatus may be remotely deployed and not disposed in the DU, may be integrated into the DU, or may be partially remotely disposed and partially integrated into the DU. This is not limited in embodiments of this application. In addition, in some embodiments, a control plane (control plan, CP) and a user plane (user plan, UP) of the CU may be separated into different entities for implementation, and the entities are respectively a control-plane CU entity (CU-CP entity) and a user-plane CU entity (CU-UP entity). In this network architecture, signaling generated by the CU may be sent to a terminal device through the DU, or signaling generated by UE may be sent to the CU through the DU. The DU may directly encapsulate the signaling at a protocol layer and then transparently transmit the signaling to the UE or the CU without parsing the signaling. In this network architecture, the CU is classified as a network device on a radio access network (radio access network, RAN) side. In addition, the CU may alternatively be classified as a network device on a core network (core network, CN) side. This is not limited in this application.

The terminal device in embodiments of this application is connected to a radio access network (radio access network, RAN) device in a wireless manner, and a radio access network element is connected to a core network device in a wired/wireless manner. The core network device and the radio access network element may be different independent physical devices, functions of the core network device and logical functions of the radio access network element may be integrated into a same physical device, or some functions of the core network device and some functions of the radio access network element may be integrated into one physical device. The terminal may be located at a fixed location, or may be mobile.

In addition, the network device in embodiments of this application may alternatively be a core network device, for example, a location management function (location management function, LMF) network element, a mobility management entity (mobility management entity, MME), or a broadcast multicast service center (broadcast multicast service center, BMSC), or may include a corresponding function entity in a 5G system, for example, a core network control plane (control plane, CP) or user plane (user plane, UP) network function, for example, an SMF or an access and mobility management function AMF. A core network control plane may alternatively be understood as a core network control plane function (control plane function, CPF) entity.

Due to requirements for low costs and low complexity of internet of things services (such as wearables, industrial sensors, and video surveillance), a 5G Rel-17 RedCap subject focuses on researches on reduced capability UE. This type of UE is referred to as RedCap UE. Compared with a common type of UE, for example, enhanced mobile broadband (enhanced mobile broadband, eMBB) UE, the RedCap UE mainly has the following several characteristics:
First, the RedCap UE has lower device complexity. Compared with high-end eMBB and ultra-reliable and low-latency communication (ultra-reliable and low latency communication, URLLC) devices in Rel-15/Rel-16, the RedCap UE is mainly used to reduce device costs and complexity, especially for an industrial sensor scenario.

Second, the RedCap UE has a smaller device size. In most application scenarios, a device design of the RedCap UE needs to be compact.

In addition, a deployment solution requires that a system should support all FR1/FR2 frequency bands of FDD and TDD.

It should be noted that a bandwidth capability of the RedCap UE decreases from 100 MHz (non-capability-limited common UE) to 20 MHz. However, positioning accuracy largely depends on a bandwidth of a positioning signal. High-end eMBB UE has a capability of 100 MHz, that is, can send or receive a positioning reference signal with a maximum bandwidth of 100 MHz, and can be used to implement submeter-level positioning. Obviously, a 20 MHz positioning signal cannot be used to achieve submeter-level positioning accuracy. Therefore, the 20 MHz positioning signal cannot meet a high-accuracy positioning requirement. To improve positioning accuracy of a terminal device with a limited bandwidth capability (for example, RedCap UE), there are currently the following several technical solutions.

In a conventional first solution, positioning is performed by using a method in which reference signals are overlapped for frequency hopping. To be specific, at different frequency hopping moments, UE sends a plurality of "narrowband" reference signals (for example, 20 MHz SRSs), and a base station (a receive side) superimposes the signals received at a plurality of consecutive frequency hopping moments, and performs positioning after obtaining a virtual large-bandwidth signal (for example, an SRS with a bandwidth close to 100 MHz). For a problem of a random phase difference between reference signals at different frequency hopping moments, a receive end may estimate the random phase difference between the reference signals at different frequency hopping moments based on a partial overlap between reference signals at adjacent frequency hopping moments in frequency domain, and achieve positioning accuracy close to 100 MHz (that is, submeter-level positioning accuracy) after compensation. In a second solution, it may not be required that reference signals at adjacent frequency hopping moments partially overlap in frequency domain. In this case, a random phase difference between reference signals at different frequency hopping moments is estimated by using some optimization algorithms (for example, an extrapolation method) used by a receive end, to improve positioning accuracy. In addition, there is a third solution. A base station side sends a large-bandwidth signal (for example, a 100 MHz positioning reference signal), and a UE side can receive only a small-bandwidth signal (for example, a 20 MHz positioning reference signal) each time due to a limited capability. Therefore, a central idea of the foregoing solution is that accumulating signals received by the UE at several frequency hopping moments is equivalent to receiving an entire large-bandwidth signal. In addition, some optimization algorithms (for example, an extrapolation method) are used to estimate a random phase difference between reference signals at different frequency hopping moments, to improve positioning accuracy.

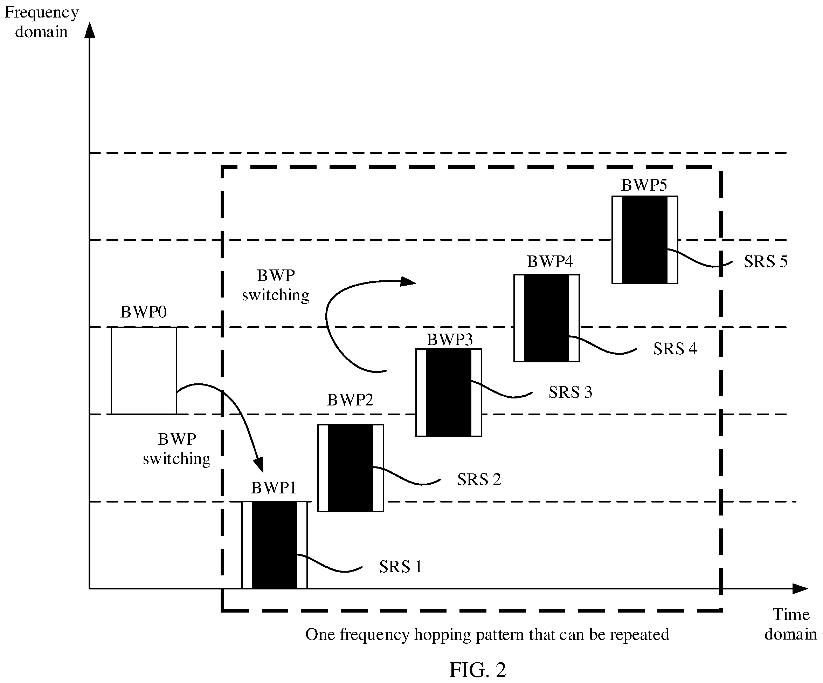

However, regardless of which of the foregoing frequency hopping solutions is used, the UE may improve positioning accuracy through frequency hopping sending or receiving. Because the UE can activate only one frequency resource each time during transmission (the following uses a BWP as an example for description), BWP switching needs to be performed, to implement frequency hopping. A diagram of the BWP switching process is shown in FIG. 2. Specifically, it is assumed that a BWP on which the UE currently operates or a BWP currently activated by the UE is BWP0, and the UE needs to first switch to BWP1, and then can send a first positioning reference signal SRS 1 (which can be sent only in a frequency domain range of BWP1) on BWP1. To send a second positioning reference signal SRS 2, the UE needs to switch to BWP2. The rest may be deduced by analogy. Currently, there are three mainstream BWP switching solutions: a radio resource control (radio resource control, RRC)-based BWP switching solution, a timer-based BWP switching solution, and a downlink control information (downlink control information, DCI)-based BWP switching solution. However, due to frequent BWP switching, these solutions have the following disadvantages:
1. A latency of BWP switching between two adjacent frequency hops is greater than 1 ms. Consequently, a channel estimation error is large, and a receive end cannot perform accurate phase estimation and compensation. As a result, positioning accuracy is affected.
2. In a conventional BWP switching technology, a schedulable frequency domain range is limited to a UE capability range (20 MHz), and a frequency hopping pattern (pattern) cannot be fast implemented, resulting in a large positioning latency.
3. Frequent BWP switching causes large power consumption and high complexity of a terminal device.

Therefore, the conventional positioning solutions cannot meet a low-latency and high-accuracy positioning requirement.

In view of this, embodiments of this application provide a communication method and a communication apparatus. Based on a frequency hopping indication method, a frequency hopping sending pattern or a frequency hopping receiving pattern is implemented. When the frequency hopping sending pattern or the frequency hopping receiving pattern is used in positioning, a positioning latency can be effectively reduced, terminal complexity and power consumption can be reduced, and a low-latency and high-accuracy positioning solution is provided.

The solutions in embodiments of this application are applied to a scenario in a location of a to-be-located device is located, and may be further applied to a scenario in which sensing and positioning are integrated. In other words, "positioning" in embodiments of this application may alternatively be "sensing".

To better understand the technical solutions provided in this application, the following first describes terms in embodiments of this application in detail.
1. Positioning reference signal. In embodiments of this application, a positioning reference signal may include one or more of a downlink positioning reference signal (downlink positioning reference signal, DL-PRS), an uplink sounding reference signal (uplink sounding reference signal, UL-SRS), a PRS, or an S-PRS. In addition, one or more of other reference signals such as a CSI-RS, a synchronization signal and physical broadcast channel (physical broadcast channel, PBCH) block (synchronization signal and PBCH block, SSB), and a TRS may also be used for positioning. A positioning reference signal in this application is a reference signal that can be used for positioning information, and a specific form of the positioning reference signal is not limited in embodiments of this application.
   The DL-PRS is used in a downlink positioning method and an uplink and downlink joint positioning method. In a broad sense, the UL-SRS may include an uplink reference signal used for multiple-input multiple-output (multiple input multiple output, MIMO) (namely, a MIMO-SRS), and an uplink positioning reference signal dedicated to positioning (that is, a positioning-sounding reference signal (positioning-SRS, pos-SRS)). Both the MIMO-SRS and the pos-SRS may be used in the uplink positioning method and the uplink and downlink joint positioning method. In addition, when the UL-SRS is used for positioning, the UL-SRS may also be referred to as an uplink positioning reference signal. The PRS may include a DL-PRS and/or a UL-SRS. The S-PRS is a reference signal that can be transmitted on a sidelink (sidelink, SL) and that is dedicated to positioning in an SL scenario, where the sidelink is also translated into a secondary link, a side link, a side-link, or the like.
2. Transmission point (transmission point, TP)
   A transmission point is also referred to as a transmission node or a sending node, and represents a group of transmit antennas that are geographically located in a same location. This concept is applicable to a cell, a part of a cell, or a TP supporting only a DL-PRS. The transmission node may include an antenna of a base station (a ng-eNB or a gNB), a remote radio unit (remote radio head, RRH), a remote antenna of the base station, an antenna of the TP supporting only the DL-PRS, and the like. One cell may include one or more transmission points.
3. Reception point (reception point, RP)
   A reception point is also referred to as a reception node, and represents a group of receive antennas that are geographically located in a same location. This concept is applicable to a cell, a part of a cell, or an RP supporting only a UL-SRS. The transmission node may include an antenna of a base station (a ng-eNB or a gNB), a remote radio unit, a remote antenna of the base station, an antenna of the RP supporting only the UL-SRS, and the like. One cell may include one or more reception points.
4. Transmission-reception node (transmission-reception point, TRP)
   A transmission-reception point represents a group of antennas that are geographically located at a same location and support a TP function and/or an RP function. In this application, an antenna may also be understood as an antenna array, and one antenna array may include one or more antenna elements.
5. Physical resource block (physical resource block, PRB)

In frequency domain, no matter what a subcarrier spacing is, 12 consecutive subcarriers may be defined as one PRB. A larger subcarrier spacing indicates a larger actual bandwidth corresponding to a PRB. Such a definition simplifies a design of a reference signal. To be specific, a reference signal pattern defined in a PRB is applicable to all subcarrier spacings, and there is no need to separately design a reference signal pattern for each subcarrier spacing. In addition, a PRB is a basic unit for resource allocation in frequency domain, and the PRB fixed at 12 subcarriers also makes frequency division multiplexing and time division multiplexing of data on different subcarriers easier to implement.

If time-frequency domain multiplexing of data with different subcarrier spacings exists in one carrier, PRB grids formed by PRBs with different subcarrier spacings are independent of each other. In other words, PRBs of each subcarrier spacing are independently numbered from a lowest frequency to a highest frequency. A subcarrier spacing is used to allocate a resource to UE, and the UE may determine the resource without knowing a resource allocation status of another subcarrier spacing. There is a nesting relationship between the PRB grids with different subcarrier spacings, that is, there is a superset or subset relationship between the PRB grids with different subcarrier spacings.

6. Carrier (carrier component, CC) and bandwidth part (bandwidth part, BWP)

A carrier bandwidth is an operating bandwidth of a system, and a BWP is some subsets of the carrier bandwidth. UE operates in only one BWP. From a perspective of the UE, only PRBs in the BWP need to be defined and numbered. However, from a perspective of the entire system, BWPs configured for different UEs are different, or may even partially overlap, and numbers of a same PRB in BWP ranges of different UEs may be different. To implement configuration and management on the BWPs, PRBs need to be uniformly indexed in the entire bandwidth. Therefore, NR defines a common resource block (common resource block, CRB) in the system bandwidth. The CRB is numbered from a reference point in the system bandwidth, and the reference point is referred to as a point A. In the system bandwidth, CRB grids including CRBs with different subcarrier spacings are independent of each other. In other words, a subcarrier 0 of a CRB 0 of each subcarrier spacing is aligned with the point A. That is, the point A is a lowest subcarrier of the CRB 0, and is the actual start of an allocated resource block. For UE, not all CRBs can be used. The point A may be read from two parameters: offsetToPointA and absoluteFrequencyPointA. offsetToPointA defines a frequency offset between the point A and a lowest frequency domain point. absoluteFrequencyPointA directly defines a frequency that is of the point A and that is in a unit of an absolute radio frequency channel number (absolute radio frequency channel number, ARFCN).

After the UE accesses a network through an initial access process, the network may configure an operating BWP for the UE through dedicated signaling. A maximum of four BWPs may be configured for each UE, but only one BWP is active at any moment. In addition to radio resource management (radio resource management, RRM) measurement, the UE receives and sends data only on the active BWP. A quantity of BWPs supported by the UE and a BWP bandwidth are reported to the network as UE capabilities, and the network configures the BWPs based on the UE capabilities. Supporting a plurality of BWPs brings flexibility, so that the UE can switch between different transmission bandwidths as required. Frequency division multiplexing between transmissions with different subcarrier spacings may also be supported, that is, different subcarrier spacings may be configured for different BWPs. In addition, in some special scenarios in which a system bandwidth is discontinuous, a plurality of BWPs may be configured, to better adapt to this frequency domain allocation manner.

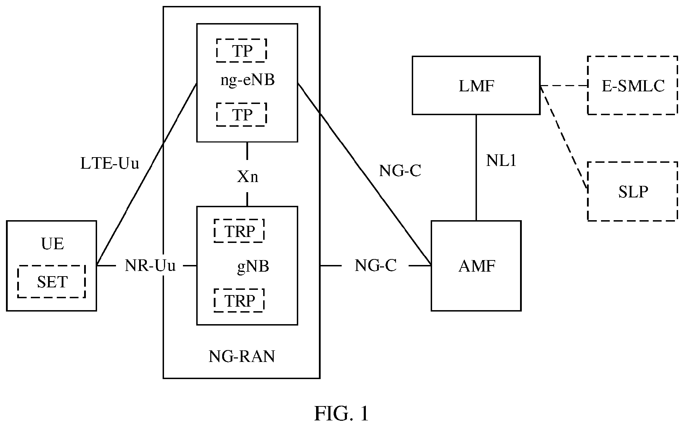

FIG. 1 shows a diagram of a network architecture according to an embodiment of this application. As shown in FIG. 1, the network architecture may include a terminal device, an access management network element, a location management network element, a (radio) access network device, and some network elements that are not shown, for example, a session management network element, a network repository network element, and the like.

It should be understood that the network architecture in this embodiment of this application may be a 5th generation system (5th generation system, 5GS), and a network element in the 5GS may also be referred to as a 5G core network element.

The following describes functions of network elements or devices in the network architecture.
1. The terminal device may also be referred to as user equipment (user equipment, UE), a mobile station (mobile station, MS), a mobile terminal (mobile terminal, MT), or the like, and is a device that provides voice and/or data connectivity for a user. For example, the terminal device may include a handheld device or a vehicle-mounted device with a wireless connection function. Currently, the terminal device may be a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self-driving (self-driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), or the like. In FIG. 1, the terminal device is shown by using UE. This is merely used as an example, and does not constitute a limitation on the terminal device.
2. The access management network element is mainly used for mobility management, access management, and the like. In a 5G communication system, the access management network element may be an access and mobility management function (access and mobility management function, AMF). For example, as shown in FIG. 1, the AMF mainly performs functions such as mobility management and access authentication/authorization. In addition, the AMF is also responsible for transferring a user policy between a terminal and a policy control function (policy control function, PCF) network element. The AMF may receive non-access stratum (non-access stratum, NAS) signaling of the terminal device (including mobility management (mobility management, MM) signaling and session management (session management, SM) signaling) and related signaling of an access network device (for example, base-station-granularity N2 (next-generation (next generation, NG) 2 interface) signaling exchanged with the AMF), to complete a user registration procedure, SM signaling forwarding, and mobility management. Specifically, the AMF network element may receive, from a 5G core network (5G core network, 5GC) location service (location service, LCS) entity, a location service request related to target UE, or the AMF network element may start some location services on behalf of specific target UE; and then, the AMF network element forwards the location service request to the location management network element, and after obtaining location information returned by the UE, returns the related location information to the 5GC LCS entity. In future communication, for example, 6G, the access management network element may still be an AMF network element or have another name. This is not limited in this application.
3. The location management network element is mainly responsible for positioning management, for example, receiving a positioning request from another network element (for example, the AMF network element), collecting positioning data of a user, and obtaining a user location through positioning calculation. The location management network element may further manage and configure a base station or a positioning management unit, to implement configuration on a positioning reference signal, and the like. The location management network element may be a location management function (location management function, LMF) network element, a local location management function (local LMF) network element, or another network element having a similar function. In a positioning architecture based on a 5G core network, the LMF network element may be responsible for supporting different types of location services related to target UE, including locating the UE and transmitting assistance data to the UE. A control plane and a user plane of the LMF network element are respectively an evolved serving mobile location center (evolved serving mobile location center, E-SMLC) and a service location protocol (service location protocol, SLP). The LMF network element may exchange the following information with a ng-eNB/gNB and the UE:
   exchanging information with the ng-eNB/gNB through an NRPPa message, for example, obtaining a PRS, SRS configuration information, cell timing, cell location information, and the like; and
   transferring UE capability information, assistance information, and measurement information with the UE through an LPP message.
4. The (radio) access network (radio access network, (R)AN) device may also be referred to as an access device. An (R)AN can manage a radio resource, provide an access service for user equipment, and complete forwarding of user equipment data between the user equipment and a core network. The (R)AN may also be understood as a base station in a network.

For example, the access network device in embodiments of this application may be any communication device that has a wireless transceiver function and that is used for communicating with user equipment. The access network device includes but is not limited to an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (home evolved NodeB, HeNB, or home NodeB, HNB), a baseband unit (baseband unit, BBU), an access point (access point, AP) in a wireless fidelity (wireless fidelity, Wi-Fi) system, a wireless relay node, a wireless backhaul node, a transmission point (transmission point, TP), a transmission and reception point (transmission and reception point, TRP), or the like. Alternatively, the access network device may be a gNB or a transmission point (TRP or TP) in a 5G system such as an NR system, or one antenna panel or a group of antenna panels (including a plurality of antenna panels) of a base station in the 5G system, or may be a network node, for example, a baseband unit (BBU) or a distributed unit (distributed unit, DU), that constitutes a gNB or a transmission point. In the positioning architecture based on the 5G core network, the gNB/ng-eNB may provide measurement information for target UE, and transfer the information to the LMF.

In some deployments, the gNB may include a central unit (central unit, CU) and a DU. The gNB may further include an active antenna unit (active antenna unit, AAU). The CU implements some functions of the gNB, and the DU implements some functions of the gNB. For example, the CU is responsible for processing a non-real-time protocol and service, and implementing functions of a radio resource control (radio resource control, RRC) layer and a packet data convergence protocol (packet data convergence protocol, PDCP) layer. The DU is responsible for processing a physical layer protocol and a real-time service, and implementing functions of a radio link control (radio link control, RLC) layer, a media access control (media access control, MAC) layer, and a physical (physical, PHY) layer. The AAU implements some physical layer processing functions, radio frequency processing, and a function related to an active antenna. Information at the RRC layer is generated by the CU, and is finally encapsulated at the PHY layer of the DU into information at the PHY layer, or is transformed from information at the PHY layer. Therefore, in this architecture, higher layer signaling, for example, RRC layer signaling, may also be considered as being sent by the DU, or sent by the DU and the AAU. It may be understood that the access network device may be a device including one or more of a CU node, a DU node, or an AAU node. In addition, the CU may be classified as an access network device in an access network (radio access network, RAN), or the CU may be classified into an access network device in a core network (core network, CN). The access network device may be a next-generation radio access network (next-generation radio access network, NG-RAN). This is not limited in this application.

5. The session management network element is mainly used for session management, allocation and management of an internet protocol (internet protocol, IP) address of user equipment, selection and management endpoints of interfaces of a user plane function, a policy control function, and a charging function, downlink data notification, and the like. For example, the session management network element may be a session management function (session management function, SMF) network element, and is responsible for a session management function, and completes procedures such as establishment, release, and update related to a protocol data unit (protocol data unit, PDU) session.

6. The network repository network element provides functions of storing and selecting network function entity information for another core network element. In a 5G communication system, the network element may be a network function repository function (network function repository function, NRF) network element, and mainly includes the following functions: a service discovery function, and maintaining NF texts of available network function (network function, NF) instances and services supported by the NF instances.

The function network elements may be network elements in a hardware device, software functions running on dedicated hardware, or virtualization functions instantiated on a platform (for example, a cloud platform). One or more services may be obtained through division based on the foregoing function network elements. Further, a service independent of a network function may exist. In this application, an instance of the function network element, an instance of a service included in the function network element, and an instance of the service independent of the network function may all be referred to as service instances.

It should be understood that unified description is provided herein. If the foregoing network elements appear in the following architecture, the foregoing descriptions of the functions included in the network elements are also applicable. For brevity, details are not described again when the network elements appear next time.

A person skilled in the art may learn from FIG. 1 that the user equipment UE may be connected to the AMF network element through an NG-RAN, the AMF network element is connected to the LMF network element, and the LMF network element is separately connected to the E-SMLC network element and the SLP network element. Interfaces and connections in the architecture may include LTE-Uu, NR-Uu, NG-C, and NL1. NG-C is a control plane connection between the NG-RAN and the AMF network element, LTE-Uu is a protocol interface between the ng-eNB and the UE, NR-Uu is a protocol interface between the UE and the gNB, and NL1 is a protocol interface between the LMF network element and the AMF network element.

Certainly, the system architecture in FIG. 1 may further include another network element, for example, a network element or a device such as an SMF network element, a network slice selection function (network slice selection function, NSSF), a unified data repository (unified data repository, UDR), or a network repository function (network repository function, NRF). This is not specifically limited.

It should be understood that interfaces or service-based interfaces between the network elements shown in FIG. 1 are merely examples. In a 5G network and another future network, interfaces or service-based interfaces between network elements may alternatively not be the interfaces shown in the figure. This is not limited in this application.

It should be understood that a name of each network element shown in FIG. 1 is merely a name, and the name constitutes no limitation on a function of the network element. In the 5G network and the another future network, the foregoing network elements may alternatively have other names. This is not specifically limited in embodiments of this application. For example, in a 6G network, some or all of the foregoing network elements may still use terms in 5G, or may have other names. A general description is provided herein. Details are not described again below.

It should be further understood that embodiments of this application are not limited to the system architecture shown in FIG. 1. For example, a communication system to which this application is applicable may include more or fewer network elements or devices. The devices or the network elements in FIG. 1 may be hardware, or may be software obtained through functional division or a combination of hardware and software. The devices or the network elements in FIG. 1 may communicate with each other through another device or network element.

For ease of understanding embodiments of this application, the following descriptions are provided.

First, in embodiments of this application, unless otherwise specified, a quantity of nouns indicates "a singular noun or a plural noun", that is, "one or more". "At least one" means one or more, and "a plurality of" means two or more. "And/or" describes an association relationship between associated objects and indicates that three relationships may exist. For example, A and/or B may indicate the following three cases: Only A exists, both A and B exist, and only B exists, where A and B may be singular or plural. The character "/" usually indicates an "or" relationship between associated objects. For example, A/B indicates A or B. "At least one of the following items (pieces)" or a similar expression thereof means any combination of these items, including any combination of singular items (pieces) or plural items (pieces). For example, at least one item (piece) of a, b, or c may represent: a, b, c, a and b, a and c, b and c, or a, b, and c, where a, b, and c may be singular or plural.

Second, ordinal numerals such as "first" and "second" mentioned in embodiments of this application are used to distinguish between a plurality of objects, and are not intended to limit sizes, content, a sequence, a time sequence, priorities, importance, or the like of the plurality of objects. For example, first signaling and second signaling may be same signaling, or may be different signaling. In addition, these names do not indicate that content, information amounts, sending sequences, transmit ends/receive ends, priorities, importance degrees, or the like of the two pieces of signaling are different. In addition, step numbers in embodiments described in this application are merely used to distinguish between different steps, but are not used to limit a sequence of the steps, for example, used to distinguish between different configuration information.

Third, in embodiments shown below, "being pre-obtained" may include being indicated by a network device through signaling or being predefined, for example, being defined in a protocol. "Predefinition" may be implemented by pre-storing corresponding code or a corresponding table in a device (for example, including a terminal device and a network device), or may be implemented in another manner of indicating related information. A specific implementation of the "predefinition" is not limited in this application.

Fourth, "being stored" in embodiments of this application may mean that being stored in one or more memories. The one or more memories may be separately disposed, or may be integrated into an encoder or a decoder, a processor, or a communication apparatus. Alternatively, some of the one or more memories may be separately disposed, and some of the one or more memories are integrated into the translator, the processor, or the communication apparatus. A type of the memory may be a storage medium in any form. This is not limited in this application.

The following describes embodiments provided in this application in detail with reference to accompanying drawings.

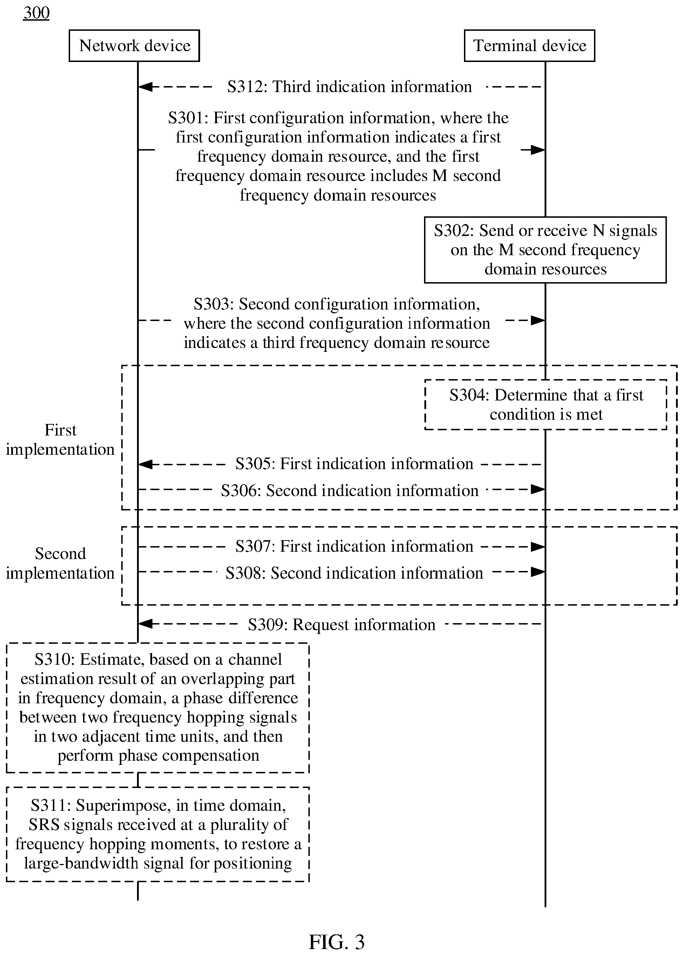

FIG. 3 shows a schematic flowchart of a communication method 300 according to an embodiment of this application. As shown in FIG. 3, a network device may be a base station, or may be a component (such as a chip or a chip system) in a network device. A terminal device may be UE, or may be a component (such as a chip or a chip system) in a terminal device. Specifically, the method includes the following steps:
S301: The network device sends first configuration information to the terminal device.

The first configuration information indicates a first frequency domain resource, and the first frequency domain resource includes M second frequency domain resources.

Specifically, the first configuration information may include a frequency domain location, a bandwidth, and a subcarrier spacing of the first frequency domain resource. Optionally, the first configuration information may further include indication information indicating whether to use an extended cyclic prefix for the first frequency domain resource.

S302: The terminal device sends or receives N signals on the M second frequency domain resources, where the N signals are located in N time units, M is an integer greater than or equal to 2, and N is a positive integer.

In an implementation, the M second frequency domain resources are used by the terminal device to send the N signals. In other words, the terminal device sends the N signals on the M second frequency domain resources, and the network device receives the N signals on the M second frequency domain resources.

In another implementation, the M second frequency domain resources are used by the terminal device to receive the N signals. In other words, the network device sends the N signals on the M second frequency domain resources, and the terminal device receives the N signals on the M second frequency domain resources.

In another implementation, some of the M second frequency domain resources are used by the terminal device to send the N signals, and remaining second frequency domain resources are used by the terminal device to receive the N signals.

It should be understood that, in this embodiment of this application, N and M may be the same or may be different. When N is equal to M, the M second frequency domain resources are used to send M signals, and the M signals may one-to-one correspond to the M second frequency domain resources. In other words, each of the M second frequency domain resources is used to send one signal. When N is not equal to M, no signal may be sent on some of the M second frequency domain resources, or a plurality of signals may be sent on each of some of the M second frequency domain resources.

It should be noted that, in this embodiment of this application, the N signals are first-type reference signals. For example, the N signals each may be a PRS, an SRS (for example, a DL-SRS), a pos-SRS, a TRS, a CSI-RS, a DM-RS, a PT-RS, or a sidelink reference signal. Alternatively, the N signals may be random access preambles (preamble). Alternatively, the N signals may be other reference signals or data. This is not limited in this application.

In an implementation, a bandwidth of each of the M second frequency domain resources is less than a bandwidth of the first frequency domain resource.

Optionally, a total frequency range of the M second frequency domain resources fully occupies or is close to a frequency range of the first frequency domain resource, to obtain positioning performance of a large bandwidth (greater than the bandwidth of the second frequency domain resource).

Optionally, at least two of the M second frequency domain resources overlap in frequency domain. Alternatively, two second frequency domain resources that are in the M second frequency domain resources and that are located in adjacent time units overlap in frequency domain. In this way, signal estimation may be performed based on the overlapping part in frequency domain, to implement coherent reception at a receive end and improve positioning accuracy.

It should be understood that, to reduce a positioning latency, the terminal device needs to complete sending or receiving of the N first-type reference signals within minimum time.

In a first possible implementation, the terminal device completes sending or receiving of the N first-type reference signals in N consecutive time units. In other words, when transmitting the first-type reference signals in the N time units, the terminal device or the network device transmits the first-type reference signals in consecutive time units. To ensure continuity of transmitting the N signals by the terminal device or the network device, a first time interval needs to be less than or equal to a second time interval.

The following describes the first time interval and the second time interval in detail.

In an implementation, the first time interval is defined as a time interval between an I^{th} signal and an (I+1)^{th} signal. The I^{th} signal and the (I+1)^{th} signal belong to the N signals, and the I^{th} signal and the (I+1)^{th} signal are located in adjacent time units. In other words, the I^{th} signal and the (I+1)^{th} signal are two consecutively sent or received signals in the N signals.

Optionally, the terminal device sends or receives the I^{th} signal on an L^{th} second frequency domain resource, and sends or receives the (I+1)^{th} signal on an (L+1)^{th} second frequency domain resource. It should be understood that the L^{th} second frequency domain resource and the (L+1)^{th} second frequency domain resource belong to the M second frequency domain resources. The L^{th} second frequency domain resource and the (L+1)^{th} second frequency domain resource may be adjacent or not adjacent in frequency domain, may completely overlap in frequency domain, or may partially overlap in frequency domain. Alternatively, the L^{th} second frequency domain resource and the (L+1)^{th} second frequency domain resource may be a same second frequency domain resource. This is not limited in this application.

In an implementation, the second time interval is defined as a sum of time for switching from the first frequency domain resource to a third frequency domain resource and time for switching from the third frequency domain resource to the first frequency domain resource.

Alternatively, the second time interval is a sum of radio frequency switching time required for switching from the first frequency domain resource to a third frequency domain resource and radio frequency switching time required for switching from the third frequency domain resource back to the first frequency domain resource.

Alternatively, the second time interval is a preset or predefined time interval. The preset or predefined time interval may be preset by the network device, or may be agreed on by the terminal device and a network. This is not limited in this application.

Alternatively, the second time interval is time for switching from the first frequency domain resource to a third frequency domain resource.

Alternatively, the second time interval is a sum of time for switching from the first frequency domain resource to a third frequency domain resource and a third time interval.

Alternatively, the second time interval is a sum of a third time interval and time for switching from a third frequency domain resource to the first frequency domain resource.

Alternatively, the second time interval is a sum of time for switching from the first frequency domain resource to a third frequency domain resource, time for switching from the third frequency domain resource to the first frequency domain resource, and a third time interval.

The third time interval is a preset or predefined time interval.

Optionally, the second time interval is a sum of time for switching from the L^{th} second frequency domain resource to the third frequency domain resource and time for switching from the third frequency domain resource to the (L+1)^{th} second frequency domain resource.

Alternatively, the second time interval is time for switching from the L^{th} second frequency domain resource to the third frequency domain resource.

Alternatively, the second time interval is a sum of time for switching from the (L+1)^{th} frequency domain resource to the third frequency domain resource and the third time interval.

Alternatively, the second time interval is a sum of the third time interval and time for switching from the third frequency domain resource to the L^{th} second frequency domain resource.

Alternatively, the second time interval is a sum of time for switching from the (L+1)^{th} second frequency domain resource to the third frequency domain resource, time for switching from the third frequency domain resource to the L^{th} second frequency domain resource, and the third time interval.

It should be noted that the third frequency domain resource appears in the foregoing definitions of the first time interval and the second time interval. In the method 300 provided in this embodiment of this application, the third frequency domain resource is a frequency domain resource different from the first frequency domain resource or the M second frequency domain resources.

In an implementation, the first frequency domain resource and the M second frequency domain resources are dedicated to sending or receiving of the first-type reference signal, and the third frequency domain resource is used to send or receive at least one of a data signal, control information, and a second-type reference signal. In other words, information carried on the third frequency domain resource is different from information carried on the first frequency domain resource or the second frequency domain resource. For example, when the terminal device transmits the data signal on the third frequency domain resource, if the terminal device needs to send or receive the first-type reference signal, the terminal device needs to switch from the third frequency domain resource to the first frequency domain resource to transmit the reference signal. Similarly, when the terminal device transmits the first-type reference signal on the M second frequency domain resources of the first frequency domain resource, if the terminal device needs to transmit the data signal, the terminal device needs to switch to the third frequency domain resource, and send the data signal on the third frequency domain resource.

In another implementation, the first frequency domain resource and the M second frequency domain resources are dedicated to sending or receiving of the first-type reference signal, and the third frequency domain resource is used to send or receive at least one of a data signal, control information, the first-type reference signal, and a second-type reference signal. For example, when the terminal device sends or receives the first-type reference signal on the first frequency domain resource, if a positioning service requirement changes (for example, a positioning accuracy requirement is lowered), the terminal device may switch a process of sending or receiving the first-type reference signal from the first frequency domain resource to the third frequency domain resource, to save energy. Similarly, if a positioning service requirement changes (for example, a positioning accuracy requirement is improved), the terminal device needs to switch a process of transmitting the first-type reference signal on the third frequency domain resource to the first frequency domain resource, that is, switch the process of sending or receiving the first-type reference signal from the third frequency domain resource to the first frequency domain resource.

In addition, a bandwidth of the third frequency domain resource is less than or equal to the bandwidth of the first frequency domain resource.

In the foregoing descriptions, the data signal may alternatively be service data, communication data, or the like, for example, a data stream transmitted between the terminal device and the network device in a service communication process.

It should be noted that the third frequency domain resource may be configured by using second configuration information sent by the network device to the terminal device. The second configuration information may include a frequency domain location and a bandwidth of the third frequency domain resource. That is, optionally, the method 300 further includes S303: The network device sends the second configuration information to the terminal device, where the second configuration information indicates the third frequency domain resource.

The first time interval and the second time interval are described by using an example in which the first frequency domain resource, the second frequency domain resource, and the third frequency domain resource are BWPs, and the terminal device sends the first-type reference signal.

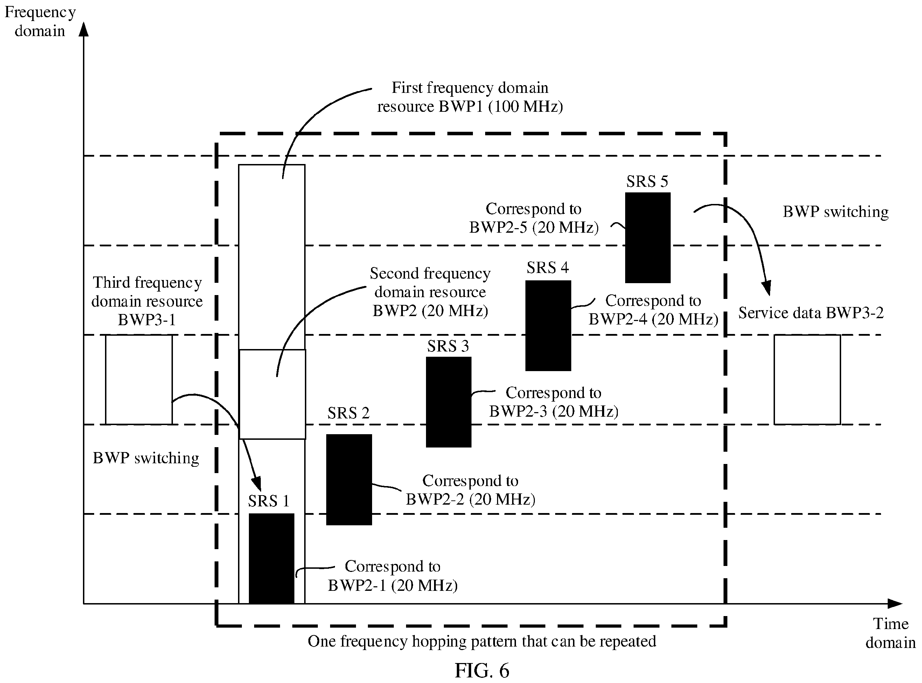

As shown in FIG. 6, the second frequency domain resource may be BWP2 that is in a frequency hopping pattern and that is used to send an SRS 1 to an SRS 5. When each second frequency domain resource is used to send one SRS, the second frequency domain resources may include BWP2-1 to BWP2-5, the third frequency domain resource is BWP3-1 or BWP3-2, and the first frequency domain resource may be a large-bandwidth BWP resource including a frequency domain in which BWP2-1 to BWP2-5 are located, namely, BWP1. It should be noted that BWP3-1 and BWP3-2 may be the same or different.

For example, the first time interval may be defined as a time interval for sending the SRS 1 and an SRS 2, or the first time interval may be defined as a time interval for sending the SRS 2 and an SRS 3.

The second time interval may be a sum of time for switching from BWP1 to BWP3-1 and time for switching from BWP3-1 to BWP1.

Alternatively, the second time interval may be a sum of radio frequency switching time for switching from BWP3-1 to BWP1 and radio frequency switching time for switching from BWP1 to BWP3-1.

Alternatively, the second time interval may be time for switching from BWP1 to BWP3-1.

Alternatively, the second time interval may be a sum of time for switching from BWP1 to BWP3-1 and the third time interval.

Alternatively, the second time interval may be a sum of the third time interval and time for switching from BWP3-1 to BWP1.

Alternatively, the second time interval may be a sum of time for switching from BWP1 to BWP3-1, time for switching from BWP3-1 to BWP1, and the third time interval.

Alternatively, the second time interval may be a sum of time for switching from BWP2-1 to BWP3-1 and time for switching from BWP3-1 to BWP2-2 (or any other second frequency domain resource).

Alternatively, the second time interval may be time for switching from BWP2-1 (or any other second frequency domain resource) to BWP3-1.

Alternatively, the second time interval may be a sum of time for switching from BWP2-1 (or any other second frequency domain resource) to BWP3-1 and the third time interval.

Alternatively, the second time interval may be a sum of the third time interval and time for switching from BWP3-1 to BWP2-2 (or any other second frequency domain resource).

Alternatively, the second time interval may be a sum of time for switching from BWP2-1 to BWP3-1, time for switching from BWP3-1 to BWP2-2, and the third time interval.

Alternatively, the second time interval may be time for switching from BWP2-1 to BWP2-2 (or any other second frequency domain resource).

It should be understood that the foregoing examples are merely example descriptions of the first time interval and the second time interval in FIG. 6, and are not completely enumerated, and another resource configuration that complies with definition of a time interval in this application shall fall within the protection scope of this application.

In a second possible implementation, to ensure continuity of transmitting the N signals by the terminal device or the network device, a first condition needs to be met when the terminal device sends or receives the N signals.

In an implementation, the first condition is that any two signals that are in the N signals and that are located in adjacent time units satisfy the following condition: The first time interval is less than or equal to the second time interval.

In another implementation, the first condition is that there are two signals in the N signals, located in adjacent time units that satisfy the following condition: The first time interval is less than or equal to the second time interval. For example, if a 1^{st} signal and a 2^{nd} signal (the 1^{st} signal and the 2^{nd} signal are located in adjacent time units) in the N signals sent or received by the terminal device satisfy the following condition: The first time interval is less than or equal to the second time interval, it may be considered that the terminal device meets the first condition. In other words, the terminal device needs to determine only once, to determine whether the first condition is met when the terminal device sends or receives the N signals.

It should be understood that, for the second time interval in the first condition, refer to related descriptions in the first implementation. Details are not described herein again.

It should be noted that, in this embodiment of this application, when the first condition is met, the terminal device sends or receives the N signals on the M second frequency domain resources. When the first condition is not met, the terminal device sends or receives at least one of the data signal, the control information, and the second-type reference signal on the third frequency domain resource.

In addition, the network device may configure the third frequency domain resource for the terminal device before or after configuring the first frequency domain resource, or may configure the third frequency domain resource and the first frequency domain resource at the same time. This is not limited in this application. When the first frequency domain resource and the second frequency domain resource are configured at the same time, the first configuration information and the second configuration information may be sent at the same time. In this case, the first configuration information and the second configuration information may be carried in a same message, or may be carried in different messages.

Based on the foregoing solution, in the communication method provided in this application, the terminal device may send or receive the N signals on the M second frequency domain resources in the first frequency domain resource configured by the network device, so that the network device does not need to configure configuration information of the M second frequency domain resources, thereby improving network efficiency and reducing complexity. In addition, based on criterion of the first condition, consecutive frequency hopping sending of the N signals is implemented, thereby reducing a latency.

In the first implementation, the communication method 300 provided in this application may further include another step:
S304: The terminal device determines that the first condition is met.

The first condition may be preset in the terminal device and the network device. If the terminal device determines that the first condition is met, the terminal device performs S302.

Specifically, the terminal device may determine that the first condition is met before S301, that is, after the terminal device determines that the first condition is met, the terminal device performs S301 to S303. Alternatively, the terminal device may determine that the first condition is met after S301, that is, after the terminal device receives the first configuration information and determines that the first condition is met, the terminal device performs S302.

It should be understood that "being preset" may include being predefined, for example, being defined in a protocol. "Predefinition" may be implemented by pre-storing corresponding code or a corresponding table in a device, or may be implemented in another manner of indicating related information. A specific implementation of the "predefinition" is not limited in this application.

Optionally, the method may further include S305 in which the terminal device sends first indication information to the network device, where the first indication information indicates that the first condition is met when the terminal device sends or receives the signals.

S306: The network device sends second indication information to the terminal device.

Specifically, the network device sends the second indication information to the terminal device, to indicate to switch from the second frequency domain resource to the third frequency domain resource.

It should be understood that, after the terminal device receives the second indication information, the terminal device switches from sending or receiving the N signals on the M second frequency domain resources to sending or receiving the N signals on the third frequency domain resource, or sending or receiving another signal on the third frequency domain resource.

For example, the network device sends the second indication information to the terminal device when one or more of the following conditions are met: for example, after the terminal device completes sending or receiving of the N signals, after the network device determines that the terminal device does not meet the first condition, or after a positioning procedure or a positioning service ends. The foregoing conditions may be understood as that a scenario in which the network device sends the second indication information to the terminal device is a scenario in which the terminal device no longer needs to transmit the N signals on the second frequency domain resource or does not meet a condition for transmitting the N signals.

It should be noted that S306 may be independently performed without depending on S305.

In another possible implementation, the method 300 includes the following steps:
S307: The network device sends first indication information to the terminal device.

Specifically, the network device may send the first indication information to the terminal device, to indicate the terminal device not to perform frequency domain resource switching when the terminal device sends or receives the N signals on the M second frequency domain resources. That is, the first indication information directly indicates that when the terminal device sends or receives the N first signals, there is no need to switch from the second frequency domain resource (or the first frequency domain resource) to the third frequency domain resource or another frequency domain resource.

S308: The network device sends second indication information to the terminal device.

Specifically, the network device sends the second indication information to the terminal device, to indicate to switch from the second frequency domain resource to the third frequency domain resource.

For example, the network device sends the second indication information to the terminal device when one or more of the following conditions are met: for example, after the terminal device completes sending or receiving of the N signals, after the network device determines that the terminal device does not meet the first condition, or after a positioning procedure or a positioning service ends. The foregoing conditions may be understood as that a scenario in which the network device sends the second indication information to the terminal device is a scenario in which the terminal device no longer needs to transmit the N signals on the second frequency domain resource or does not meet a condition for transmitting the N signals.

In addition, the communication method 300 provided in this application may further include S309 to S311.

S309: The terminal device sends request information to the network device, where the request information is used to request the first configuration information.

It should be understood that, in some scenarios, a frequency domain resource currently configured by a network cannot meet a requirement of the terminal device, for example, a positioning performance requirement. In this case, the terminal device requests the first configuration information from the network device, to meet a service requirement of the terminal. In addition, the network device sends the first configuration information to the terminal device only after receiving the request information of the terminal device. This can also improve reliability of network system communication, and avoid a waste of communication resources.

The request information may indicate the first configuration information recommended or expected by the terminal device, for example, frequency domain configuration information, time domain configuration information, or frequency hopping configuration information.

Optionally, the request information may indicate the first frequency domain resource recommended/expected by the terminal device or the M second frequency domain resources.

It should be noted that, in this embodiment of this application, after the network device receives the N first signals, for example, N SRSs, that are sent by the terminal device at N frequency hopping moments, optionally, the method 300 further includes:
S310: The network device estimates, based on a channel estimation result of an overlapping part in frequency domain, a phase difference between two frequency hopping signals in two adjacent time units, and then performs phase compensation.
S311: The network device superimposes, in time domain, SRS signals received at a plurality of frequency hopping moments, to restore a large-bandwidth signal for positioning.

It should be understood that the network device may perform at least one of S310 and S311 based on an application scenario.

In addition, in another implementation, the method 300 may further include step S312.

S312: The terminal device reports third indication information to the network device.

Specifically, the terminal device reports the third indication information to the network device, to indicate that the terminal device supports the first condition or a capability item.

The capability item indicates that if the first time interval is less than or equal to the second time interval, frequency domain resources are not switched. In this case, the terminal device completes sending or receiving of the N signals on the first frequency domain resource in an I^{th} time unit, and sends or receives the N signals on the first frequency domain resource in an (I+1)^{th} time unit. Alternatively, it may be understood as that the terminal device completes sending or receiving of the I^{th} signal on the L^{th} second frequency domain resource, and sends or receives the (I+1)^{th} signal on the (L+1)^{th} second frequency domain resource.

If the first time interval is greater than the second time interval, frequency domain resources are switched. This may also be understood as that the terminal device completes sending or receiving of the N signals on the first frequency domain resource in an I^{th} time unit, and sends or receives the N signals, or other signals, data, or control information on the third frequency domain resource in an (I+1)^{th} time unit.

Optionally, the capability item indicates:
if the first time interval is less than or equal to the second time interval, and no signal, data, or control information whose priority is higher than that of the N signals is scheduled on the third frequency domain resource in a time period of the first time interval, frequency domain resources are not switched. It may also be understood as that the terminal device completes sending or receiving of the N signals on the first frequency domain resource in the I^{th} time unit, and sends or receives the N signals on the first frequency domain resource in the (I+1)^{th} time unit. Alternatively, it may be understood as that the terminal device completes sending or receiving of the I^{th} signal on the L^{th} second frequency domain resource, and sends or receives the (I+1)^{th} signal on the (L+1)^{th} second frequency domain resource.

If the first time interval is greater than the second time interval, or a signal, data, or control information whose priority is higher than that of the N signals is scheduled on the third frequency domain resource (a network) in a time period of the first time interval, frequency domain resources are switched. This may also be understood as that the terminal device completes sending or receiving of the N signals on the first frequency domain resource in the I^{th} time unit, and sends or receives the N signals or other signals, data, or control information with a higher priority on the third frequency domain resource in the (I+1)^{th} time unit.

In an implementation, the third indication information may indicate, before step S301, that the terminal device supports the first condition when the terminal device sends or receives the N signals. Alternatively, the third indication information and the first indication information may be sent at the same time, for example, both are sent in S305, S312, or another step. This is not limited in this application.

For example, the third indication information may be included in capability information reported by the terminal device, to indicate that the terminal device supports the first condition or the capability item.

The network device can learn of the capability information of the terminal device in time based on the third indication information, and configure a corresponding resource for the terminal device based on the capability information, so that reliability of resource configuration by a network can be improved.

It should be noted that actions performed by the network device in the communication method 300 provided in this embodiment of this application may alternatively be performed by another terminal device, for example, in a scenario in which sidelink positioning is supported. In other words, the foregoing interaction procedures between the network device and the terminal device may be completed by exchanging information between two terminal devices.

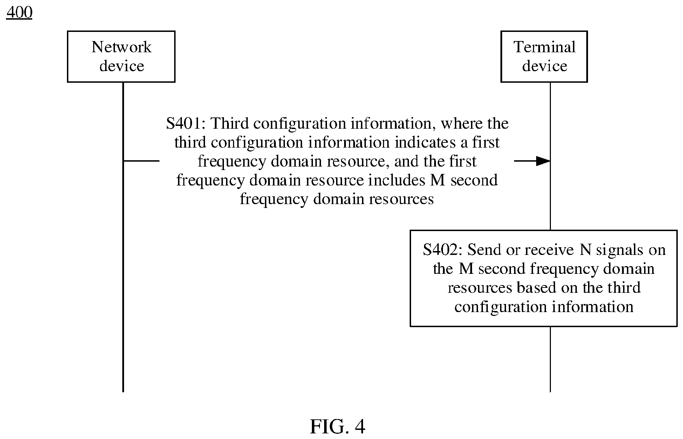

The following describes a method for configuring the N signals in detail. Specifically, FIG. 4 shows a schematic flowchart of a method 400 for configuring the N signals according to an embodiment of this application. Specifically, the method includes the following steps.

S401: A network device sends third configuration information to a terminal device.

Specifically, the third configuration information includes frequency domain configuration information and time domain configuration information of at least one of the N signals, and/or frequency hopping configuration information.

In an implementation, the third configuration information includes configuration information of the N signals and the frequency hopping configuration information. The configuration information of the N signals includes time domain configuration information of the N signals and/or frequency domain configuration information of the N signals. The frequency hopping configuration information includes one or more of information such as a frequency hopping periodicity, supporting intra-slot frequency hopping, a frequency domain start location of a frequency hop, frequency hopping duration, and a quantity of frequency hops. Optionally, when the third configuration information includes the configuration information of the N signals and the frequency hopping configuration information, the frequency hopping configuration information includes one or more of the frequency hopping periodicity, supporting intra-slot frequency hopping, the frequency domain start location of the frequency hop, the frequency hopping duration, the quantity of frequency hops, and the like.

In another implementation, the third configuration information may include configuration information of at least one signal and the frequency hopping configuration information. The at least one signal is less than N signals and greater than or equal to one signal. When there is one signal, the third configuration information includes configuration information of the single signal. When there is more than one signal, the third configuration information includes configuration information of the more than one signal. The configuration information of the at least one signal includes frequency domain configuration information of the at least one signal and/or time domain configuration information of the at least one signal. The frequency hopping configuration information includes a frequency hopping pattern, a frequency hopping periodicity, supporting intra-slot frequency hopping, a frequency domain start location of a frequency hop, frequency domain interval information of the frequency hop, time domain interval information of the frequency hop, and the like.

In another implementation, the third configuration information includes only configuration information of the N signals, and the configuration information of the N signals includes time domain configuration information of the N signals and/or frequency domain configuration information of the N signals. Optionally, the N signals are periodically sent or received.

In another implementation, the third configuration information includes only the frequency hopping configuration information. In this case, the terminal device may obtain the configuration information of the at least one of the N signals based on other configuration information or other information.

In addition, the third configuration information may further include other configuration information, for example, one or more of the following: scrambling code information, density information, reserved time information, retuning time information, and non-simultaneous sending information. The scrambling code information includes at least one of the following: scrambling code ranges of m signals and a scrambling code value set. The density information is a quantity of times of sending the m signals within a specific time range. The reserved time information is a time length that needs to be reserved before the m signals are sent, a time length that needs to be reserved after the m signals are sent, or a time length that needs to be reserved between two adjacent time units. The retuning time information is time occupied by frequency retuning (radio frequency retuning, RF retuning). The non-simultaneous sending information means that when sending the m signals, the terminal device does not support sending of information other than the m signals.

It should be noted that frequency domain configuration information and/or time domain configuration information correspond/corresponds to a signal. For example, the frequency domain configuration information of the N signals and the time domain configuration information of the N signals include N pieces of frequency domain configuration information and N pieces of time domain configuration information. In other words, each of the N pieces of frequency domain configuration information includes frequency domain information of a corresponding signal, for example, frequency domain location information, and each of the N pieces of time domain configuration information includes time domain information of a corresponding signal, for example, time domain location information. In addition, each of the N pieces of frequency domain configuration information and each of the N pieces of time domain configuration information may further include other information, and the information may be the same or different.

The frequency hopping configuration information includes at least one of the following: the frequency hopping periodicity, the frequency hopping pattern, supporting intra-slot frequency hopping, the frequency domain start location of the frequency hop, the time domain start location of the frequency hop, the frequency domain interval information of the frequency hop, the time domain interval information of the frequency hop, the quantity of periodic frequency hops, the frequency hopping duration, and the quantity of frequency hops.

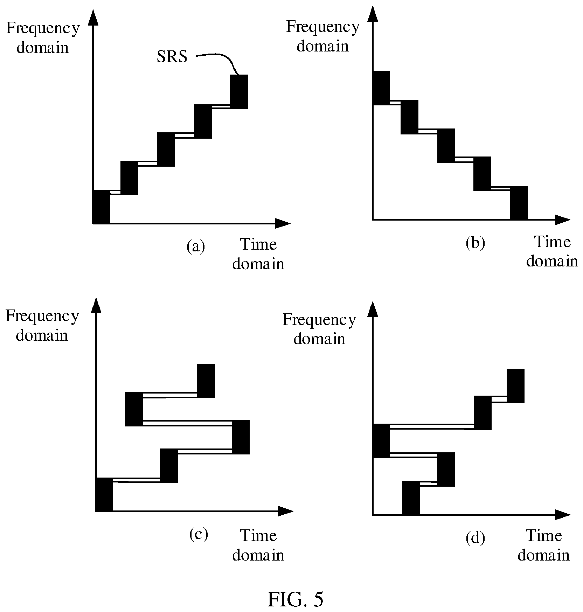

The frequency hopping periodicity is duration of a frequency hopping pattern (pattern). The frequency hopping pattern indicates a sequence and locations of receiving or sending signals in frequency domain and/or time domain in a single frequency hopping periodicity, as shown in FIG. 5. Optionally, the frequency hopping pattern may be periodically repeated. Supporting intra-slot frequency hopping indicates that frequency hopping is supported in a single slot. The frequency domain start location of the frequency hop indicates a frequency domain start location of a signal corresponding to the frequency hopping configuration information, that is, a start frequency of a bandwidth occupied by the signal corresponding to the frequency hopping configuration information. The time domain start location of the frequency hop indicates time information for starting frequency hopping sending of the signal corresponding to the frequency hopping configuration information. The frequency domain interval information of the frequency hop indicates an interval between two adjacent times of frequency hopping sending or receiving in frequency domain. The time domain interval information of the frequency hop indicates a time interval between the two adjacent times of frequency hopping sending or receiving. The quantity of periodic frequency hops indicates a quantity of frequency hops in one frequency hopping periodicity. The frequency hopping duration indicates duration of the frequency hop, for example, may be sending duration, receiving duration, or a quantity of frequency hopping periodicities. The quantity of frequency hops indicates a total quantity of frequency hops of the signal corresponding to the frequency hopping configuration information or a quantity of repetitions of the frequency hopping pattern. For example, when sending is performed in m periodicities, the quantity of frequency hops is equal to m*quantity of periodic frequency hops.

In some embodiments, the frequency hopping pattern indicates frequency domain information and/or time domain information in a single frequency hopping periodicity. The single frequency hopping periodicity may be one or more radio frames, one or more subframes, one or more slots, one or more symbols, or the like. **In** this embodiment of this application, an example in which a single frequency hopping periodicity is one slot is used for description.

First, frequency domain information in the single frequency hopping periodicity is described.

Specifically, the frequency domain configuration information in the single frequency hopping periodicity includes at least one of the following: a first frequency domain start location, bandwidth information or a quantity of resource blocks (RBs/PRBs) of the frequency hop, and first frequency domain interval information.

The first frequency domain start location is a frequency domain location of a first frequency hop in the single frequency hopping periodicity, or a location of a start RB/PRB of a frequency hop. The bandwidth information of the frequency hop is a total bandwidth occupied by the frequency hop in the single frequency hopping periodicity, or is a bandwidth occupied by a single frequency hop. The bandwidth may be in a unit of RB, PRB, RE, or MHz, or may be in another unit. In this embodiment of this application, RB/PRB is used as a unit for description. The first frequency domain interval information is frequency hopping bandwidth information of an interval between two adjacent frequency hops in the single frequency hopping periodicity, frequency hopping bandwidth information between a frequency domain location of an N^{th} frequency hop and a frequency domain start location, or frequency hopping bandwidth information between a frequency domain location of an N^{th} frequency hop and a frequency domain reference point.

Specifically, when the first frequency domain interval information is bandwidth information of an interval between two adjacent frequency hops in the single frequency hopping periodicity. For example, the first frequency domain interval information may be a quantity of RBs/PRBs between an end frequency domain location of an N^{th} frequency hop and a start frequency domain location of an (N+1)^{th} frequency hop. For another example, the first frequency domain interval information may be a quantity of RBs/PRBs between a start frequency domain location of an N^{th} frequency hop and a start frequency domain location of an (N+1)^{th} frequency hop. For another example, the first frequency domain interval information may be a quantity of RBs/PRBs between an end frequency domain location of an N^{th} frequency hop and an end frequency domain location of an (N+1)^{th} frequency hop. For another example, the first frequency domain interval information is a quantity of RBs/PRBs between a first RB/PRB of an (N+1)^{th} frequency hop and a last RB/PRB of an N^{th} frequency hop.

In some embodiments, the first frequency domain interval information may be M RBs/PRBs, where M may be a positive integer, 0, or a negative integer. For example, the positive integer may indicate that the (N+1)^{th} frequency hop and the N^{th} frequency hop are spaced or do not overlap in frequency domain, or indicate that a start frequency of the (N+1)^{th} frequency hop is higher than a start frequency of the N^{th} frequency hop; 0 may indicate that there is no interval between the (N+1)^{th} frequency hop and the N^{th} frequency hop in frequency domain, or the interval is 0 RBs/0 PRBs; and the negative integer indicates that the (N+1)^{th} frequency hop and the N^{th} frequency hop overlap in frequency domain, or indicates that the start frequency of the (N+1)^{th} frequency hop is lower than the start frequency of the N^{th} frequency hop. Optionally, M is an integer multiple of 4.

When the first frequency domain interval information indicates the frequency hopping bandwidth information between the frequency domain location of the N^{th} frequency hop and the frequency domain start location in the single frequency hopping periodicity, for example, the first frequency domain interval information is a quantity of RBs/PRBs between the start frequency domain location of the N^{th} frequency hop and the frequency domain start location, or the first frequency domain interval information is a quantity of RBs/PRBs between a first RB/PRB of the N^{th} frequency hop and a start RB/PRB of a frequency hop.

In some embodiments, the first frequency domain interval information may be M RBs/PRBs, where M may be a positive integer, 0, or a negative integer. For example, the positive integer may indicate that a frequency of the N^{th} frequency hop is higher than a frequency of the frequency domain start location; 0 indicates that the frequency of the N^{th} frequency hop is the frequency of the frequency domain start location, or an interval between the frequency of the N^{th} frequency hop and the frequency of the frequency domain start location is 0 RBs/PRBs; and the negative integer indicates that the frequency of the N^{th} frequency hop is lower than the frequency of the frequency domain start location. Optionally, M is an integer multiple of 4.

When the frequency hopping pattern indicates frequency domain information in the single frequency hopping periodicity, in some embodiments, the frequency domain information in the single frequency hopping periodicity includes a frequency domain start location, a quantity of RBs/PRBs occupied by a single frequency hop, and a quantity of RBs/PRBs of an interval between two adjacent frequency hops that are in the single frequency hopping periodicity. In some other embodiments, the frequency domain information in the single frequency hopping periodicity includes a frequency domain start location, a quantity of RBs/PRBs occupied by a frequency hop, and a quantity of RBs/PRBs of an interval between two adjacent frequency hops that are in the single frequency hopping periodicity. In still some other embodiments, the frequency domain information in the single frequency hopping periodicity includes a frequency domain start location, a quantity of RBs/PRBs occupied by a single frequency hop, and a quantity of RBs/PRBs between a frequency domain location of the N^{th} frequency hop and the frequency domain start location that are in the single frequency hopping periodicity. In some other embodiments, the frequency domain information in the single frequency hopping periodicity includes a frequency domain start location, a quantity of RBs/PRBs occupied by a frequency hop, and a quantity of RBs/PRBs between a frequency domain location of the N^{th} frequency hop and the frequency domain start location that are in the single frequency hopping periodicity.

It should be noted that the frequency domain start location in the single frequency hopping periodicity included in the frequency domain information in the single frequency hopping periodicity is optional. For example, when the frequency hopping configuration information already includes information about the frequency domain start location (a frequency domain location at which an initial frequency hop is enabled), the frequency domain information in the single frequency hopping periodicity may not include the frequency domain start location in the single frequency hopping periodicity.

In addition, it should be further noted that content included in the frequency domain information in the single frequency hopping periodicity in the foregoing embodiment is merely an example, and does not limit the protection scope of the solutions of this application. In other words, in the solutions of this application, the content included in the frequency domain information in the single frequency hopping periodicity may further include another combination that is not listed and that is of the first frequency domain start location, the bandwidth information or the quantity of resource blocks of the frequency hop, and the first frequency domain interval information.

Then, time domain information in the single frequency hopping periodicity is described.

Specifically, the frequency domain configuration information in the single frequency hopping periodicity includes at least one of the following: a first time domain start location, time domain information or a quantity of symbols of the frequency hop, a frequency hopping repetition factor (repetition factor), first time domain interval information, and information indicating that time domain discontinuous frequency hopping is supported.

The first time domain start location is a time domain location of a first frequency hop in the single frequency hopping periodicity, or is a start orthogonal frequency division multiplexing (orthogonal frequency division multiplexing, OFDM) symbol. The time domain information/quantity of symbols of the frequency hop is total duration occupied by the frequency hop in the single frequency hopping periodicity (for example, a total quantity of symbols occupied by the frequency hop in a single slot (excluding a symbol occupied by a frequency hopping interval), or a total quantity of symbols occupied by the frequency hop in a single slot (including a symbol occupied by a frequency hopping interval)) or duration or a quantity of symbols occupied by a single frequency hop (for example, the quantity of symbols occupied by the single frequency hop). The frequency hopping repetition factor is a quantity of frequency hops in the single frequency hopping periodicity. The first time domain interval information is duration or a quantity of symbols of an interval between two adjacent frequency hops in the single frequency hopping periodicity, or duration or a quantity of symbols between a time domain start location of an N^{th} frequency hop and a time domain start location. The information indicating that time domain discontinuous frequency hopping is supported means that there is an interval, in time domain, between at least two adjacent frequency hops in the single frequency hopping periodicity.

Specifically, when the time domain information of the frequency hop is duration or a quantity of symbols occupied by a single frequency hop (for example, K1 symbols), the frequency hopping repetition factor L may indicate that a total of L frequency hops occurs in the single frequency hopping periodicity, and each frequency hop occupies K1 symbols in time domain.

When the time domain information of the frequency hop is total duration or a total quantity of symbols occupied by the frequency hop in the single frequency hopping periodicity (for example, a total of K2 symbols excluding a quantity of symbols occupied by a frequency hopping interval), a ratio (K2/L) of the time domain information of the frequency hop to the frequency hopping repetition factor L may indicate that a total of L frequency hops occurs in the single frequency hopping periodicity, and each frequency hop occupies K2/L symbols in time domain.

When the frequency hopping pattern indicates the time domain information in the single frequency hopping periodicity, in some embodiments, the time domain information in the single frequency hopping periodicity includes a time domain start location, time domain information of the frequency hop (a total quantity of symbols occupied by the frequency hop in a single slot or a quantity of symbols occupied by a single frequency hop), a frequency hopping repetition factor, and time domain interval information of the frequency hop in the single frequency hopping periodicity. In some other embodiments, the time domain information in the single frequency hopping periodicity includes a time domain start location, time domain information of the frequency hop (a total quantity of symbols occupied by the frequency hop in a single slot), and a frequency hopping repetition factor in the single frequency hopping periodicity. In this case, if the time domain information of the frequency hop is the total quantity of symbols occupied by the frequency hop in the single slot, and equal-interval frequency hopping is performed, the terminal device may deduce a time domain pattern of the frequency hop. In some other embodiments, the time domain information in the single frequency hopping periodicity includes a time domain start location, time domain information of the frequency hop (a total quantity of symbols occupied by the frequency hop in a single slot), and time domain interval information of the frequency hop in the single frequency hopping periodicity.

It should be noted that the time domain start location in the single frequency hopping periodicity included in the time domain information in the single frequency hopping periodicity is optional. For example, when the frequency hopping configuration information already includes information about the time domain start location (a time domain location at which an initial frequency hop is enabled), the time domain information in the single frequency hopping periodicity may not include the time domain start location in the single frequency hopping periodicity.

In addition, content included in the time domain information in the single frequency hopping periodicity in the foregoing embodiment is merely an example, and does not limit the protection scope of the solutions of this application. In other words, in the solutions of this application, the content included in the time domain information in the single frequency hopping periodicity may further include another combination that is not listed and that is of the first time domain start location, the time domain information or the quantity of symbols of the frequency hop, the frequency hopping repetition factor, the first time domain interval information, and the information indicating that time domain discontinuous frequency hopping is supported.

It should be further noted that the foregoing embodiment only lists cases in which the frequency hopping pattern indicates the frequency domain information in the single frequency hopping periodicity, or the frequency hopping pattern indicates the frequency domain information in the single frequency hopping periodicity. It should be understood that, in the solutions of this application, the frequency hopping pattern may alternatively indicate both the frequency domain information in the single frequency hopping periodicity and the frequency domain information in the single frequency hopping periodicity. In this case, content included in the frequency domain information in the single frequency hopping periodicity and the time domain information in the single frequency hopping periodicity may be any information combination based on a use scenario. Details are not described herein again.

**In** an implementation, the frequency hopping configuration information may include a frequency hopping pattern (pattern) shown in FIG. 5. Specifically, a frequency domain location of a specific frequency hop in the frequency hopping pattern, for example, a frequency domain location of an initial frequency hop or an end of a frequency hop, may be indicated in the third configuration information, and then, for example, one of {0, 1, 2, 3, 4}, {4, 3, 2, 1, 0}, {0, 3, 1, 4, 2}, or {2, 0, 1, 3, 4} is indicated in a configuration of the frequency hopping pattern, where {0, 1, 2, 3, 4}, {4, 3, 2, 1, 0}, {0, 3, 1, 4, 2}, and {2, 0, 1, 3, 4} respectively correspond to (a) to (d) in FIG. 5.

For example, when the third configuration information indicates that a frequency domain location of a first signal in the N signals is 0, and indicates that the frequency hopping pattern is {0, 1, 2, 3, 4}, a frequency hopping configuration in one periodicity is shown in (a) in FIG. 5. In a frequency hopping process, the terminal device may periodically send or receive the N signals based on the frequency hopping pattern.

It should be understood that FIG. 5 shows only a frequency hopping pattern of one periodicity, and in the frequency hopping process, frequency hopping patterns of all periodicities are the same.

It should be noted that the third configuration information may be included in the first configuration information, or when the N signals are SRSs, the third configuration information may be carried in an RRC message, for example, IE SRS-Config in an information element (information element, IE), an LPP message, or another message.

In a specific implementation, the communication method 300 provided in this embodiment of this application is described in detail with reference to FIG. 6 by using an example in which the first frequency domain resource, the second frequency domain resource, and the third frequency domain resource in this embodiment of this application are BWPs, the terminal device is a RedCap terminal device, and the N signals are N signals sent by the terminal device to the network device.

A communication bandwidth of the RedCap terminal device is 20 MHz. To be specific, when the RedCap terminal device transmits the N signals with the network device, a maximum bandwidth is 20 MHz. In other words, for the RedCap terminal device, a bandwidth corresponding to the second frequency domain resource or the third frequency domain resource is 20 MHz.

Specifically, as shown in FIG. 6, the first frequency domain resource indicated by the first configuration information configured by the network device for the terminal device is 100 MHz BWP1, the first frequency domain resource may include five second frequency domain resources BWP2 (including BWP2-1 to BWP2-5), and the second frequency domain resource is 20 MHz. In addition, the third frequency domain resource BWP3 (for example, BWP3-1 or BWP3-2) is also 20 MHz. Optionally, the first frequency domain resource is dedicated to sending or receiving of a positioning reference signal. After the terminal device receives the first configuration information, the terminal device may determine information about five BWP2, for example, frequency domain start locations and frequency domain end locations, obtain resources of BWP2, and send N SRSs on five BWP2. In FIG. 6, one SRS is sent in one BWP2, and a quantity of periodic frequency hops is 5. Therefore, a total of five SRSs are sent in each periodicity. In an implementation, when the terminal device meets the first condition, the terminal device may report the first indication information to the network device, to indicate that the terminal device currently meets the first condition. Alternatively, the terminal device reports indication information to the network device, to indicate that the terminal device supports the first condition. Optionally, the terminal device may further send the request information to the network device to request the first configuration information. When the terminal device sends SRSs, if a currently operating BWP is BWP3-1, after the network device indicates to switch from current BWP3-1 to BWP1, the terminal device sends the five SRSs on five BWP2, and performs sending for one or more periodicities until the sending ends. After the sending ends, the network device may indicate, through the indication information, to switch from last BWP2 to BWP3-2.

It should be understood that the foregoing description is merely an example rather than a limitation. Specifically, there may further be another interaction or execution process between the network device and the terminal device. For example, the terminal device determines that the first condition is met. For details, refer to the related descriptions in FIG. 3. Examples are not described herein again.

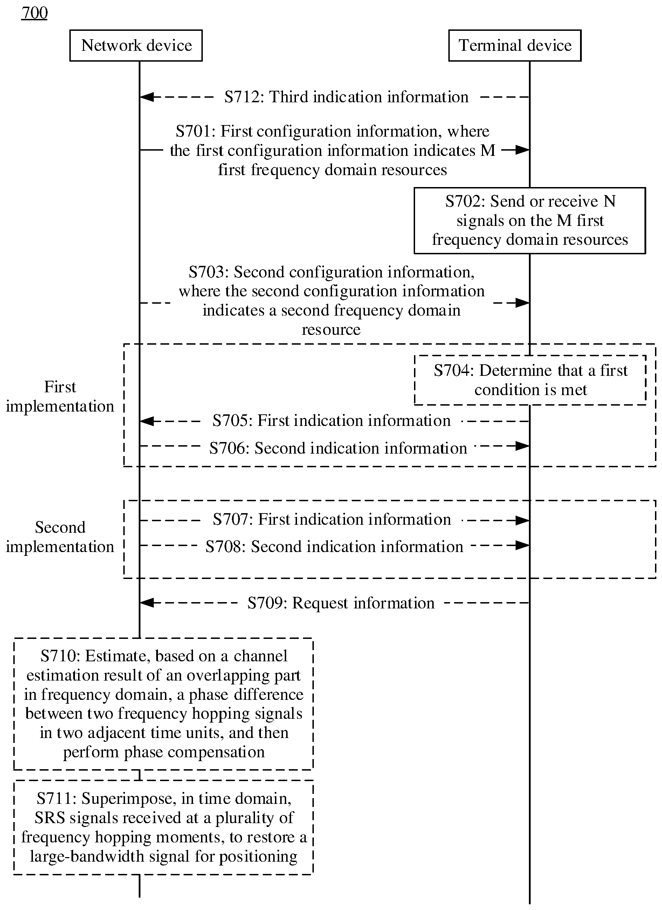

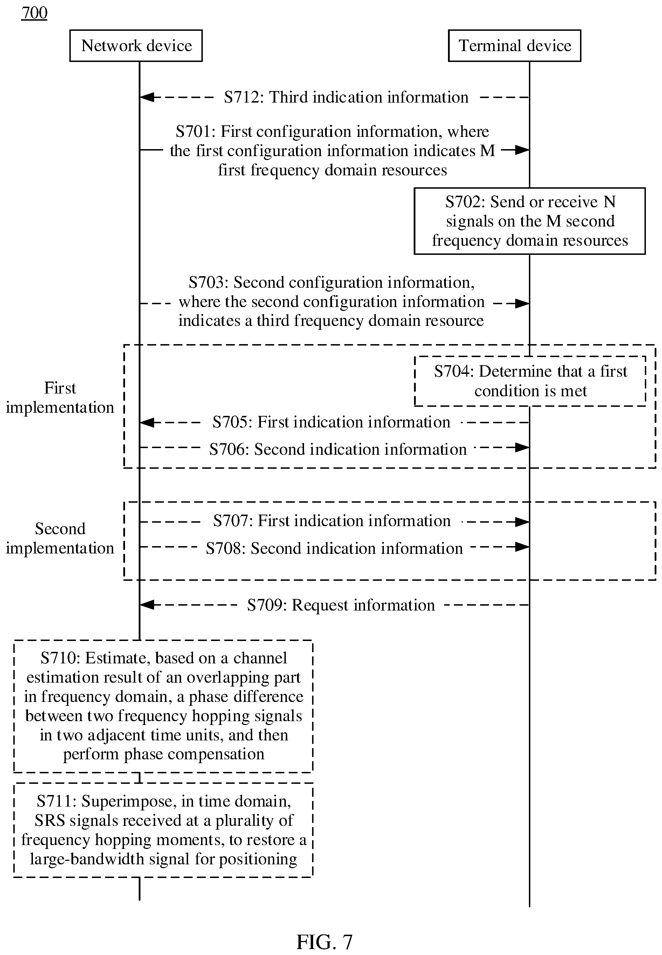

FIG. 7 shows a schematic flowchart of a communication method 700 according to an embodiment of this application. As shown in FIG. 7, a network device may be a base station, or may be a component (such as a chip or a chip system) in a network device. A terminal device may be UE, or may be a component (such as a chip or a chip system) in a terminal device. Specifically, the method includes the following steps:
S701: The network device sends first configuration information to the terminal device.

The first configuration information indicates M first frequency domain resources. A "frequency domain resource" is a segment of continuous frequency domain resources or a frequency point in frequency domain. There may be a plurality of resource granularities. For example, the frequency domain resource may be one of a subcarrier, an RB, a BWP, a CC, a band, a frequency band, a frequency layer, a frequency point, or a frequency range.

In an implementation, the first configuration information may include M first frequencies and bandwidths, and/or frequency shift information.

In another implementation, the first configuration information may include a first frequency and a bandwidth of at least one of the M first frequency domain resources, and/or frequency shift information.

The first frequency is a start frequency, a center frequency, or an end frequency of the first frequency resource.

It should be noted that the first frequency corresponds to a signal. For example, first frequencies of N signals include N first frequencies. In other words, each of the N first frequencies is a first frequency of a corresponding signal.

The frequency shift information includes at least one of the following: a periodicity of a frequency shift, a pattern of the frequency shift, supporting intra-slot frequency shift, a frequency domain start location of the frequency shift, a time domain start location of the frequency shift, frequency domain interval information of the frequency shift, time domain interval information of the frequency shift, a quantity of periodic frequency shifts, duration of the frequency shift, and a quantity of frequency shifts.

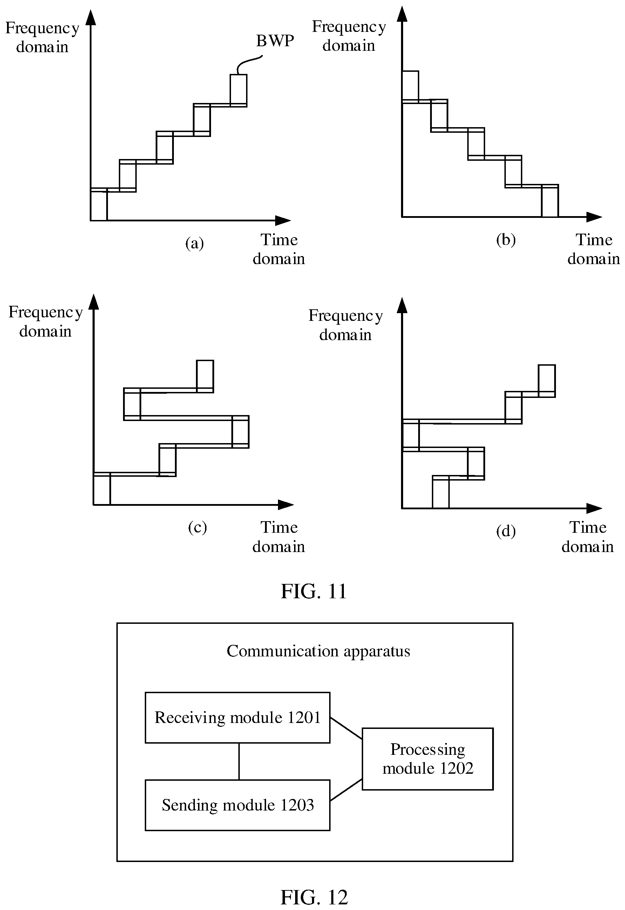

The periodicity of the frequency shift is duration of a frequency shift pattern (pattern) (which may also be referred to as a frequency shift pattern). The frequency shift pattern indicates a sequence and locations of receiving or sending signals in frequency domain and/or time domain in a single frequency shift periodicity. For the frequency shift pattern, refer to a frequency shift pattern shown in FIG. 11. Similarly, the frequency shift pattern may be periodically repeated. The pattern of the frequency shift supporting intra-slot frequency shift indicates that frequency shift is supported in a single slot. The frequency domain start location of the frequency shift indicates a frequency domain start location of a signal corresponding to the frequency shift information, that is, a start frequency of a bandwidth occupied by the signal corresponding to the frequency shift information. The time domain start location of the frequency shift indicates time information for starting frequency shift sending of the signal corresponding to the frequency shift information. The frequency domain interval information of the frequency shift indicates an interval between two adjacent times of frequency shift sending or receiving in frequency domain. The time domain interval information of the frequency shift indicates a time interval between the two adjacent times of frequency shift sending or receiving. The quantity of periodic frequency shifts indicates a quantity of frequency shifts in a frequency shift periodicity. The duration of the frequency shift indicates duration of the frequency shift, for example, may be sending duration, receiving duration, or a quantity of frequency shift periodicities. The quantity of frequency shifts indicates a total quantity of frequency shifts of the signal corresponding to the frequency shift information or a quantity of repetitions of a frequency shift pattern. When the duration of the frequency shift includes m periodicities, the quantity of frequency shifts is equal to m*quantity of periodic frequency shifts.

It should be noted that the frequency shift means that other configuration information of the first frequency domain resource does not change except a frequency domain location, and fast switching of frequency domain resources can be implemented. For example, when the first frequency domain resource is a BWP, the frequency shift may be BWP retuning or BWP switching.

In addition, the first configuration information may further include subcarrier spacings of the M first frequency domain resources and/or indication information indicating whether extended cyclic prefixes are used for the M first frequency domain resources.

In an implementation, the frequency shift information may be configured by using the frequency shift pattern (pattern) shown in FIG. 11. Specifically, a frequency domain location of a frequency shift in the frequency shift pattern, for example, a frequency domain location of an initial frequency shift or an end of a frequency shift, may be indicated in the first configuration information, and then, for example, one of {0, 1, 2, 3, 4}, {4, 3, 2, 1, 0}, {0, 3, 1, 4, 2}, or {2, 0, 1, 3, 4} is indicated in a configuration of the frequency shift pattern, where {0, 1, 2, 3, 4}, {4, 3, 2, 1, 0}, {0, 3, 1, 4, 2}, and {2, 0, 1, 3, 4} respectively correspond to (a) to (d) in FIG. 11.

For example, when a first frequency (for example, a start frequency) of a first frequency domain resource in the M first frequency domain resources in the first configuration information is 0, and the first configuration information indicates that the frequency shift pattern is {0, 1, 2, 3, 4}, a frequency shift configuration in one periodicity is shown in (a) in FIG. 5.

It should be understood that FIG. 11 shows only a frequency shift pattern of one periodicity, and in frequency shift duration, frequency shift patterns of all periodicities are the same.

It should be noted that when the N signals are SRSs, the first configuration information is carried in IE SRS-Config.

S702: The terminal device sends or receives the N signals on the M first frequency domain resources, where the N signals are located in N time units, M is an integer greater than or equal to 2, and N is a positive integer.

It should be understood that N and M may be the same or different. When N is equal to M, the M first frequency domain resources are used to send M signals, and the M signals may one-to-one correspond to the M first frequency domain resources. In other words, each of the M first frequency domain resources is used to send one signal. When N is not equal to M, no signal may be sent on some of the M first frequency domain resources, or a plurality of signals may be sent on some of the M first frequency domain resources.

In a possible implementation, when the terminal device completes sending or receiving of N first-type reference signals in N consecutive time units, a first time interval is less than or equal to a second time interval.

The following describes the first time interval and the second time interval in detail.

In a possible implementation, the first time interval is defined as a time interval between an I^{th} signal and an (I+1)^{th} signal. The I^{th} signal and the (I+1)^{th} signal belong to the N signals, and the I^{th} signal and the (I+1)^{th} signal are located in adjacent time units. In other words, the I^{th} signal and the (I+1)^{th} signal are two consecutively sent or received signals in the N signals.

Optionally, the terminal device sends or receives the I^{th} signal on an L^{th} first frequency domain resource, and sends or receives the (I+1)^{th} signal on an (L+1)^{th} first frequency domain resource. It should be understood that the L^{th} first frequency domain resource and the (L+1)^{th} first frequency domain resource belong to the M first frequency domain resources. The L^{th} first frequency domain resource and the (L+1)^{th} first frequency domain resource may be adjacent or not adjacent in frequency domain, may completely overlap in frequency domain, or may partially overlap in frequency domain. This is not limited in this application.

In a possible implementation, the second time interval is a preset or predefined time interval. The preset or predefined time interval may be preset by the network device, or may be agreed on by the terminal device and a network. This is not limited in this application.

Optionally, the second time interval is time for switching from the L^{th} first frequency domain resource to the (L+1)^{th} first frequency domain resource.

Alternatively, the second time interval is a sum of time for switching from the L^{th} first frequency domain resource to a second frequency domain resource and time for switching from the second frequency domain resource to the (L+1)^{th} first frequency domain resource.

Alternatively, the second time interval is a sum of radio frequency switching time required for switching from the L^{th} first frequency domain resource to a second frequency domain resource and radio frequency switching time required for switching from the second frequency domain resource back to the (L+1)^{th} first frequency domain resource.

Alternatively, the second time interval is a sum of time for switching from the L^{th} first frequency domain resource to a second frequency domain resource and a third time interval.

Alternatively, the second time interval is a sum of a third time interval and time for switching from a second frequency domain resource to the (L+1)^{th} first frequency domain resource.

Alternatively, the second time interval is a sum of time for switching from the L^{th} first frequency domain resource to a second frequency domain resource, time for switching from the second frequency domain resource to the (L+1)^{th} first frequency domain resource, and a third time interval.

It should be noted that the third time interval is a preset or predefined time interval.

In addition, a priority of sending or receiving the N signals, or other signals, data, or control information on the second frequency domain resource is not higher than a priority of sending or receiving the N signals on the first frequency domain resource.

It should be understood that the L^{th} first frequency domain resource and the (L+1)^{th} first frequency domain resource belong to the M first frequency domain resources. The L^{th} first frequency domain resource and the (L+1)^{th} first frequency domain resource may be adjacent or not adjacent in frequency domain, may completely overlap in frequency domain, or may partially overlap in frequency domain. This is not limited in this application.

The first time interval and the second time interval are described by using an example in which the first frequency domain resource and the second frequency domain resource are BWPs, and the terminal device sends the first-type reference signal.

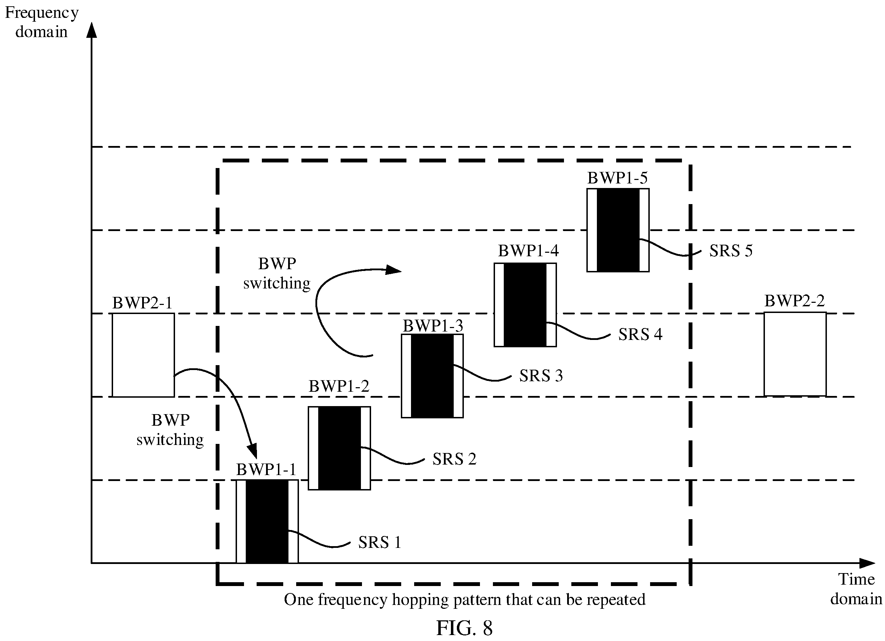

As shown in FIG. 8, the first frequency domain resource may be BWP1 (for example, any one of BWP1-1 to BWP1-5) that is in a frequency shift pattern and that is used to send an SRS 1 to an SRS 5, each first frequency domain resource is used to send one SRS, and the second frequency domain resource is BWP2-1 or BWP2-2.

For example, the first time interval may be defined as a time interval for sending the SRS 1 and an SRS 2, or the first time interval may be defined as a time interval for sending the SRS 2 and an SRS 3.

The second time interval may be time for switching from BWP1-1 to BWP1-2.

Alternatively, the second time interval may be a sum of time for switching from BWP1-1 (or another first frequency domain resource) to BWP2-1 and time for switching from BWP2-1 to BWP1-2.

Alternatively, the second time interval may be a sum of radio frequency switching time for switching from BWP1-1 to BWP2-1 and radio frequency switching time for switching from BWP2-1 to BWP1-2.

Alternatively, the second time interval may be a sum of time for switching from BWP1-1 to BWP2-1 and the third time interval.

Alternatively, the second time interval may be a sum of the third time interval and time for switching from BWP2-1 to BWP1-2.

Alternatively, the second time interval may be a sum of time for switching from BWP1-1 to BWP2-1, time for switching from BWP2-1 to BWP1-2, and the third time interval.

Alternatively, the second time interval may be a sum of time for switching from BWP1-1 to BWP2-1 and time for switching from BWP2-1 to BWP1-1.

It should be understood that the foregoing examples are merely example descriptions of the first time interval and the second time interval in FIG. 8, and are not completely enumerated, and another resource configuration that complies with definition of a time interval in this application shall fall within the protection scope of this application.

In the second possible implementation, when the terminal device completes sending or receiving of the N first-type reference signals in N consecutive time units, the terminal device meets a first condition.

In an implementation, the first condition is that any two signals that are in the N signals and that are located in adjacent time units satisfy the following condition: The first time interval is less than or equal to the second time interval.

In another implementation, the first condition is that there are two signals in the N signals, located in adjacent time units that satisfy the following condition: The first time interval is less than or equal to the second time interval. For example, if a 1^{st} signal and a 2^{nd} signal (the 1^{st} signal and the 2^{nd} signal are located in adjacent time units) in the N signals sent or received by the terminal device satisfy the following condition: The first time interval is less than or equal to the second time interval, it may be considered that the terminal device meets the first condition. In other words, the terminal device needs to determine only once, to determine whether the first condition is met when the terminal device sends or receives the N signals.

It should be understood that, for the second time interval in the first condition, refer to related descriptions in the first implementation in S702. Details are not described herein again.

It should be noted that, in this embodiment of this application, when the first condition is met, the terminal device sends or receives the N signals on the M first frequency domain resources. When the first condition is not met, the terminal device sends or receives at least one of a data signal, control information, and a second-type reference signal on the second frequency domain resource.

Based on the foregoing solution, in the communication method provided in this application, the terminal device may send or receive the N signals on the M first frequency domain resources configured by the network device, so that the network device does not need to configure configuration information of the M first frequency domain resources, thereby improving network efficiency and reducing complexity. In addition, based on criterion of the first condition, consecutive frequency hopping sending of the N signals is implemented, thereby reducing a latency.

In addition, the method 700 may further include S703 to S706.

S703: The network device sends second configuration information to the terminal device, where the second configuration information indicates the second frequency domain resource.

Similarly, in a possible implementation, the M first frequency domain resources are used to transmit the N signals, and the N signals may be first-type reference signals. The second frequency domain resource is used to transmit at least one of the data signal, the control information, and the second-type reference signal.

In another possible implementation, the M first frequency domain resources are used to transmit the N signals, and the N signals may be first-type reference signals. The second frequency domain resource is used to transmit at least one of the data signal, the control information, the first-type reference signal, and the second-type reference signal.

For the first-type reference signal and the second-type reference signal, refer to the foregoing related descriptions. Details are not described herein again.

It should be noted that the first configuration information and the second configuration information may be independent of each other. That is, in a possible implementation, the first frequency domain resource and the second frequency domain resource may be independently configured, to improve flexibility of network resource configuration.

In other words, the network device may configure the second frequency domain resource for the terminal device before or after configuring the first frequency domain resource, or may configure the second frequency domain resource and the first frequency domain resource at the same time. This is not limited in this application. When the first frequency domain resource and the second frequency domain resource are configured at the same time, the first configuration information and the second configuration information may be sent at the same time. In this case, the first configuration information and the second configuration information may be carried in a same message, or may be carried in different messages.

It should be noted that the terminal device may receive the first configuration information and/or the second configuration information from the network device, or may receive the first configuration information and/or the second configuration information from a network unit. The network device may be a base station, a TRP, or the like. The network unit may be a core network device such as an LMF.

S704: The terminal device determines that the first condition is met.

The first condition may be preset in the terminal device and the network device. If the terminal device determines that the first condition is met, the terminal device performs S302.

Specifically, the terminal device may determine that the first condition is met before S701, that is, after the terminal device determines that the first condition is met, the terminal device performs S701 to S703. Alternatively, the terminal device may determine that the first condition is met after S701, that is, after the terminal device receives the first configuration information and determines that the first condition is met, the terminal device performs S702.

It should be understood that "being preset" may include being predefined, for example, being defined in a protocol. "Predefinition" may be implemented by pre-storing corresponding code or a corresponding table in a device, or may be implemented in another manner of indicating related information. A specific implementation of the "predefinition" is not limited in this application.

Optionally, the method may further include S705 in which the terminal device sends first indication information to the network device, where the first indication information indicates that the terminal device supports the first condition when the terminal device sends or receives the signals.

S706: The network device sends second indication information to the terminal device.

Specifically, the network device sends the second indication information to the terminal device, to indicate to switch from the first frequency domain resource to the second frequency domain resource.

It should be understood that, after the terminal device receives the second indication information, the terminal device switches from sending or receiving the N signals on the M first frequency domain resources to sending or receiving the N signals on the second frequency domain resource, or sending or receiving another signal on the third frequency domain resource.

For example, the network device sends the second indication information to the terminal device when one or more of the following conditions are met: for example, after the terminal device completes sending or receiving of the N signals, after the network device determines that the terminal device does not meet the first condition, or after a positioning procedure or a positioning service ends. The foregoing conditions may be understood as that a scenario in which the network device sends the second indication information to the terminal device is a scenario in which the terminal device no longer needs to transmit the N signals on the first frequency domain resource or does not meet a condition for transmitting the N signals.

In another possible implementation, the method 700 includes the following steps:
S707: The network device sends first indication information to the terminal device.

Specifically, the network device may send the first indication information to the terminal device, to indicate the terminal device not to perform frequency domain resource switching when the terminal device sends or receives the N signals on the M first frequency domain resources. That is, the first indication information directly indicates that when the terminal device sends or receives the N first signals, there is no need to switch from the first frequency domain resource to the second frequency domain resource or another frequency domain resource.

S708: The network device sends second indication information to the terminal device.

Specifically, the network device sends the second indication information to the terminal device, to indicate to switch from the first frequency domain resource to the second frequency domain resource.

For example, the network device sends the second indication information to the terminal device when one or more of the following conditions are met: for example, after the terminal device completes sending or receiving of the N signals, after the network device determines that the terminal device does not meet the first condition, or after a positioning procedure or a positioning service ends. The foregoing conditions may be understood as that a scenario in which the network device sends the second indication information to the terminal device is a scenario in which the terminal device no longer needs to transmit the N signals on the first frequency domain resource or does not meet a condition for transmitting the N signals.

In addition, the communication method 700 provided in this application may further include S709 to S711.

S709: The terminal device sends request information to the network device, where the request information is used to request the first configuration information.

It should be understood that, in some scenarios, a frequency domain resource currently configured by a network cannot meet a requirement of the terminal device, for example, a positioning performance requirement. In this case, the terminal device requests the first configuration information from the network device, to meet a service requirement of the terminal. In addition, the network device sends the first configuration information to the terminal device only after receiving the request information of the terminal device. This can also improve reliability of network system communication, and avoid a waste of communication resources.

The request information may indicate the first configuration information recommended or expected by the terminal device, for example, frequency domain configuration information, time domain configuration information, and frequency hopping configuration information. For the frequency hopping configuration information, refer to the related descriptions in FIG. 4. Details are not described herein again.

In a possible implementation, S709 may be performed before S701.

It should be noted that, in this embodiment of this application, after the network device receives the N first signals, for example, N SRSs, that are sent by the terminal device at N frequency hopping moments, optionally, the method 700 further includes:
S710: The network device estimates, based on a channel estimation result of an overlapping part in frequency domain, a phase difference between two frequency hopping signals in two adjacent time units, and then performs phase compensation.
S711: The network device superimposes, in time domain, SRS signals received at a plurality of frequency hopping moments, to restore a large-bandwidth signal for positioning.

It should be understood that the network device may perform at least one of S710 and S711 based on an application scenario.

In addition, in another implementation, the method 700 may further include step S712.

S712: The terminal device reports third indication information to the network device.

Specifically, the terminal device reports the third indication information to the network device, to indicate that the terminal device supports the first condition.

In an implementation, the third indication information may indicate, before step S701, that the terminal device supports the first condition when the terminal device sends or receives the N signals.

For example, the third indication information may be included in capability information reported by the terminal device, to indicate that the terminal device supports the first condition.

The network device can learn of the capability information of the terminal device in time based on the third indication information, and configure a corresponding resource for the terminal device based on the capability information, so that reliability of resource configuration by a network can be improved.

It should be noted that actions performed by the network device in the communication method 700 provided in this embodiment of this application may alternatively be performed by another terminal device, for example, in a sidelink positioning scenario. In other words, the foregoing interaction procedures between the network device and the terminal device may be completed by exchanging information between two terminal devices.

In a specific implementation, the communication method 700 provided in this embodiment of this application is described in detail with reference to FIG. 8 by using an example in which the first frequency domain resource and the second frequency domain resource in this embodiment of this application are BWPs, the terminal device is a RedCap terminal device, and the N signals are N signals sent by the terminal device to the network device.

Specifically, as shown in FIG. 8, when a second manner of configuring the M first frequency domain resources is used, one first frequency domain resource configured by the network device for the terminal device is 20 MHz BWP1-1, and a second frequency domain resource BWP2 (for example, BWP2-1 or BWP2-2) is also 20 MHz. It should be noted that BWP2-1 and BWP2-2 may be a same frequency domain resource or different frequency domain resources. Optionally, the first frequency domain resource may be a frequency domain resource dedicated to receiving or sending a positioning reference signal. In this implementation, the network device may configure only one first frequency domain resource (for example, BWP1-1) for the terminal device. The terminal device may determine information about several other frequency domain resources (including BWP1-2 to BWP1-5) based on information in the first configuration information, obtain a resource of BWP1, and send N SRSs on the five frequency domain resources. In FIG. 8, one SRS is sent in one BWP1, and a quantity of periodic frequency hops is 5. Therefore, a total of five SRSs are sent in each periodicity. In an implementation, when the terminal device meets the first condition, the terminal device may report the first indication information to the network device, to indicate that the terminal device currently meets the first condition. Alternatively, the terminal device reports indication information to the network device, to indicate that the terminal device supports the first condition. When the terminal device sends SRSs to the network device, if a currently operating BWP is BWP2-1, the network device indicates to switch the currently operating BWP resource BWP2-1 to BWP1-1, and the terminal device sends the five SRSs on five BWP1, and performs sending for one or more periodicities until the sending ends. After the sending ends, the network device may indicate, through the indication information, to switch from last BWP1-5 to BWP2-1 or BWP2-2. Optionally, before receiving the first configuration information, the terminal device may further send the request information to the network device to request the first configuration information.

It should be understood that the foregoing description is merely an example rather than a limitation. Specifically, there may further be another interaction or execution process between the network device and the terminal device. For example, the terminal device determines that the first condition is met. For details, refer to the related descriptions in FIG. 3. Examples are not described herein again.

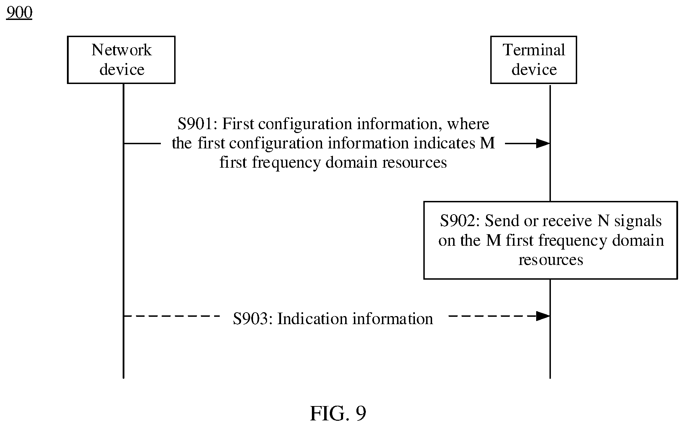

FIG. 9 shows a schematic flowchart of a communication method 900 according to an embodiment of this application. As shown in FIG. 9, a network device may be a base station, or may be a component (such as a chip or a chip system) in a network device. A terminal device may be UE, or may be a component (such as a chip or a chip system) in a terminal device. Specifically, the method includes the following steps:
S901: The network device sends first configuration information to the terminal device, where the first configuration information indicates M first frequency domain resources.

The first configuration information includes association information. The association information indicates that a K^{th} first frequency domain resource is associated with P first frequency domain resources. The P first frequency domain resources are P of the M first frequency domain resources, and the K^{th} first frequency domain resource is one of the M first frequency domain resources.

Optionally, the association information may further indicate an association relationship between at least one first frequency resource and other first frequency domain resources. For example, the association information may indicate an association relationship between each of K first frequency domain resources and a plurality of other first frequency domain resources, where K={n1, n2, ..., nk}. For example, the association information may indicate that an n1^{th} first frequency domain resource is associated with P1 first frequency domain resources, an n2^{th} first frequency domain resource is associated with P2 first frequency domain resources, ..., and an nk^{th} first frequency domain resource is associated with Pk first frequency domain resources, where the P1, P2, ..., and Pk first frequency domain resources are P1, P2, ..., and Pk of the M first frequency domain resources.

In addition, in an implementation, the first configuration information may include M first frequencies and bandwidths, and/or frequency shift information. Alternatively, the first configuration information may include a first frequency and a bandwidth of at least one of the M first frequency domain resources, and/or frequency shift information. The first frequency is a start frequency, a center frequency, or an end frequency of the first frequency resource. For the first frequency, the frequency shift information, and the like, refer to the related descriptions in S701 in FIG. 7. Details are not described herein again.

S902: The terminal device sends or receives N signals on the M second frequency domain resources, where the N signals are located in N time units, M is an integer greater than or equal to 2, and N is a positive integer.

For this step, refer to the related descriptions of S702 in FIG. 7. Details are not described herein again.

Optionally, the method 900 further includes the following step:
S903: The network device sends indication information to the terminal device, where the indication information indicates one or more of the following:
activation of the K^{th} first frequency domain resource;
activation of some or all of the M first frequency domain resources; and
an activation sequence of the some or all of the M first frequency domain resources.

Optionally, when the indication information indicates to activate the K^{th} first frequency domain resource, the indication information includes an identifier of the K^{th} first frequency domain resource.

Optionally, when the indication information indicates to activate the some or all of the M first frequency domain resources, the indication information includes identifiers of the some or all of the M first frequency domain resources.

In an implementation, when the indication information includes the identifiers of the some or all of the M first frequency domain resources, the terminal device may determine the activation sequence of the some or all of the M first frequency domain resources based on a sequence of the identifiers.

In an implementation, the indication information may be carried in DCI, a MAC CE (Medium Access Control Control Element, medium access control element), an RRC message, or another message. This is not limited in this embodiment of this application. The indication information may be delivered in one message/information, or delivered in several messages/information.

It should be noted that the communication method 900 further includes a process of configuring the N signals. For the process, refer to the method 400 in FIG. 4. Details are not described herein again.

Alternatively, the communication method 900 may further include: The terminal device sends request information to the network device, where the request information is used to request the first configuration information.

It should be understood that, in some scenarios, a frequency domain resource currently configured by a network cannot meet a requirement of the terminal device, for example, a positioning performance requirement. In this case, the terminal device requests the first configuration information from the network device, to meet a service requirement of the terminal. In addition, the network device sends the first configuration information to the terminal device only after receiving the request information of the terminal device. This can also improve reliability of network system communication, and avoid a waste of communication resources.

The request information may indicate the first configuration information recommended or expected by the terminal device, for example, frequency domain configuration information, time domain configuration information, and frequency hopping configuration information. For the frequency hopping configuration information, refer to the related descriptions in FIG. 4. Details are not described herein again.

In addition, the request information may further indicate the first configuration information recommended or expected by the terminal device, for example, the first frequency, the bandwidth, and the frequency shift information.

Optionally, the request information may indicate one or more first frequency domain resources recommended/expected to be activated by the terminal device and/or an activation sequence of a plurality of first frequency domain resources.

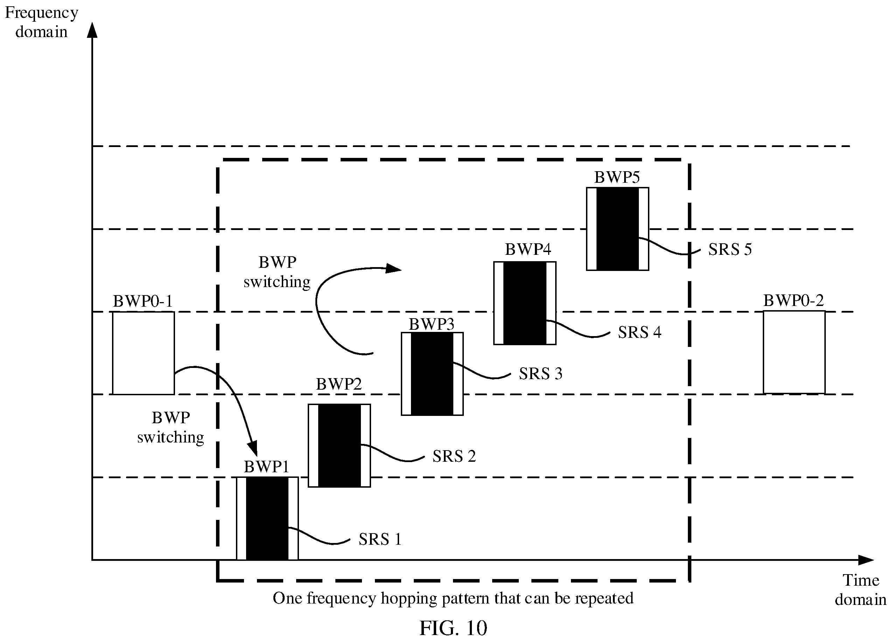

In a specific implementation, the communication method 900 provided in this embodiment of this application is described in detail with reference to FIG. 10 by using an example in which the first frequency domain resource and the second frequency domain resource in this embodiment of this application are BWPs, the terminal device is a RedCap terminal device, and the N signals are N signals sent by the terminal device to the network device.

Specifically, as shown in FIG. 10, the network device configures five first frequency domain resources for the terminal device: BWP1 to BWP5. For example, bandwidths of BWP1 to BWP5 are all 20 MHz. After the terminal device receives the first configuration information, the terminal device obtains configuration information of BWP1 to BWP5, and sends N SRSs on five BWP. In FIG. 10, for example, one SRS is sent in each BWP1, and a quantity of periodic frequency hops is 5. Therefore, a total of five SRSs are sent in each periodicity. Optionally, the network device may carry association information in one or more pieces of first configuration information of BWP1 to BWP5. For example, association information between BWP1 and BWP2 (for example, an identifier ID of BWP2 is carried) is indicated in configuration information of BWP1, or association information between BWP2 and BWP3 (for example, an identifier ID of BWP3 is carried) is indicated in configuration information of BWP2. Alternatively, the network device may indicate, in one or more pieces of first configuration information of BWP1 to BWP5, association information between BWP1 to BWP5 and a plurality of other BWPs. For example, identifiers of BWP2 to BWP5 are carried in configuration information of BWP1, or identifiers of BWP1, BWP3, and BWP5 are carried in configuration information of BWP2. When the terminal device sends SRSs, if a currently operating BWP is BWP1, after the network device indicates to switch from current BWP0-1 to BWP1, the terminal device sends the five SRSs on five BWP1, and performs sending for one or more periodicities until the sending ends. After the sending ends, the network device may indicate, through the indication information, to switch from last BWP5 to BWP0-2. BWP0-1 and BWP0-2 are BWPs that are configured by the network device for the terminal device and that are used to transmit communication data. Optionally, BWP0-1 and BWP0-2 may be a same frequency domain resource or different frequency domain resources.

According to the communication method provided in this embodiment of this application, the network device may indicate a group of first frequency domain resources to the terminal device, so that the terminal device can implement fast resource switching of the terminal device, thereby effectively reducing a latency.

It should be noted that, in the foregoing embodiments of this application, the terminal device may send information to an access network device through radio resource control (radio resource control, RRC) signaling. Alternatively, the terminal device may send to-be-sent information to an LMF (for example, the terminal device sends the information to the LMF through an LTE positioning protocol (LTE positioning protocol, LPP) message), and then, the LMF sends a part or all of content of the information to the access network device (for example, the LMF sends the information to the access network device through an NR positioning protocol annex (NR positioning protocol annex, NRPPa) message). The access network device may send information to the terminal device through a broadcast message or a unicast message. The broadcast message is, for example, a system information block (system information block, SIB) or a positioning system information block (positioning system information block, posSIB), and the unicast message is, for example, RRC signaling. Alternatively, the access network device may send a part or all of the content of the to-be-sent information to the LMF (for example, the access network device sends the information to the LMF through an NRPPa message), and then the LMF sends the information to the terminal device (for example, the LMF sends the information to the terminal device through an LPP message). It should be understood that, for an information sending process in the foregoing embodiments, refer to descriptions in this paragraph.

If the technical solutions in embodiments of this application are applied to a positioning scenario, a positioning process provided in embodiments of this application may be an uplink positioning process, a downlink positioning process, a joint uplink and downlink positioning process, or a ranging/angle measurement/phase measurement (uplink and downlink are not distinguished) process. The following uses an uplink positioning process as an example for description. For example, a second device is a terminal device, and a first device is an access network device. Alternatively, the positioning process provided in embodiments of this application may be a downlink positioning process. For example, a second device is an access network device, and a first device is a terminal device. Alternatively, the positioning process provided in embodiments of this application may be an uplink and downlink positioning process. For example, in the uplink and downlink positioning process, methods in embodiments of this application may be performed twice. In one of the execution processes, a second device is a terminal device, and a first device is an access network device; and in the other execution process, a second device is an access network device, and a first device is a terminal device. In addition, a plurality of access network devices may participate in positioning. In embodiments of this application, behavior of one of the access network devices is described. Optionally, the access network device is, for example, a serving access network device of the terminal device.

It should be understood that embodiments in FIG. 3, FIG. 7, and FIG. 9 in embodiments of this application are merely examples for description, and the examples in the figures do not limit execution sequences. A person skilled in the art may flexibly adjust a sequence of steps based on the examples in the figures. In addition, the sequence numbers of the foregoing processes do not mean an execution sequence, and the execution sequence of the processes should be determined based on functions and internal logic of the processes. In addition, the foregoing steps are not mandatory steps. When one or more of the steps are missing, the problem to be resolved in this application can also be resolved, and the technical solutions corresponding to the steps also fall within the scope disclosed in this application. Various numerical numbers or sequence numbers in the foregoing processes are merely distinguished for ease of description, and should not constitute any limitation on the implementation processes of embodiments of this application.

It may be understood that, in some scenarios, some optional features in embodiments of this application may be independently implemented without depending on another feature, for example, a solution on which the optional features are currently based, to resolve a corresponding technical problem and achieve corresponding effect. Alternatively, in some scenarios, the optional features are combined with other features based on requirements. Correspondingly, the apparatuses provided in embodiments of this application may also correspondingly implement these features or functions. Details are not described herein.

In addition, the solutions in embodiments of this application may be properly combined for use, and explanations or descriptions of terms in embodiments may be cross-referenced or explained in embodiments. This is not limited.

In the foregoing embodiments provided in this application, various solutions of the communication methods provided in embodiments of this application are separately described from perspectives of devices/network elements and interaction between the devices/network elements. It may be understood that, to implement the foregoing functions, the network elements and devices include corresponding hardware structures and/or corresponding software modules for performing the functions. A person skilled in the art should easily be aware that, in combination with units and algorithm steps of examples described in embodiments disclosed in this specification, this application may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

FIG. 12 is a schematic block diagram of a communication apparatus 1200 according to an embodiment of this application. The apparatus 1200 includes a receiving module 1201, and the receiving module 1201 may be configured to implement a corresponding receiving function. The receiving module 1201 may also be referred to as a receiving unit.

The apparatus 1200 further includes a processing module 1202, and the processing module 1202 may be configured to implement a corresponding processing function.

The apparatus 1200 further includes a sending module 1203, the sending module 1203 may be configured to implement a corresponding sending function, and the sending module 1203 may also be referred to as a sending unit.

Optionally, the apparatus 1200 further includes a storage unit, the storage unit may be configured to store instructions and/or data, and the processing unit 1202 may read the instructions and/or the data in the storage unit, to enable the apparatus to implement actions of related apparatuses in the foregoing method embodiments.

The apparatus 1200 may be configured to perform actions performed by the terminal device or the network device in the foregoing method embodiments. In this case, the apparatus 1200 may be a component of the terminal device or the network device, the receiving module 1201 is configured to perform a receiving-related operation of the terminal device or the network device in the foregoing method embodiments, the processing module 1202 is configured to perform a processing-related operation of the terminal device or the network device in the foregoing method embodiments, and the sending module 1203 is configured to perform a sending-related operation of the terminal device or the network device in the foregoing method embodiments.

In a design, the apparatus 1200 is configured to perform actions performed by any network element or any device in the foregoing method embodiments. In an embodiment, the communication apparatus may be configured to perform operations of the terminal device in FIG. 3, FIG. 7, and FIG. 9. For example,
the receiving module 1201 is configured to: receive first configuration information, where the first configuration information indicates a first frequency domain resource, and the first frequency domain resource includes M second frequency domain resources; and receive N signals on the M second frequency domain resources, where the N signals are located in N time units, M is an integer greater than or equal to 2, and N is a positive integer.

The N signals are N first-type reference signals, and the first-type reference signal includes a positioning reference signal.

When a terminal device sends or receives one first-type reference signal on each frequency resource, M is equal to N; or when a terminal device sends or receives two or more first signals on at least one frequency resource, M is greater than N.

The processing module 1202 is configured to determine the M second frequency domain resources based on the first configuration information.

The sending module 1203 is configured to send N signals on the M second frequency domain resources, where the N signals are located in N time units, M is an integer greater than or equal to 2, and N is a positive integer.

It should be understood that specific processes in which the modules perform the foregoing corresponding steps are described in detail in the foregoing method embodiments. For brevity, details are not described herein again.

In addition, the receiving module 1201, the processing module 1202, and the sending module 1203 in the communication apparatus may further implement other operations or functions of the terminal device in the foregoing methods. Details are not described herein again.

In another embodiment, the communication apparatus may be configured to perform operations of the network device in FIG. 3, FIG. 7, and FIG. 9. For example,
the receiving module 1201 is configured to receive N signals on M second frequency domain resources, where the N signals are located in N time units, M is an integer greater than or equal to 2, and N is a positive integer.

The sending module 1203 is configured to: send first configuration information, where the first configuration information indicates a first frequency domain resource, and the first frequency domain resource includes the M second frequency domain resources; and send N signals on the M second frequency domain resources, where the N signals are located in N time units, M is an integer greater than or equal to 2, and N is a positive integer.

In addition, the receiving module 1201, the processing module 1202, and the sending module 1203 in the communication apparatus may further implement other operations or functions of the network device in the foregoing methods. Details are not described herein again.

It should be understood that specific processes in which the modules perform the foregoing corresponding steps are described in detail in the foregoing method embodiments. For brevity, details are not described herein again.

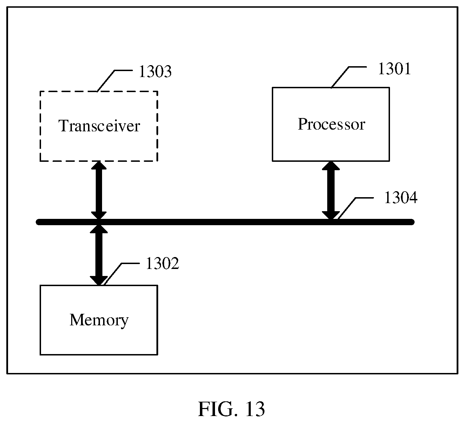

FIG. 13 shows a diagram of another possible structure of the communication apparatus in the foregoing embodiment. The communication apparatus includes a processor 1301. As shown in FIG. 13, the communication apparatus may further include at least one memory 1302, configured to store program instructions and/or data. The memory 1302 is coupled to the processor 1301. Coupling in this embodiment of this application may be indirect coupling or a communication connection between apparatuses, units, or modules, may be in an electrical form, a mechanical form, or another form, and is used for information exchange between the apparatuses, the units, or the modules. The processor 1301 may cooperate with the memory 1302. The processor 1301 may execute the program instructions stored in the memory 1302. At least one of the at least one memory may be included in the processor.

The communication apparatus may further include a transceiver 1303, configured to communicate with another device through a transmission medium, so that the apparatus can communicate with the another device. Optionally, the transceiver 1303 may be an interface, a bus, a circuit, or an apparatus that can implement receiving and sending functions. Optionally, the transceiver 1303 may include a receiver and a transmitter.

A specific connection medium between the processor 1301, the memory 1302, and the transceiver 1303 is not limited in this embodiment of this application. In this embodiment of this application, the processor 1301, the memory 1302, and the transceiver 1303 are connected through a bus 1304 in FIG. 13. The bus is represented by using a bold line in FIG. 13. A connection manner between other components is merely an example for description, and is not limited thereto. The bus may be classified into an address bus, a data bus, a control bus, and the like. For ease of representation, only one bold line represents the bus in FIG. 13, but this does not mean that there is only one bus or only one type of bus.

For example, in an embodiment, the processor 1301 is configured to perform other operations or functions of a terminal device. The transceiver 1303 is configured to implement communication between the communication apparatus and another network element/device (for example, a gNB/LMF).

In another embodiment, the processor 1301 is configured to perform other operations or functions of a network device. The transceiver 1303 is configured to implement communication between the communication apparatus and another network element/device (for example, UE/gNB).

One or more of the foregoing modules or units may be implemented by using software, hardware, or a combination thereof. When any one of the foregoing modules or units is implemented by using software, the software exists in a form of computer program instructions and is stored in the memory, and the processor may be configured to execute the program instructions to implement the foregoing method procedures. The processor may include but is not limited to at least one of the following computing devices that run various types of software: a central processing unit (central processing unit, CPU), a microprocessor, a digital signal processor (digital signal processing, DSP), a microcontroller unit (microcontroller unit, MCU), an artificial intelligence processor, and the like. Each computing device may include one or more cores configured to execute software instructions to perform an operation or processing. The processor may be built in a system on chip (system-on-a-chip, SoC) or an application-specific integrated circuit (application specific integrated circuit, ASIC), or may be an independent semiconductor chip. In addition to a core configured to execute the software instructions to perform an operation or processing, the processor may further include a necessary hardware accelerator, such as a field programmable gate array (field programmable gate array, FPGA), a programmable logic device (programmable logic device, PLD), or a logic circuit that implements a special logic operation.

When the foregoing modules or units are implemented by hardware, the hardware may be any one or any combination of a CPU, a microprocessor, a DSP, an MCU, an artificial intelligence processor, an ASIC, a SoC, an FPGA, a PLD, a dedicated digital circuit, a hardware accelerator, or a non-integrated discrete device. The hardware may run necessary software to execute the foregoing method procedures or execute the foregoing method procedures without software.

When the foregoing modules or units are implemented by software, all or some of the foregoing modules or units may be implemented in a form of a computer program product. The computer program product includes one or more computer instructions. When the computer program instructions are loaded and executed on a computer, procedures or functions according to embodiments of this application are all or partially generated. The computer may be a general-purpose computer, a dedicated computer, a computer network, or another programmable apparatus. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a digital video disc (digital video disc, DVD)), a semiconductor medium (for example, a solid state disk (solid state disk, SSD)), or the like.

In the foregoing specific implementations, the objectives, technical solutions, and beneficial effects of this application are further described in detail. It should be understood that the foregoing descriptions are merely specific implementations of this application, but are not intended to limit the protection scope of this application. Any modification, equivalent replacement, improvement, or the like made based on the technical solutions of this application shall fall within the protection scope of this application.

According to the methods provided in embodiments of this application, this application further provides a computer program product. The computer program product includes computer program code, and when the computer program code is run on a computer, the computer is enabled to perform the methods on a terminal device side in the foregoing method embodiments.

According to the methods provided in embodiments of this application, this application further provides a computer program product. The computer program product includes computer program code, and when the computer program code is run on a computer, the computer is enabled to perform the methods on a network device side in the foregoing method embodiments.

According to the methods provided in embodiments of this application, this application further provides a computer-readable medium. The computer-readable medium stores program code, and when the program code is run on a computer, the computer is enabled to perform the methods on a terminal device side in the foregoing method embodiments.

According to the methods provided in embodiments of this application, this application further provides a computer-readable medium. The computer-readable medium stores program code, and when the program code is run on a computer, the computer is enabled to perform the methods on a network device side in the foregoing method embodiments.

Embodiments of this application further provide a processing apparatus, including a processor and an interface. The processor is configured to perform the communication method in any one of the foregoing method embodiments.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces, and the indirect couplings or communication connections between the apparatuses or units may be implemented in electronic, mechanical, or other forms.

The units described as separate parts may or may not be physically separate, and parts displayed as units may or may not be physical units, may be located in one location, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
receiving, by a terminal device, first configuration information, wherein the first configuration information indicates a first frequency domain resource, and the first frequency domain resource comprises M second frequency domain resources; and
sending or receiving, by the terminal device, N signals on the M second frequency domain resources, wherein the N signals are located in N time units, M is an integer greater than or equal to 2, and N is a positive integer.

2. The method according to claim 1, wherein the N signals are N first-type reference signals, and the method further comprises:
receiving, by the terminal device, second configuration information, wherein the second configuration information indicates a third frequency domain resource, and the third frequency domain resource is used to send or receive at least one of a data signal, control information, and a second-type reference signal; and
a bandwidth of the third frequency domain resource is less than or equal to a bandwidth of the first frequency domain resource.

3. The method according to claim 2, wherein
the N signals comprise an I^{th} signal and an (I+1)^{th} signal, and the I^{th} signal and the (I+1)^{th} signal are located in adjacent time units;
a first time interval is a time interval between the I^{th} signal and the (I+1)^{th} signal;
a second time interval is a sum of time for switching from the first frequency domain resource to the third frequency domain resource and time for switching from the third frequency domain resource to the first frequency domain resource; and
the first time interval is less than or equal to the second time interval.

4. The method according to claim 2, wherein the sending or receiving, by the terminal device, N signals on the M second frequency domain resources comprises:
when a first condition is met, sending or receiving, by the terminal device, the N signals on the M second frequency domain resources, wherein the first condition is that a first time interval is less than or equal to a second time interval;
a time interval between the I^{th} signal and the (I+1)^{th} signal is the first time interval, the I^{th} signal and the (I+1)^{th} signal belong to the N signals, and the I^{th} signal and the (I+1)^{th} signal are located in adjacent time units; and
a sum of time for switching from the first frequency domain resource to the third frequency domain resource and time for switching from the third frequency domain resource to the first frequency domain resource is the second time interval.

5. The method according to any one of claims 1 to 4, wherein the method further comprises:
receiving, by the terminal device, third configuration information, wherein
the third configuration information comprises:
frequency domain configuration information and time domain configuration information of at least one of the N signals,
and/or
frequency hopping configuration information.

6. The method according to claim 5, wherein
the frequency hopping configuration information comprises at least one of the following: a frequency hopping periodicity, a frequency hopping pattern, supporting intra-slot frequency hopping, a frequency domain start location of a frequency hop, a time domain start location of the frequency hop, frequency domain interval information of the frequency hop, time domain interval information of the frequency hop, a quantity of periodic frequency hops, frequency hopping duration, and a quantity of frequency hops.

7. The method according to claim 6, wherein the frequency hopping pattern indicates frequency domain information and/or time domain information in a single frequency hopping periodicity;
the frequency domain information comprises at least one of the following: a first frequency domain start location, bandwidth information or a quantity of resource blocks of the frequency hop, and first frequency domain interval information; and
the time domain information comprises at least one of the following: a first time domain start location, time domain information or a quantity of symbols of the frequency hop, a frequency hopping repetition factor, first time domain interval information, and information indicating that time domain discontinuous frequency hopping is supported.

8. The method according to any one of claims 1 to 7, wherein the first-type reference signal is a positioning reference signal.

9. A communication method, comprising:
receiving, by a terminal device, first configuration information, wherein the first configuration information indicates M first frequency domain resources; and
sending or receiving, by the terminal device, N signals on the M first frequency domain resources, wherein the N signals are located in N time units, M is an integer greater than or equal to 2, and N is a positive integer.

10. The method according to claim 9, wherein
the N signals comprise an I^{th} signal and an (I+1)^{th} signal, and the I^{th} signal and the (I+1)^{th} signal are located in adjacent time units;
a first time interval is a time interval between the I^{th} signal and the (I+1)^{th} signal;
a second time interval is a sum of time for switching from an L^{th} first frequency domain resource to a second frequency domain resource and time for switching from the second frequency domain resource to an (L+1)^{th} first frequency domain resource, wherein the L^{th} first frequency domain resource is used to send or receive the I^{th} signal, the (L+1)^{th} first frequency domain resource is used to send or receive the (I+1)^{th} signal, and the second frequency domain resource is used to send or receive at least one of a data signal, control information, and a second-type reference signal; and
the first time interval is less than or equal to the second time interval.

11. The method according to claim 9 or 10, wherein the first configuration information comprises:
a first frequency and a bandwidth of at least one of the M first frequency domain resources;
and/or
frequency shift information, wherein
the first frequency is a start frequency, a center frequency, or an end frequency of the first frequency resource.

12. The method according to claim 11, wherein
the frequency shift information comprises at least one of the following: a periodicity of a frequency shift, a pattern of the frequency shift, supporting intra-slot frequency shift, a frequency domain start location of the frequency shift, a time domain start location of the frequency shift, frequency domain interval information of the frequency shift, time domain interval information of the frequency shift, a quantity of periodic frequency shifts, duration of the frequency shift, and a quantity of frequency shifts.

13. The method according to claim 12, wherein the pattern of the frequency shift indicates frequency domain information and/or time domain information in a single frequency shift periodicity;
the frequency domain information comprises at least one of the following: a first frequency domain start location, bandwidth information or a quantity of resource blocks of the frequency shift, and first frequency domain interval information; and
the time domain information comprises at least one of the following: a first time domain start location, time domain information or a quantity of symbols of the frequency shift, a frequency shift repetition factor, and first time domain interval information.

14. The method according to any one of claims 9 to 13, wherein the first configuration information further comprises association information; and
the association information indicates that a K^{th} first frequency domain resource is associated with P first frequency domain resources, wherein the P first frequency domain resources are P of the M first frequency domain resources, and the K^{th} first frequency domain resource is one of the M first frequency domain resources.

15. The method according to any one of claims 9 to 14, wherein the method further comprises:
receiving, by the terminal device, indication information, wherein the indication information indicates one or more of the following:
activation of the K^{th} first frequency domain resource;
activation of some or all of the M first frequency domain resources; and
an activation sequence of the some or all of the M first frequency domain resources.

16. The method according to any one of claims 9 to 15, wherein the first-type reference signal is a positioning reference signal.

17. A communication method, comprising:
sending, by a network device, first configuration information, wherein the first configuration information indicates a first frequency domain resource, and the first frequency domain resource comprises M second frequency domain resources; and
sending or receiving, by the network device, N signals on the M second frequency domain resources, wherein the N signals are located in N time units, M is an integer greater than or equal to 2, and N is a positive integer.

18. The method according to claim 17, wherein the N signals are N first-type reference signals, and the method further comprises:
sending, by the network device, second configuration information, wherein the second configuration information indicates a third frequency domain resource, and the third frequency domain resource is used to send or receive at least one of a data signal, control information, and a second-type reference signal; and
a bandwidth of the third frequency domain resource is less than or equal to a bandwidth of the first frequency domain resource.

19. The method according to claim 18, wherein
the N signals comprise an I^{th} signal and an (I+1)^{th} signal, and the I^{th} signal and the (I+1)^{th} signal are located in adjacent time units;
a first time interval is a time interval between the I^{th} signal and the (I+1)^{th} signal;
a second time interval is a sum of time for switching from the first frequency domain resource to the third frequency domain resource and time for switching from the third frequency domain resource to the first frequency domain resource; and
the first time interval is less than or equal to the second time interval.

20. The method according to claim 18, wherein the sending or receiving, by the network device, N signals on the M second frequency domain resources comprises:
when a first condition is met, sending or receiving, by the network device, the N signals on the M second frequency domain resources, wherein the first condition is that a first time interval is less than or equal to a second time interval;
a time interval between the I^{th} signal and the (I+1)^{th} signal is the first time interval, the I^{th} signal and the (I+1)^{th} signal belong to the N signals, and the I^{th} signal and the (I+1)^{th} signal are located in adjacent time units; and
a sum of time for switching from the first frequency domain resource to the third frequency domain resource and time for switching from the third frequency domain resource to the first frequency domain resource is the second time interval.

21. The method according to any one of claims 17 to 20, wherein the method further comprises:
sending, by the network device, third configuration information, wherein
the third configuration information comprises:
frequency domain configuration information and time domain configuration information of at least one of the N signals,
and/or
frequency hopping configuration information.

22. The method according to claim 21, wherein
the frequency hopping configuration information comprises at least one of the following: a frequency hopping periodicity, a frequency hopping pattern, supporting intra-slot frequency hopping, a frequency domain start location of a frequency hop, a time domain start location of the frequency hop, frequency domain interval information of the frequency hop, time domain interval information of the frequency hop, a quantity of periodic frequency hops, frequency hopping duration, and a quantity of frequency hops.

23. The method according to claim 22, wherein the frequency hopping pattern indicates frequency domain information and/or time domain information in a single frequency hopping periodicity;
the frequency domain information comprises at least one of the following: a first frequency domain start location, bandwidth information or a quantity of resource blocks of the frequency hop, and first frequency domain interval information; and
the time domain information comprises at least one of the following: a first time domain start location, time domain information or a quantity of symbols of the frequency hop, a frequency hopping repetition factor, first time domain interval information, and information indicating that time domain discontinuous frequency hopping is supported.

24. The method according to any one of claims 17 to 23, wherein the first-type reference signal is a positioning reference signal.

25. A communication method, comprising:
receiving, by a network device, first configuration information, wherein the first configuration information indicates M first frequency domain resources; and
sending or receiving, by the network device, N signals on the M first frequency domain resources, wherein the N signals are located in N time units, M is an integer greater than or equal to 2, and N is a positive integer.

26. The method according to claim 25, wherein
the N signals comprise an I^{th} signal and an (I+1)^{th} signal, and the I^{th} signal and the (I+1)^{th} signal are located in adjacent time units;
a first time interval is a time interval between the I^{th} signal and the (I+1)^{th} signal;
a second time interval is a sum of time for switching from an L^{th} first frequency domain resource to a second frequency domain resource and time for switching from the second frequency domain resource to an (L+1)^{th} first frequency domain resource, wherein the L^{th} first frequency domain resource is used to send or receive the I^{th} signal, the (L+1)^{th} first frequency domain resource is used to send or receive the (I+1)^{th} signal, and the second frequency domain resource is used to send or receive at least one of a data signal, control information, and a second-type reference signal; and
the first time interval is less than or equal to the second time interval.

27. The method according to claim 25 or 26, wherein the first configuration information comprises:
a first frequency and a bandwidth of at least one of the M first frequency domain resources;
and/or
frequency shift information, wherein
the first frequency is a start frequency, a center frequency, or an end frequency of the first frequency resource.

28. The method according to claim 27, wherein
the frequency shift information comprises at least one of the following: a periodicity of a frequency shift, a pattern of the frequency shift, supporting intra-slot frequency shift, a frequency domain start location of the frequency shift, a time domain start location of the frequency shift, frequency domain interval information of the frequency shift, time domain interval information of the frequency shift, a quantity of periodic frequency shifts, duration of the frequency shift, and a quantity of frequency shifts.

29. The method according to claim 28, wherein the pattern of the frequency shift indicates frequency domain information and/or time domain information in a single frequency shift periodicity;
the frequency domain information comprises at least one of the following: a first frequency domain start location, bandwidth information or a quantity of resource blocks of the frequency shift, and first frequency domain interval information; and
the time domain information comprises at least one of the following: a first time domain start location, time domain information or a quantity of symbols of the frequency shift, a frequency shift repetition factor, and first time domain interval information.

30. The method according to any one of claims 25 to 29, wherein the first configuration information further comprises association information; and
the association information indicates that a K^{th} first frequency domain resource is associated with P first frequency domain resources, wherein the P first frequency domain resources are P of the M first frequency domain resources, and the K^{th} first frequency domain resource is one of the M first frequency domain resources.

31. The method according to any one of claims 25 to 30, wherein the method further comprises:
sending, by the network device, indication information, wherein the indication information indicates one or more of the following:
activation of the K^{th} first frequency domain resource;
activation of some or all of the M first frequency domain resources; and
an activation sequence of the some or all of the M first frequency domain resources.

32. The method according to any one of claims 25 to 31, wherein the first-type reference signal is a positioning reference signal.

33. A communication apparatus, comprising at least one processor, wherein the at least one processor is coupled to at least one memory, and the at least one processor is configured to execute a computer program or instructions stored in the at least one memory, to enable the communication apparatus to perform the method according to any one of claims 1 to 8, the method according to any one of claims 9 to 16, the method according to any one of claims 17 to 24, or the method according to any one of claims 25 to 32.

34. A computer program product, wherein the computer program product comprises computer program code, and when the computer program code is run on a computer, the method according to any one of claims 1 to 8, the method according to any one of claims 9 to 16, the method according to any one of claims 17 to 24, or the method according to any one of claims 25 to 32 is implemented.
